(19)

**Europäisches Patentamt**
**European Patent Office**
**Office européen des brevets**

(11) **EP 3 611 815 A1**

(12) **EUROPEAN PATENT APPLICATION**

(43) Date of publication:
**19.02.2020  Bulletin 2020/08**

(51) Int Cl.:
*H02J 1/00* (2006.01)       *H01L 27/142* (2014.01)
*H02H 7/20* (2006.01)       *H02J 3/38* (2006.01)
*H02S 40/34* (2014.01)      *H02J 7/00* (2006.01)

(21) Application number: **18189734.9**

(22) Date of filing: **20.08.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.08.2018  US 201815998858**

(71) Applicant: **Solaredge Technologies Ltd.**
**Herzeliya 4673335 (IL)**

(72) Inventors:
• **Braginsky, David**
  **4673335 Herzeliya (IL)**
• **Yoscovich, Ilan**
  **4673335 Herzeliya (IL)**
• **Glovinsky, Tzachi**
  **Herzeliya 4673335 (IL)**

(74) Representative: **V.O.**
**P.O. Box 87930**
**Carnegieplein 5**
**2508 DH Den Haag (NL)**

(54) **BYPASS CIRCUIT AND METHOD TO BYPASS POWER MODULES IN POWER SYSTEM**

(57)    A method for a power system having a string of a plurality of power sources connected across a power device includes connecting a plurality of safe voltage units having safety switches connected respectively across each of the power sources. The method includes sensing a plurality of parameters of the power sources, and monitoring for a signal transmitted from the power device. Each of the safety switches is activated to be OFF responsive to detecting the signal within a predetermined time period. Upon not detecting the signal from the power device within the predetermined time period, a safe mode of operation of the power system is entered in which the voltages of each of the power sources is reduced to a voltage level less than a predetermined voltage level by turning the safety switches ON.

Fig. 7A

## Description

## RELATED APPLICATIONS

This application is related to European patent application serial number 18164697.7, filed March 28, 2018 and entitled "Bypass Circuit and Method to Bypass Power Modules in Power System".

## BACKGROUND

Power systems may have multiple power generators coupled to power devices. Power systems may be configured to control the power harvesting and extracting from the power generators, and in some embodiments, bypass one or more power generators and/or power devices. In some scenarios, the power system may operate more efficiently by bypassing one or more power devices. In some scenarios, one or more power devices may experience potentially unsafe conditions, such as over-heating or over-voltage. Safety regulations may require to disconnect, or bypass unsafe parts of the system. Safety regulations may require to lowering the voltage or heat of a power system or power device or to distance and/or electrically separate a high voltage point from a system power device. One way to lower the voltage or to distance and/or separate the high voltage point from the system power device may be to bypass a power device.

Also, bypass circuits, such as bypass diodes or free-wheeling diodes, may be wired in parallel across the outputs of intercoupled power sources such as photovoltaic (PV) panels, batteries or generators, to provide a current path around them in the event that a power source becomes faulty by failing to provide power on its output. For example, the use of bypass circuits with regard to intercoupled PV panels, may allow a series string of coupled PV cells, PV panels and/or a series string of serially connected power devices outputs to continue supplying power to a load at a reduced voltage rather than no power at all, since the use of bypass circuits may allow continued current draw around the output of a faulty PV panel output and/or power device. Certain bypass circuits may incur significant losses (e.g., due to a substantial voltage drop across a conducting bypass circuit). There is a need for efficient bypass circuits that may allow bypassing power sources and/or other circuit elements without incurring significant losses.

## SUMMARY

The following summary is a short summary of some of the inventive concepts for illustrative purposes only, and is not intended to limit or constrain the inventions and examples in the detailed description. One skilled in the art will recognize other novel combinations and features from the detailed description.

Illustrative embodiments disclosed herein may be with respect to power sources in a power system and may consider the interconnection of various groups of power sources. Each group of power sources may contain different types of power derived from both renewable energy sources such as provided from sunlight, wind or wave power, and non-renewable energy sources such as fuel used to drive turbines or generators, for example. Some illustrative embodiments may consider the connection of DC sources to a load via multiple power modules.

Illustrative embodiments disclosed herein may include a power system utilized to supply power to a load and/or a storage device. The power system may include various inter connections of groups of direct current (DC) power sources that also may be connected in various series, parallel, series parallel and parallel series combinations, for example.

More specifically, illustrative embodiments disclosed herein include a power system that comprises a plurality of power sources connected in a series string, wherein the series string is connected across a power device to provide a voltage of the series string to the power device. The power system includes a plurality of safe voltage units each including a respective plurality of safety switches connectable across each one of the power sources and a plurality of sensors connectable to each one of the power sources. The sensors are configured to sense a plurality of parameters of the power sources. Each of the safe voltage units are configured to monitor for a signal output from the power device. The power system is controllable such that at least one of: a) detection of the signal by the safe voltage units within a predetermined time period, and b) an operating criteria determined based on the parameters sensed, causes each of the safety switches to be OFF in a normal mode of operation of the power system. The power system is controllable such that, when at least one of the safe voltage units does not detect the signal within the predetermined time period, the power system enters into a safety mode of operation from the normal mode of operation. The power system is controllable such that, upon entry of the power system into the safety mode of operation, the safety switches are caused to be ON to ensure a voltage level at each point in the series string to be at or below a predetermined voltage level, thereby reducing the level of the voltage of the series string to beat or below the predetermined voltage level.

According to some aspects of the power system, the power sources comprise batteries, wherein power from the power device is applied to the series string to charge the batteries in the normal mode of operation, wherein at least one of the receiving of the signal and operating criteria applied to the parameters sensed enables each of the safety switches to be OFF or ON responsive to the normal mode of operation.

According to some aspects of the power system, the power sources comprise batteries, wherein power from the batteries is provided from the series string to the power device to thereby discharge the batteries in the normal mode of operation, wherein at least one of the receiving of the signal and operating criteria applied to the parameters sensed, enables each of the safety switches to be OFF or ON, in the normal mode of operation of the power system.

According to some aspect of the power system, the power sources comprise photovoltaic panels, wherein power from the photovoltaic panels is provided from the series string to the power device in the normal mode of operation, wherein at least one of the receiving of the signal and operating criteria applied to the parameters sensed, enables each of the respective safety switches to be OFF when the photovoltaic panels are unshaded or ON when photovoltaic panels are shaded, in the normal mode of operation.

According to some aspects of the power system, the voltage of the series string is less than an open circuit voltage of the power sources.

According to some aspects of the power system, an operating power is provided to the safety switches to cause the safety switches to be ON or OFF in the normal mode of operation of the power system, and wherein operating power of the safe voltage units are supplied from at least one of the power sources and an auxiliary source of power independent of the power sources.

According to some aspects of the power system the operating criteria in the normal mode is selected from the group of criteria comprising: the voltage levels of the power sources, polarities of the power sources relative to each other, current level in the series string, the direction of the current in the series string or the voltage level of the series string.

According to some aspects of the power system, the power system enters into the safety mode of operation from the normal mode of operation due to at least one of: a disconnection in the series string, a disconnection between the series string and the power device, an outage of a grid connected to the power device, a leakage current, a malfunction of the power device, a trip of a circuit breaker or a shutdown of power device.

According to some aspects of the power system, the voltage of the series string is the sum of each of the voltages of the power sources.

According to some aspects of the power system, the power system further includes a load connected to the power device, wherein the load [is selected from the group of loads comprising: an AC grid, a DC grid, a transformer, a DC to AC inverter, a DC to DC converter, or an AC to DC rectifier.

Illustrative embodiments disclosed herein include a method for a power system having a series string of a plurality of power sources connected across a power device, in which the method includes connecting a plurality of safe voltage units including a plurality of safety switches connected respectively across each of the power sources. The method also includes monitoring an operating power applied to the safety switches. The method further includes sensing a plurality of parameters of the power sources. The method still further includes monitoring, by the safe voltage units, for a signal transmitted from the power device. The method also includes activating each of the safety switches to be OFF responsive to detecting the signal within a predetermined time period and at least one of the operating power and a sensing being associated with a normal mode of operation. The method further includes upon not detecting the signal from the power device within the predetermined time period, or based on the operating power applied to the safety switches being associated with an abnormal mode of operation, entering a safe mode of operation of the power system by reducing the voltages of each of the power sources to a voltage level less than a predetermined voltage level by activating the safety switches to be ON.

According to some aspects of the method, the activating comprises: turning at least one of the safety switches from OFF to ON responsive to the monitoring, wherein the monitoring monitors for a reverse polarity of a respective power source relative to the other polarities of the other power sources.

According to some aspects of the method, the reducing ensures a safe voltage level at each point in the series string of power sources.

According to some aspects of the method, a lowering of a voltage of the series string is achieved by activating at least one of the safety switches to be ON, thereby reducing the voltage of the string to a safe level of voltage in the safe mode of operation, wherein in the safe mode of operation, a voltage of the series string is less than an open circuit voltage of each of the power sources, and wherein the operating power is selected from the group comprising: the voltage levels of the power sources and the polarities of the power sources relative to each other, the current level, and the direction of the current in the series string or the voltage level of the series string.

According to some aspects of the method, the sensing includes sensing at least one of: a disconnection in the series string, and a disconnection between the series string and the power device.

As noted above, this Summary is merely a summary of some of the features described herein. It is not exhaustive, and it is not to be a limitation on the claims.

## BRIEF DESCRIPTION OF THE DRAWINGS

These and other features, aspects, and advantages of the present disclosure will become better understood with regard to the following description, claims, and drawings. The present disclosure is illustrated by way of example, and not limited by, the accompanying figures.

Fig. 1A shows a power system, according to one or more illustrative embodiments.

Fig. 1B illustrates circuitry that may be found in a power device such as a power module, according to one or more illustrative embodiments.

Fig. 1C shows a buck+boost circuit implementation for a power converter, according to one or more illustrative embodiments.

Fig. 1D shows a buck circuit implementation for a power converter, according to one or more illustrative embodiments.

Fig. 1E shows a power system, according to one or more illustrative embodiments.

Fig. IF shows a power system, according to one or more illustrative embodiments.

Fig. 1G is part block diagram, part schematic of a bypass circuit, according to one or more illustrative embodiments.

Fig. 1H shows a flowchart of a method, according to one or more illustrative embodiments.

Fig. 1I shows further details of a coupling circuit, a bypass switch and a circuit in a bypass circuit, according to one or more illustrative embodiments.

Fig. 1J shows further details of the circuit in the bypass circuit of Fig. 1I, according to one or more illustrative embodiments.

Fig. 1K shows a flow chart of a method for a bypass circuit, according to one or more illustrative embodiments.

Fig.1L shows transient traces of measurements made on a working design of the bypass circuit shown in Fig.1I, according to one or more illustrative embodiments.

Fig.1M shows steady state measurement traces of a bypass circuit shown in Fig.1I, according to one or more illustrative embodiments.

Fig.IN shows steady state measurement traces of a bypass circuit, according to one or more illustrative embodiments.

Fig. 1O is a part circuit diagram, part schematic of a bypass circuit, according to one or more illustrative embodiments.

Fig. IP is a part circuit diagram, part schematic of a bypass circuit, according to one or more illustrative embodiments.

Fig. 1Q shows further details of a bypass circuit, according to one or more illustrative embodiments.

Fig. 1R shows a flow chart showing further details of a step shown in Fig. 1H, according to one or more illustrative embodiments.

Fig. 1S shows a power system, according to one or more illustrative embodiments.

Fig. 1T is part schematic, part block diagram of a power system including multiple power devices and multiple power generators, according to one or more illustrative embodiments.

Fig. 2 is a block diagram of a power device, according to one or more illustrative embodiments.

Fig. 2A and 2B are schematics of implementations of a bypass circuit, according to one or more illustrative embodiments.

Fig. 2C is a block diagram of part of a power device, according to one or more illustrative embodiments.

Fig. 3 is a part schematic, part block diagram of a power device, according to one or more illustrative embodiments.

Fig. 3A is a part schematic, part block diagram of an auxiliary power circuit connected to a bypass circuit, according to one or more illustrative embodiments.

Fig. 3B is a part schematic, part block diagram of a power device, according to one or more illustrative embodiments.

Fig. 3C is a schematic of a bypass circuit, according to one or more illustrative embodiments.

Fig. 4 is a part schematic, part block diagram of a power device, according to one or more illustrative embodiments.

Fig. 4A is a schematic diagram of selection circuit configured to activate bypass, according to one or more illustrative embodiments.

Fig. 4B shows a flow chart of a method for activating a bypass switch, according to one or more illustrative embodiments.

Fig. 5 shows a flow chart of a method for operating a bypass circuit, according to one or more illustrative embodiments.

Fig. 6A illustrates a part schematic, part circuit diagram of a bypass circuit, according to one or more illustrative embodiments.

Fig. 6B illustrates a part schematic, part circuit diagram of a circuit included in a bypass circuit, according to one or more illustrative embodiments.

Fig. 6C illustrates a part schematic, part block diagram of a power device, according to one or more illustrative embodiments.

Fig. 6D illustrates a part schematic, part block diagram of a power device, according to one or more illustrative embodiments.

Fig. 7A is a part schematic, part block diagram of a power system, according to one or more illustrative embodiments.

Fig. 7B shows further details of a safe voltage unit which may be located and connected to a power module, according to one or more illustrative embodiments.

Fig. 7C shows a flow chart of a method applied in a power system for providing safety, according to one or more illustrative embodiments.

Fig. 7D shows a flow chart of a method applied in a power system for providing safety, according to one or more illustrative embodiments.

Fig. 7E shows a flow chart of a method applied in a power system for providing safety, according to one or more illustrative embodiments.

Fig. 7F shows a power system, according to one or more illustrative embodiments.

Fig. 7G shows further details of the power system of Fig.7F, according to one or more illustrative embodiments.

**DETAILED DESCRIPTION**

In the following description of various illustrative embodiments, reference is made to the accompanying drawings, which form a part hereof, and in which is shown, by way of illustration, various embodiments in which aspects of the disclosure may be practiced. It is to be understood that other embodiments may be utilized and structural and functional modifications may be made, without departing from the scope of the present disclosure.

By way of introduction, features of one or more embodiments may be directed to a power system and bypass circuits that may be utilized, for example, on power module outputs in a series connection of the power module outputs. Each power module may have inputs coupled to one or more direct current (DC) power sources. The series connection may be coupled across a load. Possible features of bypass circuits disclosed herein may include continuous bypass operation to provide a potential bypass of serially coupled power module outputs and/or power source outputs. In some embodiments, the bypass circuits may provide a bypass path during a low level of power production of an associated DC power source. In some embodiments, the bypass circuits may provide a bypass path when low power may be being produced on the output of at least one of the power modules compared to other power module outputs. In some embodiments, the bypass circuits may utilize a switch, and may have low power loss compared to the use of other passive or active bypass devices, for both high and low current flow through a series connection of power modules and/or power sources. Illustrative bypass circuits may include additional circuitry that may be adapted to provide or increase a bias voltage to the switch. The bias voltage may enable operation of the switch below minimal operating parameters normally provided by a series connection of the power modules and/ or power sources outputs for the switch.

The term "multiple" as used here in the detailed description indicates the property of having or involving several parts, elements, or members. The claim term "a plurality of" as used herein in the claims section finds support in the description with use of the term "multiple" and/or other plural forms. Other plural forms may include for example regular nouns that form their plurals by adding either the letter 's' or 'es' so that the plural of converter is converters or the plural of switch is switches for example.

The claim terms "comprise", "comprises" and/or "comprising" as used herein in the claims section finds support in the description with use of the terms "include", "includes" and/or "including".

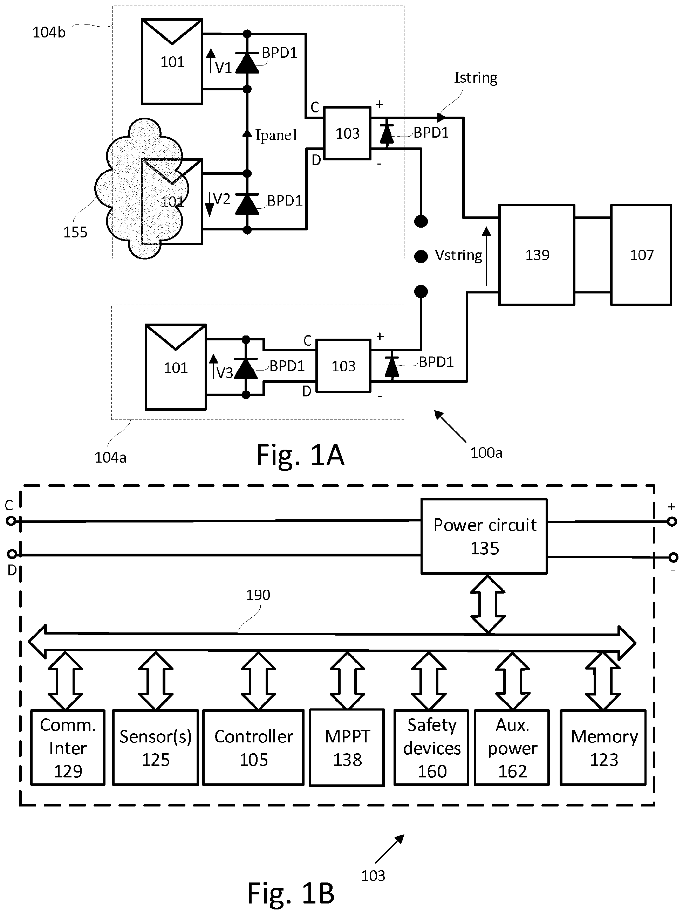

Reference is made to Fig. 1A, which shows a power system **100a,** according to illustrative embodiments. Connection configuration **104a** includes power source **101** with direct current (DC) output terminals coupled to input terminals of power module **103.** Connection configuration **104b** includes two power sources **101** coupled in a series connection, with direct current (DC) output terminals of the series connection coupled to the input terminals of power module **103.** The outputs of power modules **103** may be coupled in series to form a series coupled string of power module **103** outputs. The series coupled string of power module **103** outputs have a total voltage output **Vstring** that may be coupled across the input of system power device 139. Power modules **103** may be a direct current (DC) to DC converter. Alternatively, total voltage output **Vstring** may be coupled across load **107.** The outputs of power modules **103** may be coupled in a series string to which more power modules **103** may be added in order to provide the required input voltage **(Vstring)** to system power device 139. System power device 139 may be, for example, a direct current (DC) to DC converter or may be DC to alternating current (AC) inverter supplying power to load **107.** In some embodiments, system power device **139** may be a combiner box for combining multiple strings of power sources, a safety device (e.g., a ground fault detector and/or or safety switch) and/or a monitoring device configured to measure, monitor and/or report operational parameters associated with power system **100a.** Load **107** may be, for example, a battery, an alternating current (AC) grid, a DC grid, or a DC to AC inverter.

A positive (+) output terminal of power module **103** in connection configuration **104a** may be coupled to a negative (-) output terminal of another power module **103** or to a negative (-) output terminal of power module **103** in connection configuration **104b.** Bypass diodes **BPD1** may be provided with cathodes coupled to respective positive (+) output terminals of power sources **101** and anodes coupled to respective negative (-) output terminals of power sources **101.** Bypass diodes **BPD1** may be similarly coupled across the outputs of power modules **103.** In connection configuration **104b** two power sources **101** including their respective bypass diodes **BPD1** are connected in series to provide a voltage (**VI** + **V2**). The voltage (**V1** + **V2**) may then be applied to the input of a power module **103** at terminals **C** and **D** of the power module **103.** In connection configuration **104a,** a single power source **101** with bypass diode **BPD1** provides a voltage **V3.** The voltage **V3** is applied to the input of a power module **103** at terminals **C** and **D** of power module **103.** Multiple outputs of connection configurations **104a/104b** may be wired in series to give a string voltage (**Vstring**) that may be applied to the input of system power device 139.

In the descriptions that follow, power sources **101** may be a photovoltaic (PV) generator, for example, a PV cell, a series string of PV cells, a parallel connection of serially coupled PV strings of PV cells, a photovoltaic or solar panel, DC generator, a battery, or a fuel cell. In some embodiments, for example where power source **101** includes multiple serially coupled power sources such as PV substrings or PV cells, bypass diodes **BPD1** may be replaced or complemented by additional diodes coupled in parallel to each serially coupled power source **101.** DC sources of power for power sources **101** may also be derived from rectified or converted sources of alternating current (AC) provided from a switched mode power supply, dynamo or alternator, for example.

Operation of bypass diodes **BPD1** may be illustrated, by way of example, where power sources **101** may be photovoltaic panels. A power source in connection configuration **104b** is shown shaded with a shade **155.** As such, the voltage **V2** of the shaded power source **101** may have opposite polarity with respect to the other unshaded panels with respect to their voltages **V1** and **V3.** The opposite polarity may be as a result of restricted current flow of **Ipanel** so that the non-shaded panel may attempt to push the current through power module **103.** The attempt at pushing current flow may cause bypass diodes **BPD1** to become forward biased. A function of bypass diodes **BPD1** may therefore provide the function of bypassing a shaded panel and/or non-functioning power module **103** output in a series string of serially connected power module outputs **103.** Without bypass diodes **BPD1** on the outputs of power sources **101,** voltage **V2** may oppose the flow of current **Ipanel** so that current **Ipanel** may be substantially zero. Substantially zero current **Ipanel** means that power module **103** in connection configuration **104b** may be inoperative and therefore, both current **Istring** and voltage **Vstring** to the input of system power device 139 may be substantially zero.

However, with bypass diodes **BPD1,** the opposite polarity of **V2** may be applied across the bypass diode **BPD1** which forward biases bypass diode **BPD1.** Voltages **V1** and **V3** may reverse bias the respective bypass diodes **BPD1.** The forward bias of **V2** applied bypass diode **BPD1** causes current **Ipanel** to flow from anode to cathode of bypass diode **BPD1** at the output of the shaded power source **101.** Therefore, bypass diodes **BPD1** provide a potential parallel path of current conduction around a panel or power source **101** that is not working or is shaded with shade **155.** In general, a working panel applies a reverse bias voltage across bypass diodes, and a non-working or shaded panel applies a forward bias voltage across bypass diodes **BPD1.**

Bypass diodes **BPD1** may be coupled across the output of power modules **103.** If a power module **103** becomes inactive in a series string of power module outputs, current (**Istring**) attempting to pass through the inactive power module **103** may be offered an alternative, parallel path. The alternative, parallel path may be around the output of the inactive power module **103** via bypass diode **BPD1.** Rather than a forcing of current (**Istring**) through an inactive power module **103** output, the flow of current (**Istring**) may cause bypass diode **BPD1** to become forward biased. The forward biasing of bypass diode **BPD1** may cause current **Istring** to flow from anode to cathode of bypass diode **BPD1.** Therefore, bypass diodes **BPD1** may provide a potential parallel path of current conduction around a nonfunctioning power module **103** output in a series string of coupled power module **103** outputs.

Reference is now made to Fig. 1B, which illustrates circuitry that may be found in a power device such as power module **103,** according to illustrative embodiments. Power module **103** may be similar to or the same as power module **103** shown in Fig. 1A. In some embodiments, power module **103** may include power circuit **135.** Power circuit **135** may include a direct current-direct current (DC/DC) converter such as a Buck, Boost, Buck/Boost, Buck + Boost, Cuk, Flyback and/or forward converter, or a charge pump. In some embodiments, power circuit **135** may include a direct current - alternating current (DC/AC) converter (also known as an inverter), such as a micro-inverter. Power circuit **135** may have two input terminals and two output terminals, which may be the same as the input terminals and output terminals of power module **103.** In some embodiments, power module **103** may include Maximum Power Point Tracking (MPPT) circuit **138,** configured to extract increased power from a power source the power device may be coupled to. In some embodiments, power circuit **135** may include MPPT functionality. In some embodiments, MPPT circuit **138** may implement impedance matching algorithms to extract increased power from a power source the power device may be coupled to power module **103** may further include controller **105** such as a microprocessor, Digital Signal Processor (DSP), Application-Specific Integrated Circuit (ASIC) and/or a Field Programmable Gate Array (FPGA).

Still referring to Fig. 1B, controller **105** may control and/or communicate with other elements of power module **103** over common bus **190.** In some embodiments, power module **103** may include circuitry and/or sensors/sensor interfaces **125** configured to measure parameters directly or receive measured parameters from coupled sensors and/or sensor interfaces **125** configured to measure parameters on or near the power source, such as the voltage and/or current output by the power source and/or the power output by the power source. In some embodiments, the power source may be a photovoltaic (PV) generator including PV cells, and a sensor or sensor interface may directly measure or receive measurements of the irradiance received by the PV cells, and/or the temperature on or near the PV generator.

Still referring to Fig. 1B, in some embodiments, power module **103** may include communication interface **129,** configured to transmit and/or receive data and/or commands from other devices. Communication interface **129** may communicate using Power Line Communication (PLC) technology, acoustic communications technology, or additional technologies such as ZigBee™, Wi-Fi, Bluetooth™, cellular communication or other wireless methods. In some embodiments, power module **103** may include memory **123,** for logging measurements taken by sensor(s)/sensor interfaces **125** to store code, operational protocols or other operating information. Memory **123** may be flash, Electrically Erasable Programmable Read-Only Memory (EEPROM), Random Access Memory (RAM), Solid State Devices (SSD) or other types of appropriate memory devices.

Still referring to Fig. 1B, in some embodiments, power module **103** may include safety devices **160** (e.g., fuses, circuit breakers and Residual Current Detectors). Safety devices **160** may be passive or active. For example, safety devices **160** may include one or more passive fuses disposed within power module **103** where the element of the fuse may be designed to melt and disintegrate when excess current above the rating of the fuse flows through it, to thereby disconnect part of power module **103** so as to avoid damage. In some embodiments, safety devices **160** may include active disconnect switches, configured to receive commands from a controller (e.g., controller **105,** or an external controller) to short-circuit and/or disconnect portions of power module **103,** or configured to short-circuit and/or disconnect portions of power module **103** in response to a measurement measured by a sensor (e.g., a measurement measured or obtained by sensors/sensor interfaces **125**). In some embodiments, power module **103** may include auxiliary power circuit **162,** configured to receive power from a power source coupled to power module **103,** and output power suitable for operating other circuitry components (e.**g.**, controller **105,** communication interface **129,** etc.). Communication, electrical coupling and/or data-sharing between the various components of power module **103** may be carried out over common bus **190.**

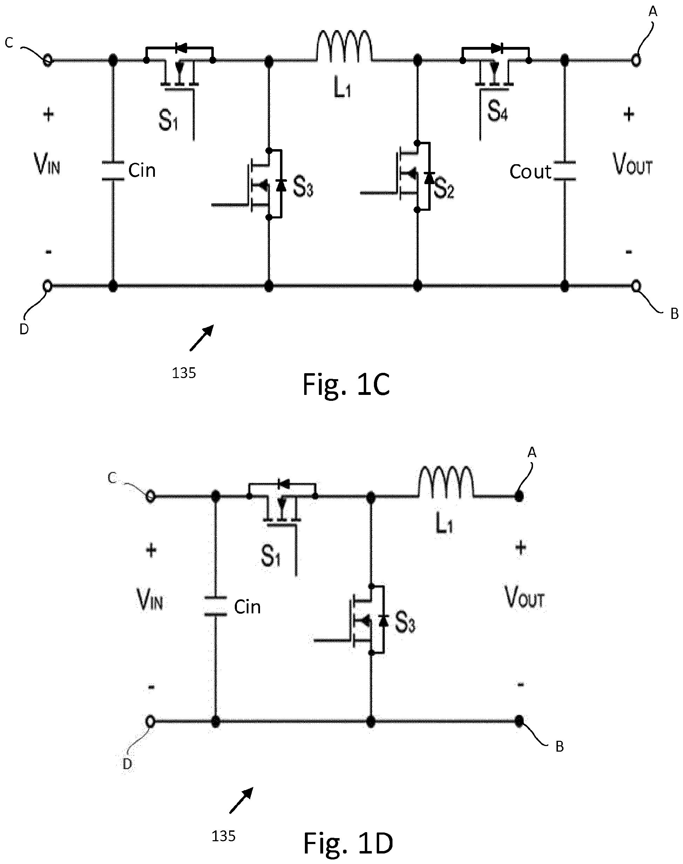

Reference is made to Fig. 1C, which shows a buck+boost circuit implementation for power circuit **135,** according to one or more illustrative embodiments. The buck+boost circuit implementation for power circuit **135** utilizes metal oxide semiconductor field effect transistors (MOSFETs) for switches **S1, S2, S3** and **S4.** The sources of switches **S1**, **S2, S3** and **S4** are referred to as first terminals, the drains of **S1, S2, S3** and **S4** are referred to second terminals, and the gates of **S1, S2, S3** and **S4** are referred to as third terminals. Capacitor **Cin** may be coupled in parallel across the respective positive (+) and negative (-) input terminals **C** and **D** of the buck+boost circuit, where the voltage may be indicated as **VIN.** Capacitor **Cout** may be coupled in parallel across the respective positive (+) and negative (-) output terminals **A** and **B** of the buck+boost circuit, where the voltage may be indicated as **VOUT.** First terminals of switches **S3** and **S2** may couple to the common negative (-) output and input terminals of the buck+boost circuit. A second terminal of switch **S1** may couple to the positive (+) input terminal and a first terminal of switch **S1** may couple to a second terminal of switch **S3.** A second terminal of switch **S4** may couple to the positive (+) output terminal and a first terminal of switch **S4** may couple to the second terminals of switch **S2.** Inductor **L1** may couple respectively between the second terminals of switches **S3** and **S4.** Third terminals of switches **S1, S2, S3** and **S4** may be operatively coupled to controller **105** (not shown in Fig. 1C).

Switches **S1**, **S2, S3** and **S4** may be implemented using semiconductor devices, for example, metal oxide semiconductor field effect transistors (MOSFETs), insulated gate bipolar transistors (IGBTs), bipolar junction transistors (BJTs), Darlington transistor, diode, silicon controlled rectifier (SCR), Diac, Triac or other semiconductor switches known in the art. By way of example, switches **S1, S2, S3** and **S4** may be implemented by use of bipolar junction transistors, where the collectors, emitters and bases may refer to first terminals, second terminals and third terminals described and defined above. Switches **S1, S2, S3** and **S4** may be implemented using mechanical switch contacts such as hand operated switches or electro-mechanically operated switches such as relays, for example. Similarly, implementation for power module **103** may include, for example, a buck circuit, a boost circuit, a buck/ boost circuit, a Flyback circuit, a Forward circuit, a charge pump, a Cuk converter or any other circuit that may be utilized to convert power on the input of power module **103** to the output of power module **103.**

Power module **103** may include or be operatively attached to a maximum power point tracking (MPPT) circuit (MPPT **138** for example). The MPPT circuit may also be operatively coupled to controller **105** or another controller **105** included in power module **103** that may be designated as a primary controller. A primary controller in power module **103** may communicatively control one or more other power modules **103** that may include controllers known as secondary controllers. Once a primary/secondary relationship is established, a direction of control may be from the primary controller to the secondary controllers. The MPPT circuit under control of a primary and/or central controller **105** may be utilized to increase power extraction from power sources **101** and/or to control voltage and/or current supplied to load **107.**

Reference is made to Fig. ID, which shows a buck circuit implementation for power circuit **135,** according to one or more illustrative embodiments. The buck circuit implementation for power circuit **135** utilizes metal oxide semiconductor field effect transistors (MOSFETs) for switches **S1** and **S3.** The sources of switches **S1** and **S3** are referred to as first terminals, the drains of **S1** and **S3** are referred to second terminals, and the gates of **S1** and **S3** are referred to as third terminals. Capacitor **Cin** may be coupled in parallel across the respective positive (+) and negative (-) input terminals **C** and **D** of the buck circuit, where the voltage may be indicated as **VIN.** Output terminals **A** and **B** of the buck circuit may be indicated as having an output voltage **VOUT.** A first terminal of switch **S3** may couple to the common negative (-) output and input terminals of the buck circuit. A second terminal of switch **S1** may couple to the positive (+) input terminal, and a first terminal of switch **S1** may couple to a second terminal of switch **S3.** Inductor **L1** may couple respectively between the second terminal of switches **S3** and terminal **A.** Third terminals of switches **S1** and **S3** may be operatively coupled to controller **105** (not shown in Fig. ID).

Reference is now made to Fig. IE, which shows a power system **100,** according to illustrative embodiments. Power harvesting system **100** may be similar to power harvesting system **100a** but might not include bypass diodes **BPD1.** Instead of or in addition to bypass diodes **BPD1,** bypass circuits **115** having terminals **A** and **B** may couple across the output terminals of power modules **103.** Bypass circuit **115** provides a switch between terminals **A** and **B,** so that when the switch is ON a substantially short circuit exists between terminals **A** and **B,** and when the switch is OFF a substantially open circuit exists between terminals **A** and **B.** Bypass circuits **115,** in accordance with illustrative embodiments disclosed herein, may provide certain advantages when compared to passive bypass diodes (e.g. **BPD1).**

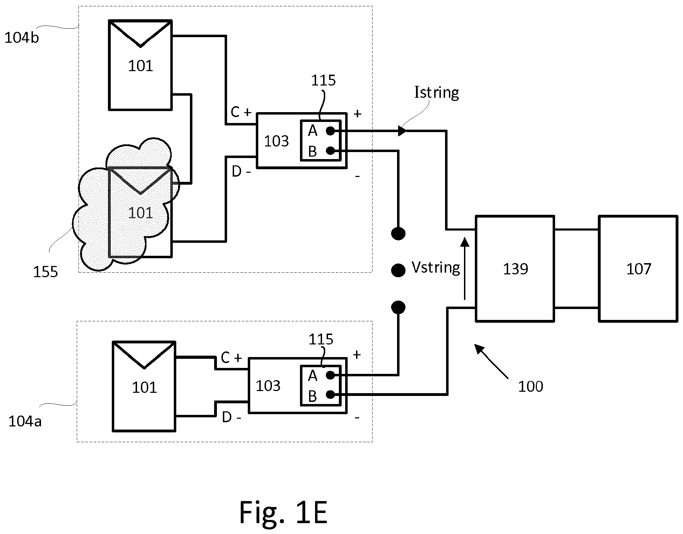

Reference is made to Fig. IF, which shows a power system **100b,** according to illustrative embodiments. Multiple strings of serially connected connection configurations **104a** and **104b** are shown in Fig.1E. The strings are connected in parallel across the input of system power device 139, with voltage input to system power device 139 shown as **Vstring.** System power device 139 may be a direct current (DC) to DC converter or may be a DC to alternating current (AC) inverter supplying power to load **107.** Power harvesting system **100b** may be similar to power harvesting system **100** but might not include bypass diodes **BPD1.** Instead of or in addition to bypass diodes **BPD1,** bypass circuits **115** having terminals **A** and **B** may be implemented in connection configurations **104a** and **104b** as shown in Fig. 1E. In general, any number of connection combinations of multiple connection configurations **104a/104b** may include DC power sources **101** of differing types so that one connection configuration has photovoltaic panels, for example, while another connection configuration has wind powered DC generators.

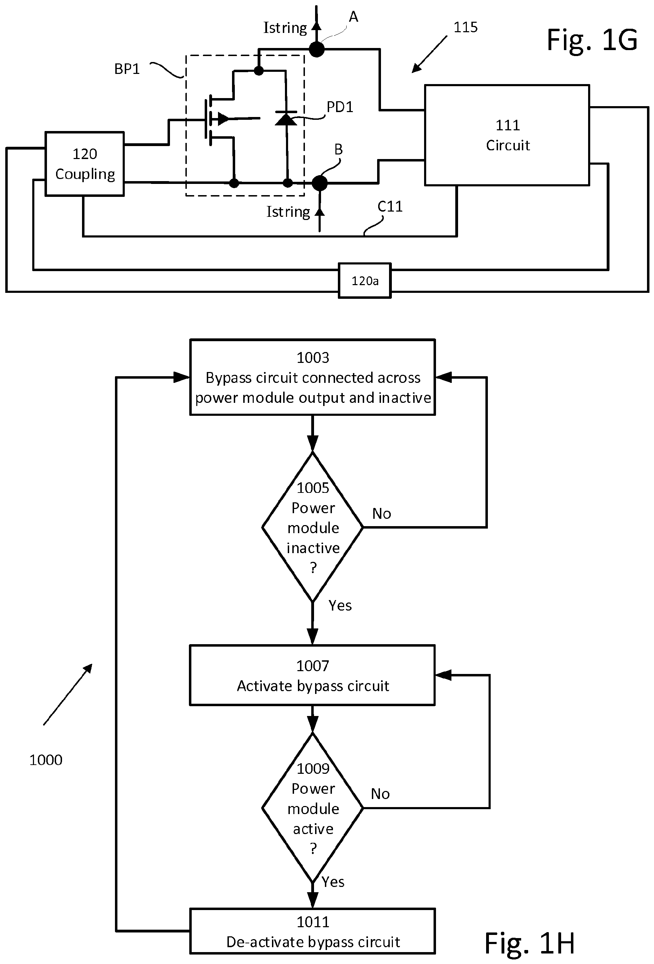

Reference is now made to Fig. 1G, which is part schematic, part block diagram of bypass circuit **115,** according to illustrative embodiments. An output of a circuit **111** may couple to a coupling circuit **120** by coupling unit **120a.** Coupling unit **120a** may be a part of coupling circuit **120,** a part of the output of circuit **111** and/or portions of both coupling circuit **120** and circuit **111.** Coupling unit **120a** may allow a coupling to provide a feedback path via a circuit between the output of circuit **111** and coupling circuit **120.** The coupling may be a direct electrical connection and/or coupling circuitry between the output of circuit **111** and coupling circuit **120.** The coupling may alternatively be a capacitive coupling between the output of circuit **111** and coupling circuit **120.** The coupling may alternatively be an inductive coupling between the output of circuit **111** and coupling circuit **120.** The inductive coupling may include a mutual inductive coupling between two inductors that may include a common direct electrical connection point shared between the two inductors. The inductive coupling may alternatively have two inductors that are both wound on a core. The core may allow a transformer coupling arrangement between the two inductors whereby a common direct electrical connection point is not shared between the two inductors.

The output of coupling circuit **120** may couple to the input of switch **BP1.** The output of coupling circuit **120** may be such that switch **BP1** may be either ON or OFF. The poles of switch **BP1** may couple to terminals A and **B,** which may also be coupled across the input of circuit **111.** Terminals **A** and **B** may also couple across output terminals of a power module **103** (not explicitly shown). When switch **BP1** is ON; the power module **103** might be not functioning and string current **Istring** may flow through switch **BP1.** When switch **BP1** is OFF; the power module **103** may be functioning and string current **Istring** may flow through the output of the power module **103.** Switch **BP1** is shown as a MOSFET where a diode **PD1** is coupled across the drain and source of the MOSFET. Diode **PD1** may be an intrinsic part of the MOSFET as a result of a structure of the MOSFET. The structure of the MOSFET may have an intrinsic p-n junction (diode) coupled between the drain and source. The intrinsic p-n junction (diode) of a MOSFET may be referred to as a body diode or a parasitic diode. Other semiconductor devices may be used for switch **BP1** which do not have an intrinsic p-n junction (diode) between terminals **A** and **B**, in which case a diode may be additionally coupled across terminals **A** and **B**. An additional switch wire **C11** may connect between coupling circuit **120** and circuit **111**.

Switch **BP1** may implemented using the switches that may already exist in power circuit **135**. With reference to Fig.1C, which shows a buck+boost circuit for power circuit **135, BP1** may implemented with the use of switches **S2** and **S4** across nodes **A** and **B**. Similarly, with reference to Fig.1D, which shows a buck circuit for power circuit **135,** switch **BP1** may implemented with the use of switch **S3** across nodes **A** and **B** via inductor **L1**. In descriptions, which follow of the Figures, diodes shown coupled across a switch may be intrinsic to the switch or may be additionally coupled across the switch.

Reference is now made again to Fig. 1G and to Fig. 1H, which shows a flow chart of a method **1000,** according to illustrative embodiments. The flow chart of method **1000** is used to explain the operation of the part schematic, part block diagram of bypass circuit **115** shown in Fig. 1G. The flow chart of method **1000** is also used to describe the operation of interconnected analog circuits that include coupling circuit **120,** switch **BP1** and circuit **111** in bypass circuit **115** described in greater detail below. As such, steps in method **1000** and indeed in steps of the other methods described below might not preclude the use of digital methodologies such as use of a microprocessor or microcontroller and associated algorithm to sense and control the operation of a bypass switch that may include coupling to coupling circuit **120,** switch **BP1** and circuit **111** in bypass circuit 115. Steps in method **1000** and indeed in steps of the other methods described below might not preclude the use of any number of implementations that combines both analog and digital methodologies.

As such, steps of method **1000,** methods described below and decision steps such as decision steps **1005** and **1009** in particular may be made by virtue of a configuration of the analog circuits used below to implement coupling circuit **120,** switch **BP1** and circuit **111** in bypass circuit 115. The configuration may include calculation and selection of component values, types of components and the interconnections of components as part of the circuit design of coupling circuit **120,** switch **BP1** and circuit **111** in bypass circuit **115.** The configuration may be based therefore, on the normal operating parameters where power sources **101** and/or power modules **103** are functioning correctly or to accommodate non-normal operating parameters of power systems **100a/**

**100** described above and in power systems described below. As such, the configuration with respect to the decision aspect of the decision steps described below may be responsive analog circuit wise to an event such as the breakdown or failure of a power module **103** and/or power source **101** so as to provide a bypass of the power module **103** and/or power source **101**. In this regard, the configuration with respect to bypass circuit **115** and the other analog bypass circuit embodiments described below may be considered to be substantially activated and/or operated for most of the time such that the steps of method **1000** are performed responsive to the continuously changing operating parameters of power systems **100a/ 100**. The continuously changing operating parameters of power systems **100a/ 100** for the bypass circuits **115** to be substantially activated most of the time may be where the power for the activation is provided from the string of serial connected power module **103** outputs, a module **103** and/or power source **101,** a partial power from module **103** and/or power source **101** or power is supplied from an auxiliary power source (for example auxiliary power from auxiliary power circuit **162**). As such, bypass circuit **115** and the other analog bypass circuit embodiments described below when considered as being substantially activated most of the time might not require sensors **125,** controller **105** and associated algorithm to decide respectively in steps **1005/1007** to activate switch **BP1** (ON) or to de-activate switch **BP1** (OFF) in respective steps **1009/1011. A** way therefore to enable a de-activation of bypass circuit **115** and the other analog bypass circuit embodiments described below from being substantially activated most of the time is for a controller to use driver circuitry **170** to apply a voltage to the gate of switch **BP1** so that switch **BP1** is OFF and/or de-activated thereby.

The configuration may also give the decision aspect of the decision steps described below so as to be responsive to an event such as a power module **103** and/or power source **101** reverting back to normal operation so as to remove a bypass of a power module **103** and/or power source **101.**

The discussion that follows uses by way of non-limiting example, a power system such as power system **100** where power sources **101** are photovoltaic panels coupled to the inputs of power modules **103,** and where the outputs of power modules **103** are coupled in series. The description that follows references power modules **103** but may equally apply to power sources **101**. The configuration in this regard may take into account the voltages and currents present in the string of serially connected power module **103** outputs for example.

At step **1003,** switch **BP1** may be coupled across the outputs of a power module **103** where there may be a series string of power module **103** outputs. Provided the power modules **103** are functioning properly, switch **BP1** is inactive (OFF). Alternatively, switch **BP1** may also be coupled across the outputs of power sources **101.**

At decision step **1005,** a first bypass current conduction of diode **PD1** may be an indication of power module **103** and/or power source **101** not functioning correctly. The indication according to the configuration may cause the subsequent activation of switch **BP1** (step **1007**) to be ON so that the output of a malfunctioning power module **103** is bypassed. Otherwise, switch **BP1** remains OFF so that the bypass function of switch **BP1** is inactive (step **1003**).

A power module **103** not functioning correctly may be as a result of a panel becoming shaded or a component failure within power module **103** for example. As such, the flow of current **(Istring)** through an inactive power module **103** output may become restricted. As a result of restricted current flow, the voltage outputs of the other power modules **103** in the string may attempt to push the current through their outputs and through the inactive power module **103** output. The attempt at pushing current flow of current may be caused by an increase in voltage output of the other power modules **103,** which may cause diode **PD1** to become forward biased. Whereas when a normal operation of power module **103** exists, diode **PD1** and the MOSFET of switch **BP1** are reversed biased (the MOSFET is OFF). The forward biasing of diode **PD1** may cause string current **Istring** to flow from anode to cathode of diode **PD1** in the first bypass current conduction of diode **PD1.**

The first bypass current conduction of diode **PD1** and forward voltage drop of diode **PD1** is applied to the input of circuit **111,** which may cause the oscillation of circuit **111.** The output oscillations of circuit **111** may be fed back to the input of switch **BP1** via coupling circuit **120.** The output of coupling circuit **120** connects to the gate (**g**) of the MOSFET of switch **BP1.** The output of coupling circuit **120** applied to the gate of the MOSFET of switch **BP1** may be sufficient to cause the MOSFET of switch **BP1** to switch ON so that switch **BP1** is activated at step **1007.**

At decision step **1009,** if inactive power module **103** remains inactive, then the MOSFET of switch **BP1** remains ON so that switch **BP1** remains activated at step **1007.** However, when power module **103** starts to become active, both the MOSFET and diode **PD1** of switch **BP1** become reverse biased. Power module **103** may become active because a panel coupled to power module may become unshaded, for example. The reverse bias voltages of both the MOSFET and diode **PD1** of switch **BP1** applied to the input of circuit **111** at terminals **A** and **B** may cause the ceasing of the oscillations of circuit **111.** The output oscillations of circuit **111** ceasing fed back to the input of switch **BP1** via coupling circuit **120** may be sufficient to cause the MOSFET of switch **BP1** to switch OFF, so that switch **BP1** is de-activated at step **1011.** The reduction of voltage applied to the gate of the MOSFET may cause the MOSFET to turn OFF. Alternatively, sensors **125** under control of controller **105** or some other controller may sense the reverse bias voltages of both the MOSFET and diode **PD1** of switch **BP1.** As a result of the reverse biases being sensed, switch **BP1** may be switched OFF and power from a driver circuitry may be allowed to be resupplied to the switches of power module **103** to allow power module **103** to function as normal. With the power modules **103** functioning normally, switch **BP1** is now inactive (OFF) but still coupled at terminals **A** and **B** (step **1003**).

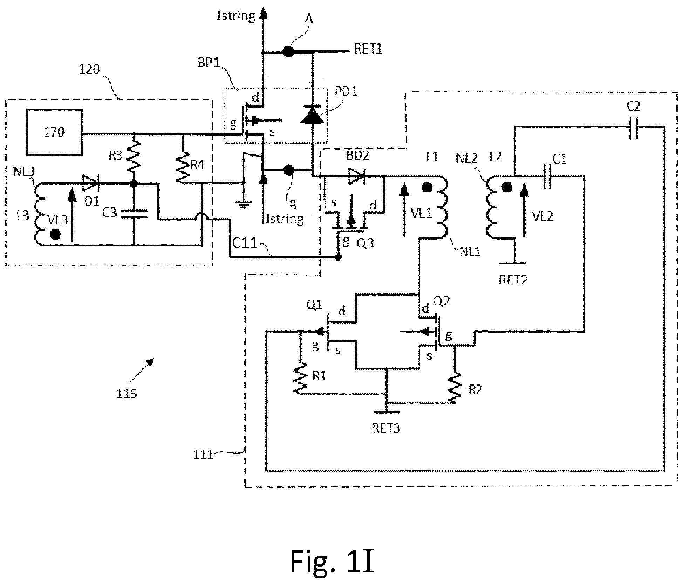

Reference is now made to Fig. 1I, which shows further details of coupling circuit **120,** switch **BP1** and circuit **111** in bypass circuit **115,** according to illustrative embodiments. Coupling circuit **120** may include biasing and driver circuitry **170** that has an output coupled to a first end of resistor **R3** and a first end of resistor **R4.** The second end of resistor **R3** may couple to the cathode of diode **D1**, a first end of capacitor **C3** and the gate (**g**) of switch **Q3** via switch wire **C11.** A second end of resistor **R4** may couple to a second end of capacitor **C3** and terminal **B.** The second end of capacitor **C3** may couple to a first end of inductor **L3** and a second end of inductor **L3** may couple to the anode of diode **D1.** The gate (**g**) of switch **BP1** may couple to the first ends of resistors **R3** and **R4.** The drain (**d**) of switch **BP1** may couple to the cathode of diode **PD1** at terminal **B** to give a return connection **RET1.** The anode of diode **PD1** may couple to the source (**s**) of switch **BP1,** the anode of diode **BD2** that belongs to switch **Q3** and the source (**s**) of switch **Q3.** The drain (**d**) of switch **Q3** may couple the cathode of diode **BD2** and a first end of inductor **L1** of circuit **111.** Switch **BP1** may be a metal oxide semiconductor field effect transistor (MOSFET), which may include diode **PD1** or which might not include diode. Similarly switches **Q1**, **Q2** and **Q3** may be MOSFETs, which include a diode like diode **BD2** or which might not include a diode.

In circuit **111,** a second end of inductor **L1** may couple to the drains (**d**) of switches **Q1** and **Q2.** The sources (**s**) of **Q1** and **Q2** may be coupled together to give a return connection **RET2.** A first end of resistor **R1** may couple between the gate of switch **Q1** and the source (**s**) of switch **Q1.** A first end of resistor **R2** may couple between the gate of switch **Q2** and the source (s) of switch **Q2.** The gate (**g**) of switch **Q1** may couple to a first end of capacitor **C2.** A second end of capacitor C2 may couple to a first end of inductor **L2** and a first end of capacitor **C1.** A second end of inductor **L2** may provide return connection **RET3.** A second end of capacitor **C1** may couple to the gate of switch **Q2.** Return connections **RET1, RET2** and **RET3** may couple together to form a return path that may be separate to terminal **B** at the source(s) of switch **BP1.** Separation between the return path and terminal **B** in bypass circuit **115,** along with the integration of bypass circuit **115** across the output of a power module **103,** may be achieved by disposing switch **Q3** and diode **BD2** between terminal **B** and inductor **L1.** Switches **BP1, Q2** and **Q3** may be metal oxide semiconductor field effect transistors (MOSFETs) and switch **Q1** may be a junction field effect transistor (JFET).

In some embodiments, inductors **L1**, **L2** and **L3** may be mutually coupled on the same magnetic core. In effect, the coupling between inductor **L1** to **L2** and then inductor **L2** to **L3** provide a possible function of coupling unit **120a** shown in Fig.1G, which allows a coupling between the output of circuit **111** and coupling circuit **120**. Therefore, the output of circuit **111** across inductor **L1** may be coupled back to the input of coupling circuit **120** via the mutual inductance between inductor **L1** and inductor **L3** and also coupled to inductor **L2** via the mutual coupling between inductor **L1** and inductor **L2**. The mutual inductance between inductor **L1** and inductor **L2** and voltages induced into inductor **L2** drive the gates (**g**) of switches **Q1** and **Q2** via the coupling of respective capacitors **C2** and **C1**. The mutual coupling between inductor **L1** and inductors **L2** and **L3** may be such that inductors **L2** and **L3** have a greater number of turns across the common magnetic core than inductor **L1** does, so the voltages induced into inductors **L2** and **L3** are greater by virtue of the transformer equations:

$$\frac{VL1}{VL2} = \frac{NL1}{NL2}$$

and

$$\frac{VL1}{VL3} = \frac{NL1}{NL3}$$

Where **VL1, VL2** and **VL3** are the respective voltages of inductors **L1**, **L2** and **L3,** where **NL1, NL2** and **NL3** are the respective number of turns of inductors **L1**, **L2** and **L3.**

The greater voltages induced into inductors **L2** and **L3** by virtue of the greater number of turns **NL2** and **NL3** may allow for operation of switches **BP1, Q1, Q2** and **Q3,** whereas without the greater voltages induced, switches **BP1, Q1, Q2** and **Q3** might not be able to operate otherwise.

Inductor **L2** and capacitors **C1** and **C2** in circuit **111** function as a Colpitts oscillator.

The frequency of oscillation given by:

$$f_o = \frac{1}{2\pi \sqrt{L_2 \left( \frac{C_1 C_2}{C_1 + C_2} \right)}}$$

Inductors **L1**, **L2**, **L3,** capacitors **C1** and **C2** may be chosen so that a frequency of oscillation for circuit **111** may be between 1 and 4 Kilohertz (KHz). The low frequency of oscillation of circuit **111** may therefore, provide low losses in the switching of **Q1**, **Q2** and **Q3**. Alternatively, capacitor **C1** may be replaced with another inductor so that circuit **111** may be implemented as a Hartley oscillator. Inductor **L3** of coupling circuit **120** may be built on the same core as inductors **L1** and **L2** in circuit **111,** diode **D1** may be used to rectify voltages induced on inductor **L3** that may be by virtue of the mutual coupling between inductor **L3** to inductors **L1** and **L2** of circuit **111**. The rectified pulses may drive the voltage (Vgs) between gate (**g**) and source (**s**) of the MOSFET of switch **BP1** to turn switch **BP1** ON for continuous conduction of switch **BP1** at step **1007**.

Reference is now made again to Fig. IF with method **1000** applied to the further details of coupling circuit **120**, switch **BP1** and circuit **111** in bypass circuit **115** shown in Fig. 1G, according to illustrative embodiments. At step **1003**, switch **BP1** may be coupled across the outputs of a power module **103** where there may be a series string of power module **103** outputs. Switch **BP1** is not active in step **1003**.

At decision step **1005**, specifically a first bypass current conduction of diode **PD1** may be an indication of power module **103** and/or power source **101** not functioning correctly. Consequently, the flow of current (**Istring**) through an inactive power module **103** output may become restricted. As a result of restricted current flow, the voltage outputs of the other power modules **103** in the string may attempt to push the current through their outputs and through the inactive power module **103** output. The attempt at pushing current flow of current may be caused by an increase in voltage output of the other power modules **103**, which may cause diode **PD1** to become forward biased so that a first bypass current conduction of current occurs through diode **PD1**. Diode **PD1** becoming forward bias also results in diode **BD2** also being forward biased. The forward biasing of diode **BD2** allows the utilization of circuit **111** to initiate a continuous operation of switch **BP1**. Detailed description of the operation of circuit **111** is described later on in the descriptions which follow.

At step **1007,** circuit **111** may initiate the continuous operation of switch **BP1**. As soon as diode **PD1** conducts, **Q2** and/or **Q1** may be ON, and circuit **111** may maintain the continuous operation of switch **BP1** so that the MOSFET of switch **BP1** is ON such that the voltage (Vds) between drain (**d**) and source (**s**) of switch **BP1** remains low, e.g., from about 10 millivolts (mV) substantially up to 200 mV. A comparison between Vds of 10mV of switch **BP1** and a forward voltage drop 0.7V of a bypass diode to bypass a string current **Istring** of 25 Amperes gives bypass power losses of 0.25 Watts and 17.5 Watts, respectively. As such, operation of switch **BP1** in bypass circuit **115** and other bypass circuit embodiments described below provide efficient bypass circuits that may allow the bypassing power sources and/or other circuit elements without incurring significant losses by the bypass itself. Bypassing power sources and/or other circuit elements without incurring significant losses may be significant when compared to other ways of providing a bypass that may include the use of bypass diodes, for example.

At step **1007,** return connections **RET1, RET2** and **RET3** may couple together to form a return path that may be a separate return path to that provided at terminal **B** at the source (s) of switch **BP1**. Separation between the return path and terminal **B** between coupling circuit **120** and circuit **111** may be by switch **Q3** and diode **BD2**. Consequently, oscillations of circuit **111** may build on the drains of switches **Q2** and/or **Q1**, while the return path for the oscillations may be provided on the sources(s) of switches **Q2** and/or **Q1**.

At decision step **1009**, if inactive power module **103** remains inactive, then the MOSFET of switch **BP1** remains ON so that switch **BP1** remains activated at step **1007**. At decision step **1009**, if switch **BP1** remains activated at step **1007**, power from driver circuitry **170** may be isolated from being supplied to the inactive power module **103**. However, when power module **103** starts to become active, for example when a panel becomes unshaded that may be sensed by sensors **125**, power from driver circuitry **170** may be allowed to be resupplied to the switches of power module **103** to allow the functioning of power module **103**. Both the MOSFET and diode **PD1** of switch **BP1** and diode **BD2** at this point may become reverse biased. The reverse bias voltages of both the MOSFET and diode **PD1** of switch **BP1** applied to the input of circuit **111** at the anode of diode **BD2** may cause the ceasing of the oscillations of circuit **111**. The output oscillations of circuit **111** ceasing when feedback to the input of switch **BP1** via coupling circuit **120** may be sufficient to cause the MOSFET of switch **BP1** to switch OFF, so that switch **BP1** is de-activated at step **1011**. Alternatively, sensors **125** under control of controller **105** or some other controller may sense the reverse bias voltages of both the MOSFET and diode **PD1** of switch **BP1**. As a result of the reverse biases being sensed, switch **BP1** may be switched OFF and power from driver circuitry **170** may be allowed to be resupplied to the switches of power module **103** to allow power module **103** to function as normal. The reduction of voltage applied to the gate of the MOSFET of switch **BP1** causes the MOSFET to turn OFF. With the power modules **103** functioning normally switch **BP1** is now inactive (OFF) but still coupled at terminals **A** and **B** (step **1003**).

Operation of Circuit 111

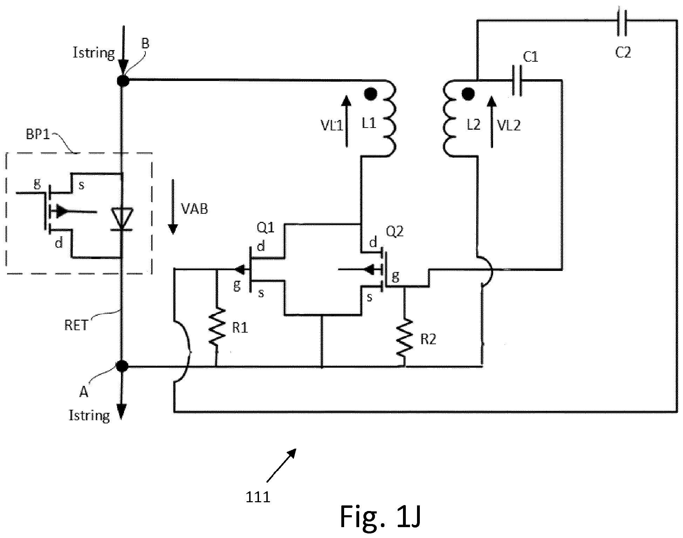

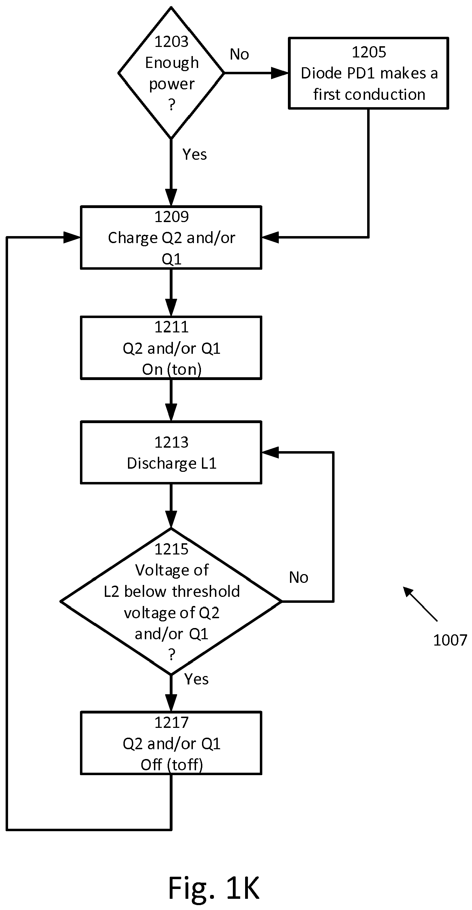

Reference is now made to Fig. 1J and Fig. 1K which show, respectively, circuit **111** and a flow chart of step **1007** in greater detail, according to illustrative embodiments. Step **1007** occurs if a power module **103** does not work, so that switch **BP1** draws the current in the series string **(Istring)** in a path around the output of an inactive power module **103**. Circuit **111** may be the same as described with regard to Fig. 1G, and may be coupled to bypass switch **BP1**. Switches **Q1** and **Q2** may be biased with resistors **R1** and **R2** respectively. In operation of circuit **111** when switch **BP1** is OFF and a power module **103** is working correctly at step **1011**, switch **Q3** and diode **BD2** may block leakage current through bypass switch **BP1** and block reverse voltage across bypass switch **BP1** when the voltage at terminal **A** may be much greater than the voltage at terminal **B**. Conversely when a power module **103** is not working at step **1007**, switch **Q3** is operated by the rectified output provided by diode **D1** so that diode **BD2** is bypassed by switch **Q3** when switch **Q3** may be ON. Switch **Q3** OFF during step **1007** provides a block of leakage current through bypass switch **BP1**. Switch **Q3** being ON may additionally compensate for any drop in voltage across terminals **A** and **B** as a result of switch **BP1** being turned ON and being maintained as ON during step **1007** so as to give headroom for circuit **111** to oscillate. Switch **Q3** and its operation is ignored and is to be considered to be ON, in order to simplify the following description.

In decision step **1203**, if a low amount of power is being produced by a power source **101** and respective power module **103** compared to other power sources **101** and respective power modules **103** in a series string of power module **103** outputs, a first bypass current conduction may therefore be through diode **PD1**. Similarly, if the power source **101** and respective power module **103** has a failure the first bypass current conduction may also be through diode **PD1**.

At decision step **1205** the first bypass current conduction may induce a voltage **VL1** across inductor **L1** since diode **BD2** is similarly forward biased as diode **PD1**. At step **1205**, bypass switch **BP1** may be positively biased with respect to output voltage (**VAB**) of power module **103**. Bypass switch **BP1** being positively biased with respect to output voltage (**VAB**) of power module **103** may be a result of power module **103** not functioning. The first bypass current conduction to provide the bypass of current through bypass switch **BP1** may therefore be through diode **PD1**, followed by the conduction of inductor **L1** via diode **BD2** and then by the conduction of inductor **L1** by use of switch **Q1** in a first stage of operation of bypass switch **BP1**.

An example of the low amount of power may be when power sources **101** may be photovoltaic panels that have just begun to be illuminated (e.g., at dawn) or when a photovoltaic panel may be substantially and/or partially shaded. Shading may reduce power generated by a power source **101** (e.g., reducing the power generated by, for example, 20%, 50% or even close to 100% of the power generated by an unshaded power source). If enough power may be produced by power sources **101** in decision step **1203**, circuit **111** may continue to oscillate with an initial use of switch **Q1** for a number of times according to the steps of **1209-1217** described below as part of the first stage of operation of switch **BP1** until the second stage of operation where switch **Q2** and/or **Q1** are used. **Q1** may be implemented using a junction field effect transistor (JFET) rather than a MOSFET since a JFET compared to a MOSFET may have a lower bias input current compared to a MOSFET and a JFET may conduct between source (s) and drain (d) when the voltage between gate (g) and source (Vgs) is substantially zero. **Q1** may also be implemented using a depletion mode FET.

Following on from the first stage with the use of **Q1**, steps **1209-1217** are implemented with the use of switch **Q2** and/or switch **Q1** as part of a second stage of operation of switch **BP1**. The principal of operation for both the first stage and the second stage is that inductor **L1** is mutually coupled to inductors **L3** and **L2** when current flows through inductor **L1**. The mutual coupling is such that when current flows through inductor **L1**, current flows in inductor **L2** and induces a voltage **VL2** into inductor **L2**. Voltage **VL2** may charge the gate (**g**) of switches **Q2** and/or switch **Q1** (step **1209**) via capacitors **C1** and/or **C2**. The charging of the gate (**g**) of **Q2** and/or switch **Q1** may cause switch **Q2** and/or switch **Q1** to start to conduct current between source (**s**) and drain (**d**) of switch **Q2** and/or switch **Q1** so that **Q2** and/or switch **Q1** is ON (step **1211**) for a time period **ton**.

The energy induced into inductor **L1** during **ton** may be discharged by a time constant τ[**L1**]

$$\tau[L1] = L1 \times Req$$

where *Req* may be the equivalent resistance that includes resistors **R2** and/or **R1** and the respective resistances (Rds) between drain (**d**) and source (s) when switch **Q2** and/ or **Q1** may be ON. The value of respective resistances (Rds) between drain (**d**) and source (**s**) when switch **Q2** and/ or **Q1** may be ON may be derived from manufacturer data sheets for the particular devices chosen for switches **Q2** and **Q1** as part of the design of circuit **111**. Discharge of inductor **L1** (step **1213**) may continue in decision step **1215** until voltage **VL2** of inductor **L2** in decision step **1215** drops below the threshold voltage of **Q2** and/or switch **Q1** which makes **Q2** and/or switch **Q1** switch OFF (step **1217**) for a time period **toff.** **Q2** and/or switch **Q1** drain (**d**) voltage then may begin to increase by the ratio:

$$\frac{ton}{toff \times VAB}$$

so that voltage may again increase on L2 for a time defined by a time constant τ **[L2]**, after which switch **Q2** and/or switch **Q1** conducts again (step **1209**), which may create the oscillation of circuit **111.** The time constant τ **[L2]** may be given by:

$$\tau[L2] = \sqrt{L2 \times Ceq}$$

where *Ceq* may be the equivalent capacitance that includes capacitors **C1** and **C2** and the parasitic capacitances of switches **Q2** and/or **Q1**. Parasitic capacitances of switches **Q2** and/or **Q1** may be derived from manufacturer data sheets for the particular devices chosen for switches **Q2** and **Q1** as part of the design of circuit **111.**

Parasitic capacitances of switches **Q2** and/or **Q1** may or might not be a significant factor in the desired value of time constant τ **[L2]**. Inductor **L1** coupled to inductor **L3** may cause a voltage to be induced in inductor **L3** when current flows through inductor **L1**. The voltage induced into inductor **L3** may be rectified by diode **D1**. The rectified voltage of diode **D1** may be applied to the gate (**g**) of bypass switch **BP1** via bias resistors **R3** and **R4,** which may turn bypass switch **BP1** to be ON (step **1007).**

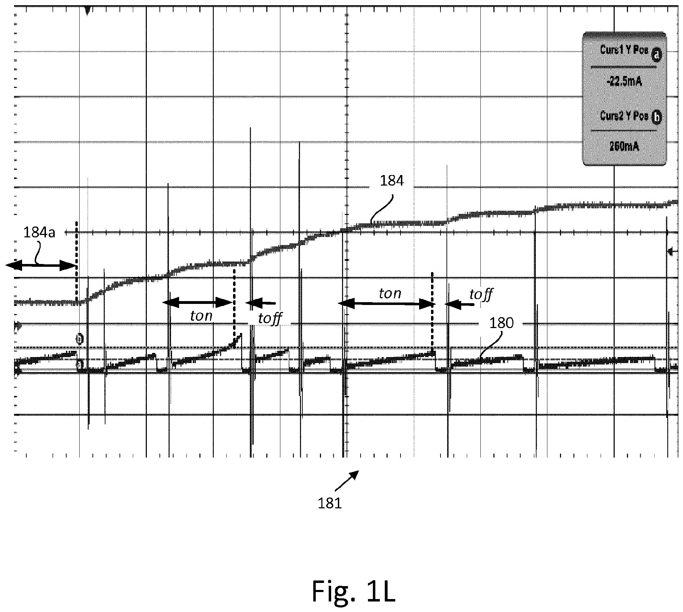

Reference is now made to Fig.1L, which shows transient traces **181** of measurements made on a working design of bypass circuit **115,** according to illustrative embodiments. Transient traces **181** show the effects of switch **BP1** in a transition from being OFF to being ON. The transient traces further show the entry into steady state condition where switch **BP1** is ON at step **1007**. The steady state condition may be where switch **BP1** is ON at step **1007** and may be an example of an inherent stabilization of bypass circuit **115**. The inherent stabilization of bypass circuit **115** may be established during the second stage of operation of switch **BP1** at step **1007**. The transition shows the effect of the operation of switch **BP1:** in the first bypass, current conduction through diode **PD1,** followed by switch **Q1** being operated in the first stage of operation, followed by switch **Q2** and /or switch **Q1** being operated in the second stage of operation of switch **BP1.**

Trace **184** shows the transient behavior of the voltage (Vgs) between gate (**g**) and source (s) of the MOSFET of switch **BP1**. Trace portion **184a** shows when a power module **103** may be functioning incorrectly so that switch **BP1** and/or diode **PD1** are forward biased and string current **Istring** flows through diode **PD1**. Trace portion **184a** is when a module **103** and/ power source **101** are not functioning correctly at step **1203**. Trace portion **184a** shows how the gate (**g**) source (**s**) voltage Vgs of switch **BP1** begins to fluctuate as a result of the first bypass current conduction through diodes **PD1** and **BD2** at step **1205**. Gate (**g**) voltage of the MOSFET of switch **BP1** is derived from the rectified voltage (from diode **D1**) induced in inductor **L3** which is mutually coupled to inductor **L1**. The rectified voltage (from diode **D1**) also drives the gate of switch **Q3** so that after the first bypass current conduction of diodes **PD1** and **BD2** at step **1205,** current flow through inductor **L1** is through both the source (**s**) and drain (**d**) of **Q3** and/or diode **BD2**. Beyond trace portion **184a** is shown the steady continued rise of the gate (**g**) source (**s**) voltage Vgs of switch **BP1** of the first stage by use of switch **Q1** and then by the second stage by use of switches **Q1** and/or **Q2**. The fluctuation of gate (**g**) source (**s**) voltage (Vgs) of switch **BP1** because of the first bypass current conduction through diodes **PD1** and **BD2** at step **1205** and the use of switches **Q1** and/or **Q2** in steps **1209-1217** shows a steady buildup of Vgs during the first stage. As such, both the initial fluctuation of Vgs and the steady buildup of Vgs during the first stage demonstrates a positive feedback loop between the output of circuit **111** back to the input of circuit

111 via coupling circuit 120. The positive feedback loop is therefore responsive to the output of power modules 103 and/or power sources 101 in order to establish that Vgs is sufficient to turn switch BP1 ON, to thereby provide a bypass across terminals A and B.

Trace portion 180 shows the current flow of inductor L1. The principal of operation for the first bypass current conduction through diodes PD1 and BD2, the first stage by use of switch Q1 and the second stage by use of switches Q1 and/or Q2 is that inductor L1 is mutually coupled to inductors L3 and L2 when current flows through inductor L1. The mutual coupling is such that when current flows through inductor L1, current flows in inductor L2 and induces a voltage VL2 into inductor L2. Voltage VL2 may charge the gates (g) of switches Q2 and/or switch Q1 (step 1209) via capacitors C1 and/or C2. The charging of the gate (g) of Q2 and/or switch Q1 may cause switch Q2 and/or switch Q1 to start to conduct current between source (s) and drain (d) of switch Q2 and/or switch Q1 so that Q2 and/or switch Q1 is ON (step 1211) for a time period *ton*. Discharge of inductor L1 (step 1213) may continue in decision step 1215 until voltage VL2 of inductor L2 in decision step 1215 drops below the threshold voltage of Q2 and/or switch Q1 which makes Q2 and/or switch Q1 switch OFF (step 1217) for a time period *toff*. The transient nature of the ON and OFF periods, *ton* and *toff* for switches Q1 and/or switch Q2 are shown by trace portion 180. The steady state at step 1007 for traces 180 and 184 are shown in the descriptions of the figures that follow.

Inherent stabilization of bypass circuit 115 may be established during the second stage of operation of switch BP1 by virtue of the feedback loop established from the output of circuit 111 back to the input of circuit 111 via coupling circuit 120 being responsive to the output of power modules 103 and/or power sources 101. As such, the steady continued rise of the gate (g) source (s) voltage Vgs of switch BP1 is only allowed to rise to a certain level of voltage so as to maintain switch BP1 to be ON. The feedback loop during the second stage therefore is a negative feedback loop. The negative feedback loop may be responsive to the output of power modules 103 and/or power sources 101 establishes and maintains the activation of switch BP1 to be ON continuously at step 1007 until a power module 103 and/ or power source 103 becomes active once more at step 1009. Switch BP1 at step 1007 is forward biased with respect to terminals A and B during bypass mode and the voltage applied to gate (g) of switch BP1 is such that switch BP1 is continuously ON for the time period that the non-functioning power module 103 is required to be bypassed. Likewise, the feedback loop responsive to the output of power modules 103 and/or power sources 101 establishes and maintains the deactivation of switch BP1 to be OFF continuously at step 1011 until a power module 103 and/ or power source 103 becomes once again inactive. Switch BP1 is reverse biased with respect to terminals A and B during non-bypass mode and the voltage applied to gate

(g) of switch BP1 is such that switch BP1 is continuously OFF for the time period that the functioning power module 103 is required not to be bypassed at step 1011.

Inherent stabilization may therefore occur when switch BP1 may be ON at step 1007, so that as its drain to source voltage Vds falls, the gate (g) to source (s) voltage Vgs also falls. Similarly, stabilization of bypass circuit 115 may be established when switch BP1 may be OFF at step 1011, so that as its drain (d) to source (s) voltage Vds rises, the gate (g) to source (s) voltage Vgs also rises.

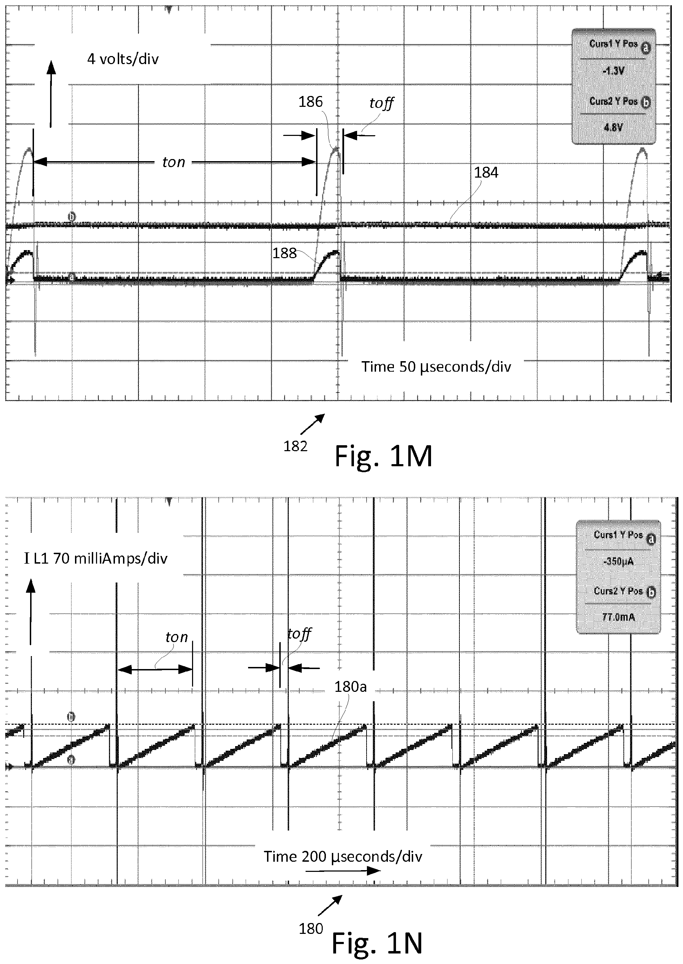

Reference is now made to Fig.1M and IN, which show steady state measurement traces 182 and 180 made on bypass circuit 115, according to illustrative embodiments. The measurement traces shown are for when a non-functioning power module 103 as part of a series connection of power modules 103 outputs is not functioning correctly and needs to be bypassed by switch BP1 for a string current (Istring) operating up to a maximum of 25 Amperes. The measurement traces demonstrate that switch BP1 is forward biased with respect to terminals A and B during bypass mode and the gate (g) of switch BP1 is such that switch BP1 is continuously ON for the time period that the non-functioning power module 103 is required to be bypassed.

Reference is now made to Fig.1M, which shows an oscilloscope trace 182 of the measured steady state traces 184, 186 and 188, according to illustrative embodiments. Trace 184 may be the measured gate (g) source (s) voltage Vgs of switch BP1 when switch BP1 is used to bypass a power module 103 output (step 1007) when a power module 103 does not work. According to trace 184, it can be seen that the measured gate (g) source (s) voltage Vgs of switch BP1 may stay substantially constant at approximately 5.8 volts, which makes bypass switch BP1 to be ON for the time periods *ton* and *toff*. Time periods *ton* and *toff* refer respectively to when switches Q2 and/or Q1 are ON (step 1211) and OFF (step 1217). Trace 186 shows the measured voltage across inductor L3 which begins at about minus 1.3 volts, rises to a peak of approximately 13 volts, rapidly drops to minus 7.8 volts and then returns back to minus 1.3 volts for a time period of *toff* (step 1217). The voltage across inductor L3 then remains at about minus 1.3 volts for a time period *ton* (step 1211). Trace 188 is the measured voltage between drain (d) source (s) voltage Vds of switch Q2, which begins at minus 1.3 volts and rises to a peak of approximately 3.8 volts and returns back to minus 1.3 volts for a period of *toff* (step 1217). Vds then remains at minus 1.3 volts for time period *ton* (step 1211).

Reference is now made to Fig.IN, which shows an oscilloscope trace 180 of the measured steady state current in inductor L1, according to illustrative embodiments. The steady state current in inductor L1 is for when switch BP1 is activated to be ON (step 1007). The ramp portion 180a of trace 180 begins at a current level through inductor L1 beginning at -350 micro-Amperes (μA) and carries on increasing for a time period *ton* (step 1211)

where the current may reach 77 milli-Amperes (mA). Once the current in inductor **L1** reaches 77mA, the ramp drops back down to -350μA for a time period *toff* (step **1217**). At the end of the time period *toff* (step **1217**), the ramp portion **180a** of trace 180 begins once again where the current through inductor **L1** reaches 77mA for the time period *ton* (step **1211**). For both Figs. 1L and 1M *ton* (step **1211**) may be 240 μseconds and *toff* may be 20 μseconds. The frequency of oscillation of circuit **111** may be the inverse of **260** μseconds which may be 3.85 KiloHertz (KHz).

Utilization of a first bypass current conduction through diode **PD1,** switch **Q1** in the first stage of operation, **Q2** and /or **Q1** in the second stage of switch **BP1** may therefore give a continuous operation of a bypass of the output of a non-functioning power module **103**. The continuous operation of bypass switch **BP1** to carry a wide range of currents (e.g. substantially zero to 30 amperes of string current (**Istring**)) where the conduction of the bypass circuit **115** may be, for example, 10mV-200mV compared to 0.7V of bypass diode **BPD1.** Additionally, operation of bypass circuit **115** may be utilized as part of a 'wake-up' of power system **100** when power sources **101** (e.g., photovoltaic (PV) generators) begin to produce a partial power or when PV generators may be completely shaded. Bypass circuit **115** may then utilize power from auxiliary power circuit **162** and/or the conduction of diode **PD1** at step **1205** followed by the first and second stages of operation of bypass **115** as described above in steps **1209-1217** to bypass a power source and/or a PV generator.

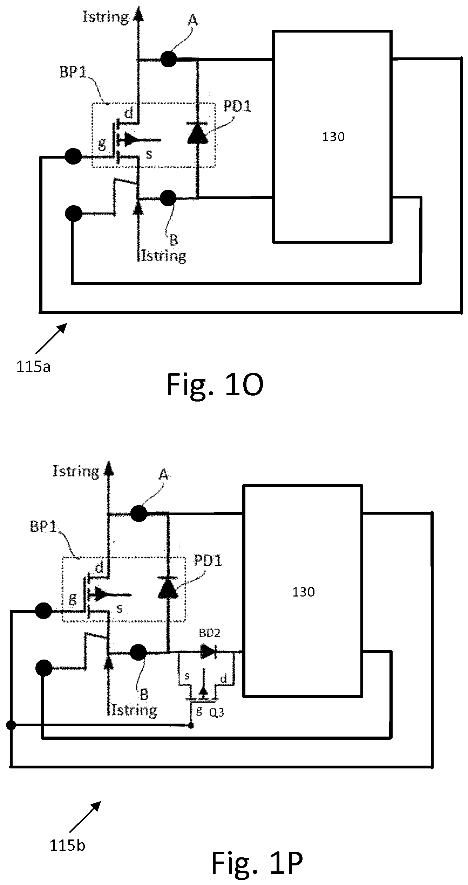

Reference is now made to Fig. 1O, which shows a bypass circuit **115a,** according to illustrative embodiments. The sources (**s**) of switches described herein are referred to as first terminals, the drains (**d**) are referred to second terminals and the gates (**g**) are referred to as third terminals. An output of charge pump **130** may be coupled to the input of switch **BP1** across the first terminal and third terminal of switch **BP1**. The first and second terminals of switch **BP1** connect to the input of charge pump **130**. The anode of diode **PD1** connects to the first terminal of switch **BP1** and the cathode of diode **PD1** connects to the second terminal of switch **BP1**. Nodes **A** and **B** are provided respectfully at the second and first terminals of switch **BP1**. Charge pump **130** may be configured to receive a very low voltage (e.g., tens or hundreds of millivolts) at its input, and output a substantially larger voltage (e.g., several volts). To enable the substantially larger voltage, charge pump **130** may include several conversion stages. Variations of illustrative circuits for charge pump **130** may be found in "0.18-V Input Charge Pump with Forward Body Biasing in Startup Circuit using 65nm CMOS" (P.H. Chen et. al., ©IEEE 2010), "Low voltage integrated charge pump circuits for energy harvesting applications" (W.P.M. Randhika Pathirana, 2014), which may be used as or as part of charge pump **130.**

Reference is now made to Fig. IP, which shows a bypass circuit **115b,** according to illustrative embodiments. Bypass circuit is the same as bypass circuit **115a** but with a first terminal of switch **Q3** connected to terminal **B** and a second terminal connected to the input of charge pump **130**. The third terminal of switch **Q3** connects to the third terminal of switch **BP1**.

Reference is now made again to method **1000** shown in Fig. 1H and to Figs. 1O and IP, according to illustrative embodiments. At step **1003**, switch **BP1** may be coupled across the outputs of a power module **103** where there may be a series string of power module **103** outputs. Provided the power modules **103** are functioning properly, switch **BP1** is inactive (OFF). Alternatively, switch **BP1** may also be coupled across the outputs of power sources **101**.

At decision step **1005**, a first bypass current conduction of diode **PD1** may be an indication of power module **103** and/or power source **101** not functioning correctly. The indication according to the configuration may cause the subsequent activation of switch **BP1** (step **1007**) to be ON so that the output of a malfunctioning power module **103** is bypassed. Otherwise, switch **BP1** remains OFF so that the bypass function of switch **BP1** is inactive (step **1003).** Whereas when a normal operation of power module **103** exists, diode **PD1** and the MOSFET of switch **BP1** are reversed biased (the MOSFET is OFF). The forward biasing of diode **PD1** may cause current **Istring** to flow from anode to cathode of diode **PD1** in a first bypass current conduction of diode **PD1**.

The first bypass current conduction of diode **PD1** and forward volt drop of diode **PD1** is applied to the input of charge pump circuit **130,** which may cause the buildup of the voltage output of charge pump circuit **130.** The output voltage of charge pump circuit **130** may be fed back to the input of switch **BP1**. The output voltage of charge pump circuit **130** applied to the gate of the MOSFET of switch **BP1** may be sufficient to cause the MOSFET of switch **BP1** to switch ON so that switch **BP1** is activated at step **1007**. Conversely, with respect to the use of bypass circuit **115b** when a power module **103** is not working at step **1007**, switch **Q3** is operated by the output of charge pump **130** so that diode **BD2** is bypassed by switch **Q3** when switch **Q3** may be ON. Switch **Q3** OFF during step **1007** provides a block of leakage current through bypass switch **BP1**. Switch **Q3** being ON, additionally compensates for any drop-in voltage across terminals **A** and **B** as a result of switch **BP1** being turned ON and being maintained as ON during step **1007** so as to may be give headroom for charge pump **130** to function.

At decision step **1009**, if inactive power module **103** remains inactive then the MOSFET of switch **BP1** remains ON so that switch **BP1** remains activated at step **1007**. However, when power module **103** starts to become active both the MOSFET and diode **PD1** of switch **BP1** become reverse biased. Power module **103** may become active because a panel coupled to power module may become un-shaded for example. The reverse bias voltages of both the MOSFET and diode **PD1** of switch **BP1** applied to the input of charge pump circuit **130** at terminals **A** and **B** may cause the decreasing of the output voltage of charge pump circuit **130** and/or a reverse voltage output of charge pump circuit **130**. The decreasing of the output voltage of charge pump circuit **130** and/or a reverse voltage output of charge pump circuit **130** applied to the gate (**g**) of switch **BP1** may be sufficient to cause the MOSFET of switch **BP1** to switch OFF so that switch **BP1** is de-activated at step **1011**. The reduction of voltage applied to the gate of the MOSFET therefore may cause the MOSFET to turn OFF. Alternatively, sensors **125** under control of controller **105** or some other controller may sense the reverse bias voltages of both the MOSFET and diode **PD1** of switch **BP1**. As a result of the reverse biases being sensed, switch **BP1** may be switched OFF and power from driver circuitry such as driver circuitry **170** for example, may be allowed to be resupplied to the switches of power module **103** to allow power module **103** to function as normal. With the power modules **103** functioning normally, switch **BP1** is now inactive (OFF) but still coupled at terminals **A** and **B** (step **1003**).

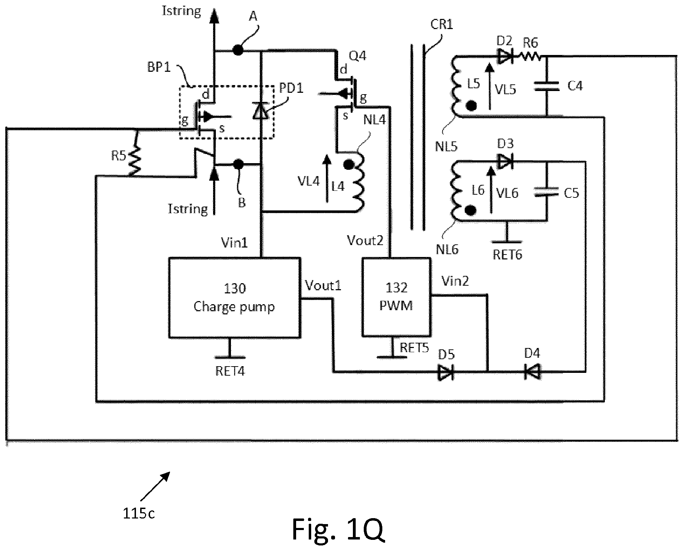

Reference is now made to Fig.1Q, which shows further details for a bypass circuit **115c,** according to illustrative embodiments. Coupling **120** circuit may include resistor **R5**, capacitor **C4,** resistor **R6**, diode **D2** and inductor **L5.** Resistor **R5** may have a first end coupled to the gate (**g**) of switch **BP1**. Resistor **R5** may have a second end coupled to terminal **B**. Capacitor **C4** may be coupled across resistor **R5**. A first end of capacitor **C4** may be coupled to terminal **B** and to a first end of inductor **L5**. A second end of inductor **L5** may be coupled to the anode of diode **D2**. A second end of capacitor **C4** may be coupled to one end of resistor **R6**. A second end of resistor **R6** may be coupled to the cathode of diode **D2**.

The sources (**s**) of switches described herein are referred to as first terminals, the drains (**d**) are referred to second terminals and the gates (**g**) are referred to as third terminals. Circuit **111a** may include the second terminals of switch **BP1** may couple to the second terminals of switch **Q4** and the cathode of diode **PD1** of switch **BP1**. The anode of diode **PD1** may couple to terminal **B**, the voltage (**Vin1**) input of charge pump **130** and a first end of inductor **L4**. The second end of inductor **L4** may couple to the first terminals of switch **Q4**. The third terminals of switch **Q4** may couple to the voltage output (**Vout2**) of PWM **132**. The output voltage (**Vout1**) of charge pump **130** may couple to the anode of diode **D5**. The cathode of diode **D5** may couple to the cathode of diode **D4** and the input voltage (**Vin2**) of pulse width modulator (PWM) **132**. The anode of diode **D4** may couple to the cathode of diode **D3** and a first end of capacitor **C5**. The second end of capacitor **C5** may couple to a first end of inductor **L6** and provide return connection **RET6**. The second end of inductor **L6** may couple to the anode of diode **D3**. Both PWM **132** and charge pump **130** provide respective return paths **RET5** and **RET6**. Return paths **RET4, RET5** and **RET6** may be coupled together. Inductors **L4, L5** and **L6** may be all mutually coupled together on the same core **CR1,** and the output of circuit **111a** on inductor **L4** may be coupled back to the input of coupling circuit **120** on inductor **L5**. Charge pump **130** may be realized by a Switched-Capacitor Voltage Converter MAX1680C/**D**® (Maxim Integrated Products, **120** San Gabriel Drive, Sunnyvale, CA USA), which may double input voltage (**Vin1**) on output **Vout1**. PWM **132** may be realized by use of the LTC®6992 a silicon circuit with an analog voltage-controlled pulse width modulation (PWM) capability by Linear Technology Corporation 1630 McCarthy Blvd., Milpitas, CA, USA.

Reference is now again made to Fig. 1Q and again to Fig. 1H, which shows a flowchart of method **1000,** according to illustrative embodiments. Switch **BP1** may couple (step **1003**) across the outputs of power modules **103** where there may be a series string of power module **103** outputs. At decision step **1005,** if a power module **103** does not work, switch **BP1** draws the current in the series string **(Istring)** in a path around from the output of an inactive power module **103** (step **1007**).

At decision step **1005**, a first bypass current conduction of diode **PD1** may be an indication of power module **103** and/or power source **101** not functioning correctly. Methods described below and decision steps in particular assume that so called 'decisions' are made by virtue of a configuration of the analog circuits used below to implement coupling circuit **120**, switch **BP1** and circuit **111a** in bypass circuit **115c**. As such, steps in method **1000** and indeed in steps of the other methods described below might not preclude the use of digital methodologies such as use of a microprocessor or microcontroller and associated algorithm to sense and control the operation of a bypass switch which may include coupling to circuit **120**, switch **BP1** and circuit **111a** in bypass circuit **115**. Steps in method **1000** and indeed in steps of the other methods described below might not preclude the use of any number of implementations that combines both analog and digital methodologies.

As with analog circuits, the configuration may include calculation and selection of component values, types of components and the interconnections of components as part of the circuit design of coupling circuit **120**, switch **BP1** and circuit **111a** in bypass circuit **115c.** The configuration may be based therefore, on the normal operating parameters or non-normal operating parameters of power systems **100a/ 100** described above and in power systems described below. As such, the configuration with respect to the decision aspect of the decision steps described below may be responsive analog circuit wise to an event such as the breakdown or failure of a power module **103** and/or power source **101,** so as to provide a bypass of the power module **103** and/or power source **101**.

The configuration may also give the decision aspect of the decision steps described below so as to be responsive to an event such as a power module **103** and/or power source **101** reverting back to normal operation so as to remove a bypass of a power module **103** and/or power source **101**. The indication according to the configuration may cause the subsequent activation of switch **BP1** (step **1007**) to be ON, so that the output of a malfunctioning power module **103** is bypassed. Otherwise, switch **BP1** remains OFF so that the bypass function of switch **BP1** is inactive (step **1003**).

The attempt at pushing current flow of current through a non-functioning power module **103** may be caused by an increase in voltage output of the other power modules **103**, which may cause diode **PD1** to become forward biased. Whereas when a normal operation of power module **103** exists, diode **PD1** and the MOSFET of switch **BP1** are reversed biased (the MOSFET is OFF). The forward biasing of diode **PD1** may cause current **Istring** to flow from anode to cathode of diode **PD1** in a first bypass current conduction of diode **PD1**. The forward biasing of diode **PD1**, similarly cause the forward biasing of switch **Q4**. The first bypass current conduction of diode **PD1** and the forward voltage of diode **PD1** may be applied to the input of circuit **111a**, which may cause the oscillation of circuit **111a**. The output oscillations of circuit **111a** may be fed back to the input of switch **BP1** via coupling circuit **120**. The output of coupling circuit **120** connects to the gate of the MOSFET of switch **BP1**. The output of coupling circuit **120** applied to the gate of the MOSFET of switch **BP1** may be sufficient to cause the MOSFET of switch **BP1** to switch ON, so that switch **BP1** is activated at step **1007**. In step **1007**, circuit **111a** initiates the continuous operation of switch **BP1** as soon as the diode **PD1** conducts, and later by use of switch **Q4** to maintain the continuous operation of switch **BP1** such that the voltage (Vds) between drain (**d**) and source (**s**) of switch **BP1** remains low at substantially up to 100 millivolts (mv).

At decision step **1009**, if inactive power module **103** remains inactive, then the MOSFET of switch **BP1** remains ON so that switch **BP1** remains activated at step **1007**. However, when power module **103** starts to become active, both the MOSFET and diode **PD1** of switch **BP1** and switch **Q4** become reverse biased. Power module **103** may become active because a panel coupled to power module may become un-shaded for example. The reverse bias voltages of both the MOSFET and diode **PD1** of switch **BP1** and switch **Q4** applied to the input of circuit **111a** at terminals **A** and **B** may cause the ceasing of the oscillations of circuit **111a**. The output oscillations of circuit **111a** ceasing fed back to the input of switch **BP1** via coupling circuit **120** may be sufficient to cause the MOSFET of switch **BP1** to switch OFF so that switch **BP1** is de-activated at step **1011**. The reduction of voltage applied to the gate of the MOSFET causes the MOSFET to turn OFF. Alternatively, sensors **125** under control of controller **105** or some other controller may sense the reverse bias voltages of both the MOSFET and diode **PD1** of switch **BP1**. As a result of the reverse biases being sensed, switch **BP1** may be switched OFF and power from driver circuitry such as driver circuitry **170** for example, may be allowed to be resupplied to the switches of power module **103** to allow power module **103** to function as normal. With the power modules **103** functioning normally switch **BP1** is now inactive (OFF) but still coupled at terminals **A** and **B** (step **1003**).

Operation of Circuit **111a**

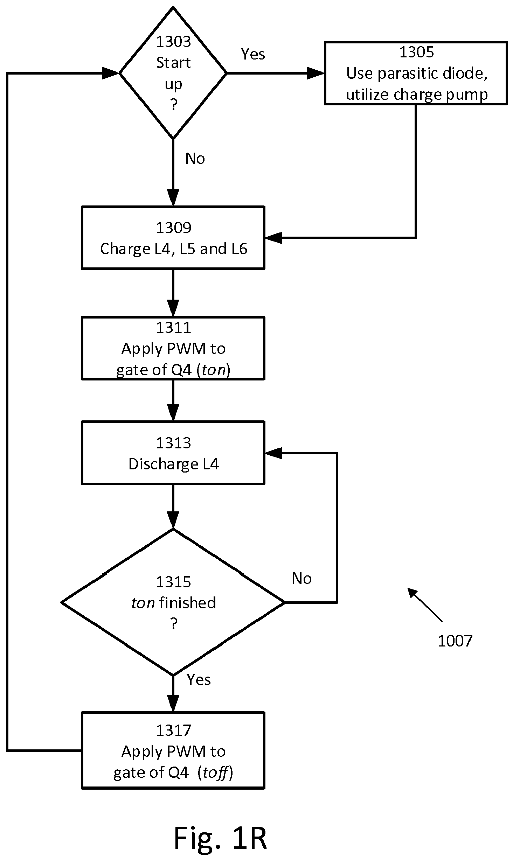

Reference is now made again to Fig. 1Q and Fig. 1R, which show respectively bypass **115c** and a flow chart showing further details of step **1007**, according to illustrative embodiments. Step **1007** occurs if a power module **103** does not work, so that switch **BP1** draws the current in the series string **(Istring)** in a path around the output of an inactive power module **103** in a series string of power module **103** outputs. In operation of circuit **111a**, a switch and its diode may be incorporated into charge pump **130** or may be attached thereto. The switch (not shown but similar in function to switch **Q3** and diode BD2 in Fig.1I) may block leakage current through bypass switch **BP1** and block reverse voltage across bypass switch **BP1**. The blocking of reverse voltage may be when the voltage at terminal **A** may be much greater than the voltage at terminal **B** such a situation may be when the power module **103** is operating correctly at step **1003**. The switch and its operation may be ignored for ease of the following discussion and is considered to be ON.

In decision step **1303**, the continuous operation of switch **BP1** in bypass of a power module **103** output begins as soon as the diode **PD1** of switch **BP1** conducts in a first bypass current conduction. After the first bypass current conduction, a first stage of the continuous operation of switch **BP1** may be established primarily by use of charge pump **130**, PWM **132** and switch **Q4**. After several possible cycles as described in the steps which follow by use of charge pump **130**, PWM **132** and switch **Q4**, the voltage produced by inductor **L6** may be greater than the output voltage **Vout1** of charge pump **130** which initiates a second stage of the continuous operation of switch **BP1**. The time constant to charge capacitor **C5** may be smaller than the time constant to charge capacitor **C4**. The difference in time constants between capacitors **C5** and **C4** may facilitate the use of charge pump **130** and switch **Q4** to operate switch **BP1** in the first stage until the second stage. In the second stage, the operation may be mainly with the continuous operation of PWM **132**, switch **Q4** and when the voltage produced by inductor **L6** may be greater than the output voltage **Vout1** of charge pump **130**.

In decision step **1303**, diode **PD1** makes a first bypass current conduction of inductor L4 in step **1305** which induces voltages across inductors **L5** and **L6** while bypass switch **BP1** may be positively biased with respect to output voltage (**VAB**) of power module **103**. Bypass switch **BP1** being positively biased with respect to output voltage (**VAB**) of power module **103** may signify that power module **103** may be not functioning and needs to have its output bypassed. The induced voltage **VL5** of inductor **L5** is rectified by diode **D2** to charge capacitor **C4**. The voltage of charged capacitor **C4** is applied to the gate (**g**) of bypass switch **BP1**, so that bypass switch **BP1** is ON for the first bypass current conduction and for both the first and second stages described in further detail below.

The first bypass current conduction of inductor **L4** that may be through diode **PD1** may be when a low amount of power may be being produced by power sources **101** and respective power modules **103**. An example of the low amount of power may be when power sources **101** may be photovoltaic panels that have just begun to be illuminated at dawn for example, or when a photovoltaic panel may be substantially shaded. If enough power may be produced by power sources **101** at decision step **1303**, circuit **111a** continues to oscillate with the substantial use of charge pump **130** for several possible cycles until enough power may be produced by power sources **101**.

The principal of operation, for either the first bypass current conduction or for the first stage may be that inductor **L4** with current flowing through inductor **L4** from the first bypass current conduction and/or followed by the use of switch **Q4** may be mutually coupled to inductors **L5** and **L6** via inductor **L4**. Current flowing through **L4** causes current to flow in inductors **L5** and **L6** (step **1309**) and the application of PWM **132** voltage **Vout2** to the gate (**g**) of switch **Q4** (step **1311**). The application of PWM **132** voltage **Vout2** to the gate (**g**) of switch **Q4** may be by virtue of the output voltage **Vout1** of charge pump **130** applied to the input (**Vin2**) of PWM **132**. The output voltage **Vout1** of charge pump **130** applied to the input (**Vin2**) of PWM **132** further causes switch **Q4** to start to conduct current between source (**s**) and second terminals of switch **Q4** so that **Q4** is ON for a time period *ton*. Discharge of inductor **L4** (step **1313**) continues in decision step **1315** until the end of time period *ton*. At end of time period *ton* the application of PWM **132** voltage **Vout2** to the gate (**g**) of switch **Q4** turns **Q4** OFF for a time period *toff*.

Inductors **L4, L5** and **L6** may be all mutually coupled together on the same core **CR1,** as such, the output of circuit **111a** on inductors **L5** and **L6** may be coupled back to the input of coupling circuit **120** to inductor **L5**. The mutual coupling between inductor **L4** and inductors **L5** and **L6** may be such that inductors **L5** and **L6** have a greater number of turns than inductor **L4** so that the voltages induced into inductors **L5** and **L6** may be much greater by virtue of the well-known transformer equations:

$$\frac{VL4}{VL5} = \frac{NL4}{NL5}$$

and

$$\frac{VL4}{VL6} = \frac{NL4}{NL6}$$

Where **VL4, VL5** and **VL6** are the respective voltages of inductors **L4, L5** and **L6. NL4, NL5** and **NL6** are the respective number of turns of inductors **L4, L5** and **L6**. The greater voltages induced into inductors **L5** and **L6** may allow for operation of switch **BP1,** switch **Q4,** charge pump **130** and PWM **132.** Whereas without the greater voltages induced, switch **BP1,** switch **Q4,** charge pump **130** and PWM **132** might not be able to operate otherwise.

Until after several possible cycles as described in the steps **1309-1317** above, the voltage produced by inductor **L6** and rectified by diode **D3** may build up to be greater than the output voltage **Vout1** of charge pump **130** rectified by diode **D5**. When the voltage produced by inductor **L6** and rectified by diode **D3** may be greater than the output voltage **Vout1** of charge pump **130** rectified by diode **D5,** a second stage begins. The second stage of the continuous operation of switch **BP1** begins by the application of voltage rectified by diode **D3** applied to the input (**Vin2**) of PWM **132**. The second stage of the continuous operation of switch **BP1** continues the same way as described previously in steps **1309-1317,** but with substantial use of PWM **132** and switch **Q4.**

Inherent stabilization of bypass circuit **115c** may be established by virtue of the feedback loop established from the output of circuit **111a** back to the input of circuit **111a** via the rectified outputs of inductors **L5** and **L6** (across capacitors **C4** and **C5**) responsive to the output of power modules **103** and/or power sources **101**. The feedback loop responsive to the output of power modules **103** and/or power sources **101** establishes and maintains the activation of switch **BP1** to be ON continuously at step **1007** until a power module **103** and/or power source **103** becomes inactive. Switch **BP1** at step **1007** may be forward biased with respect to terminals **A** and **B** during bypass mode and the gate (**g**) of switch **BP1** may have voltage applied which may be such that switch **BP1** may be continuously ON for the time period that the non-functioning power module **103** is to be bypassed.

Likewise, the feedback loop responsive to the output of power modules **103** and/or power sources **101** establishes and maintains the deactivation of switch **BP1** to be OFF continuously at step **1011** until a power module **103** and/ or power source **103** becomes once again inactive. Switch **BP1** may be reverse biased with respect to terminals **A** and **B** during bypass mode and voltage applied to the gate (**g**) of switch **BP1** may be such that switch **BP1** is continuously OFF for the time period that the functioning power module **103** is required not to be bypassed at step **1011**. Inherent stabilization may occur when switch **BP1** may be ON at step **1007,** so that as the drain to source voltage Vds falls, the gate (**g**) to source (**s**) voltage Vgs also falls. Similarly, stabilization of bypass circuit **115c** may be established when switch **BP1** may be OFF at step **1011,** so that as the drain (**d**) to source (**s**) voltage Vds rises, the gate (**g**) to source (**s**) voltage Vgs also rises.

Reference is now made to Fig. IS, which shows a power system **100c,** according to illustrative embodiments. Connection configuration **104a** shows power source **101** with direct current (DC) output terminals coupled to input terminals of power module **103** at terminals **C** and **D.** Power module **103** has a bypass circuit **115** coupled to the output terminals of power module **103** at terminals **A** and **B.**

Connection configuration **104c** shows multiple power sources **101** outputs coupled to respective bypass circuits **115** at terminals **A** and **B.** The multiple power sources **101** outputs may be coupled in a series connection with direct current (DC) output terminals of the series connection coupled to the input terminals of power module **103** at terminals **C** and **D.** A bypass circuit **115** may be coupled to the output terminals of power module **103** at terminals **A** and **B.**

The outputs of power modules **103** may be coupled in series to form a series coupled string of power module **103** outputs. The series coupled string of power module **103** outputs, with a voltage output Vstring may be coupled across the input of system power device 139. System power device 139 may be a direct current (DC) to DC converter or may be DC to alternating current (AC) inverter supplying power to load **107.**

Assuming power sources **101** may be photovoltaic (PV) panels, if a panel is shaded with shade **155,** as shown in connection configuration **104c,** the current **(Isource)** passing through the shaded panel may be offered an alternative, parallel path around the inactive panel, and the integrity of the shaded panel may be preserved. The purpose of bypass circuits **115** coupled across the outputs of panels/ power sources **101** may be to be the alternative, parallel path to draw the current away from a shaded panel associated with its respective bypass circuit **115.** Bypass circuits **115** become forward biased when their associated shadowed panel becomes reverse biased. Since the panels and the associated bypass circuits **115** may be in parallel, rather than forcing current through the shadowed panels, the bypass circuits **115** draw the current away from the shadowed panels and completes the electrical current to maintain the connection to the next panel in a string of series coupled power sources as shown in connection configuration **104c.** Use of bypass circuits **115** with respect to multiple panels wired in series allows for power to be used from the remaining non-shaded panels whereas placing the bypass circuit on just the output of power module **103** only in connection configuration **104c** may prevent utilization of the power produced by the remaining non-shaded panels.

Similarly, if a power module **103** becomes inactive, the current **(Istring)** passing through the inactive power module **103** may be offered an alternative, parallel path around the outputs of the inactive power module **103.** The purpose of bypass circuits **115** coupled across the outputs of power modules **103** may be to draw the current away from the output of an inactive power module **103** associated with its respective bypass circuit **115.** Bypass circuits **115** become forward biased when their associated inactive power module **103** become reverse biased. Since the output of power module **103** and the associated bypass circuits **115** may be in parallel, rather than forcing current through an inactive power module **103,** the bypass circuits **115** draw the current away from the output of an inactive power module **103** and completes the electrical current **Istring** to maintain the connection for current **Istring** to the next power module **103** output in a string of series coupled power module outputs **103** as shown.

It is noted that various connections are set forth between elements herein. These connections are described in general and, unless specified otherwise, may be direct or indirect; this specification is not intended to be limiting in this respect. Further, although elements herein are described in terms of either hardware or software, they may be implemented in either hardware and/or software. Further, elements of one embodiment may be combined with elements from other embodiments in appropriate combinations or sub-combinations. Examples above have utilized analog circuits for implementation of coupling circuits **120** and circuits **111/111a** used to respectively activate or deactivate a bypass of a non-functioning and functioning power module **103** and/or power source output in a series string of power module **103** and/or power source outputs. Alternatively, the non-functioning power module **103** may utilize auxiliary power circuit **162** and sensors **125** to sense a non-functioning power module **103** output so as to bypass the output of the non-functioning power module **103** output by turning switch **BP1** ON (step **1007**). Similarly, sensors **125** may be utilized to sense a functioning power module **103** output so as to not bypass the output of the functioning power module **103** output by turning switch **BP1** OFF (step **1011**).

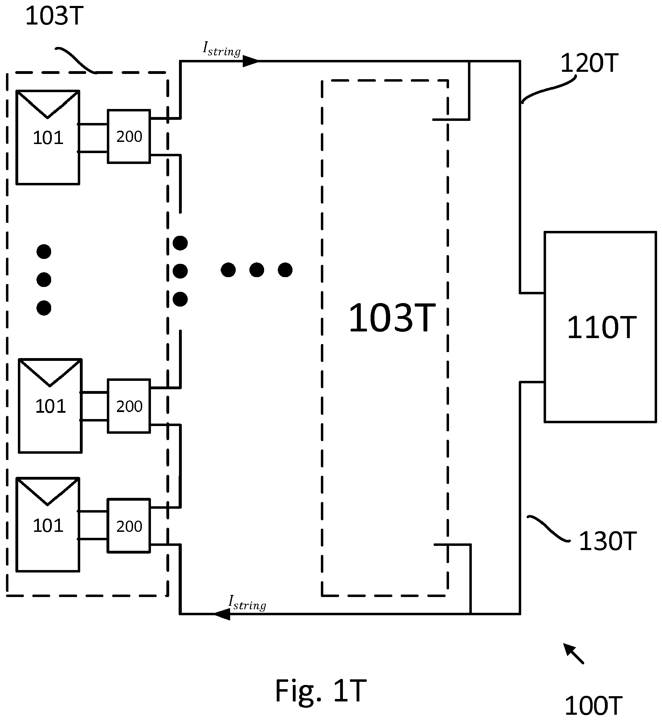

Reference is now made to Fig. 1T, which shows a photovoltaic (PV) system according to illustrative embodiments. Power system **100T** may have multiple PV strings **103T** coupled in parallel between power buses **120T** and **130T.** Each of the PV strings **103** may have multiple power sources **101** and multiple power devices **200.** Power sources **101** may include one or more photovoltaic cell(s), module(s), panel(s) or/or photovoltaic shingle(s). Photovoltaic shingles, are solar panels designed to look like and function as conventional roofing materials, such as asphalt shingle or slate, while also producing electricity. Solar shingles are a type of solar energy solution known as building-integrated photovoltaics (BIPV). According to some aspects, power sources **101** shown as PV generators may be replaced by other power sources, for example, direct current (DC) batteries or other DC or alternating current (AC) power sources.

Each power device **200** may include a control device and a communication device, and may be operated to disconnect a PV generator connected at the power device inputs when receiving (e.g., via the communication device) a command to disconnect PV generators. Power system **100T** may include power buses **120T** and **130T,** which may be input to system power device **110T.**

According to some aspects, system power device **110T** may include a DC/AC inverter (e.g., when the input power is DC power), an AC/AC converter (e.g., when the input power is AC power), and may output AC power to a power grid, to a home, or to other destinations. According to some aspects, system power device **110T** may include or be coupled to a control device and/or communication device for controlling or communicating with power devices **200**. For example, system power device **110** may have a control device such as a microprocessor, digital signal processor (DSP), application specific integrated circuit (ASIC) and/or a field programmable gate array (FPGA) configured to control the operation of system power device **110T.**

System power device **110T** may further include a communication device (e.g., a power line communication circuit, an acoustic communications device and/or a wireless transceiver) configured to communicate with linked communication devices included in power devices **200** and transmit operational commands and/or receive reports from communication devices included in power devices **200**.

According to some aspects, power buses **120T** and **130T** may be further coupled to energy storage devices such as batteries, supercapacitors, flywheels or other storage devices.

According to some aspects, it may be desirable to bypass (e.g., provide a low-impedance current path across) one or more power sources **101** and/or power devices **200**. For example, in case of a malfunctioning or under-producing power source (e.g., PV generator) **101** or a malfunctioning PV power device **200,** it may be beneficial to bypass the malfunctioning or under-producing PV module to enable continued power production from power system **100T.**

Safety regulations may define a maximum allowable voltage between power buses **120T** and **130T** and any other point in power system **100T,** during both regular operating conditions and during potentially unsafe conditions. Safety regulations may also define a maximum allowable voltage between any two voltage points in power system **100T**. In some scenarios, in may be beneficial to bypass (e.g., by short-circuiting and/or disconnecting) one or more of power sources **101** in a PV string **103T** in response to an unsafe condition in power system **100T.**

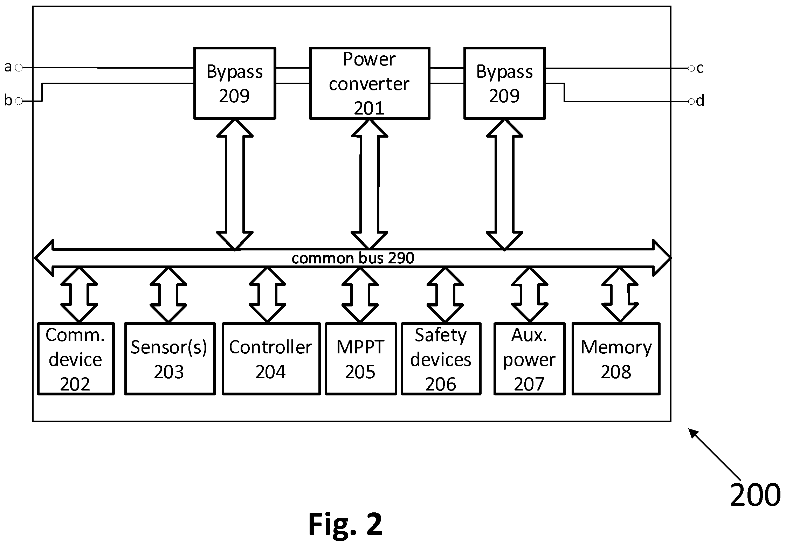

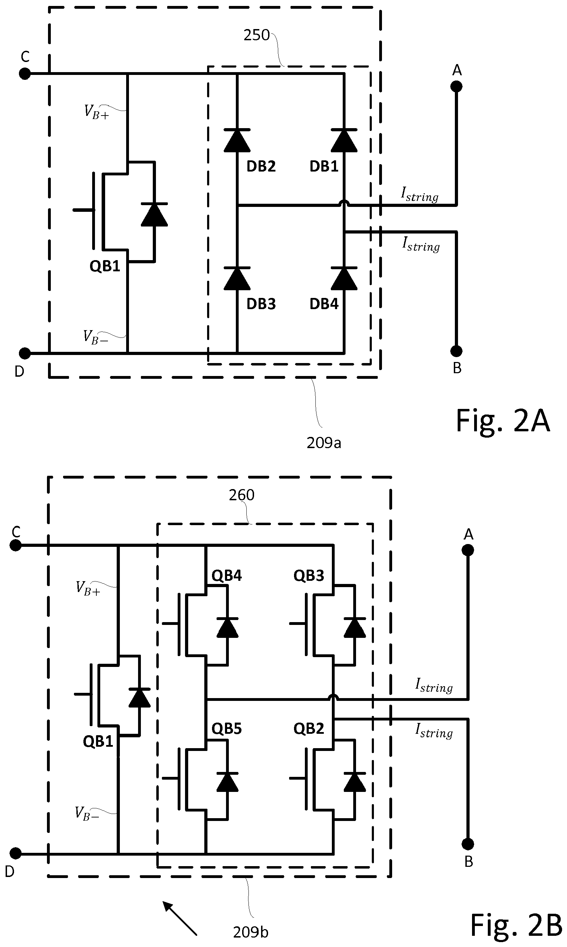

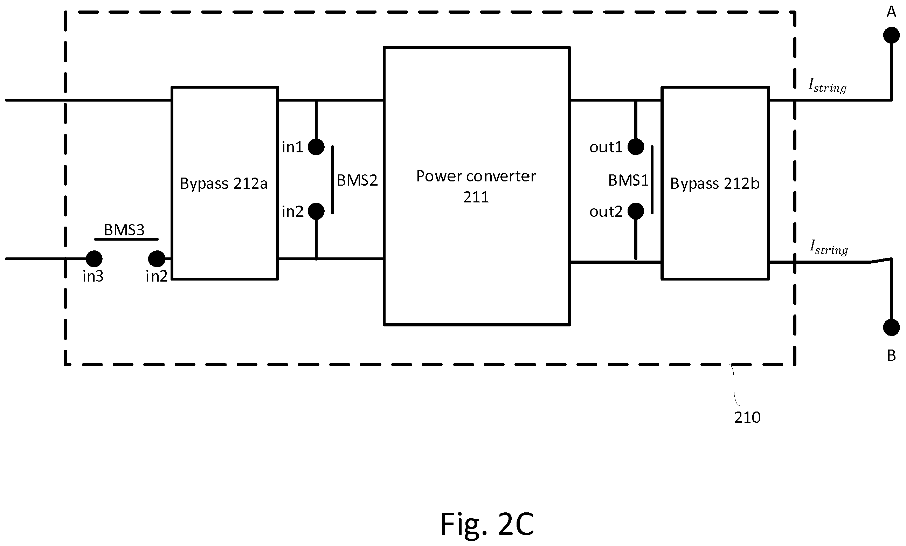

Reference is now made to Fig. 2, which illustrates circuitry that may be included in a power device such as power device **200,** according to aspects of the disclosure herein. Power device **200** may include power converter **201**. Power converter **201** may include a DC/DC converter such as a Buck, Boost, Buck/Boost, Buck+Boost, Cuk, Flyback, charge pump and/or forward converter. According to some aspects, power converter **201** may include a DC/AC converter (also known as an inverter), such as a micro-inverter. Power converter **201** may have two input terminals and two output terminals, which may be the same as the input terminals and output terminals of power device **200**. According to some aspects, power device **200** may include an MPPT circuit **205,** configured to extract increased power from a power source coupled to power device **200**. According to some aspects, power converter **201** may include MPPT functionality. According to some aspects, MPPT circuit **205** may implement impedance matching algorithms to extract increased power from a power source coupled (e.g., directly connected) to the input of power device **200**.

Power device **200** may further include a controller **204** such as an analog control circuit, a microprocessor, Digital Signal Processor (DSP), Application-Specific Integrated Circuit (ASIC), and/or a Field Programmable Gate Array (FPGA). Controller **204** may control and/or communicate with other elements of power device **200** over common bus **290**. According to some aspects, power device **200** may include circuitry and/or sensor(s)/sensor interface(s) **203** configured to measure parameters directly or receive measured parameters from connected sensor(s)/sensor interface(s) **203** configured to measure parameters on or near the power source, such as the voltage and/or current and/or power output by the power source. According to some aspects, sensor(s)/sensor(s) interfaces **203** may be configured to sense parameters on the output of power device **200**. According to some aspects, the power source may be a PV generator including PV cells, and sensor(s)/sensor interface(s) **203** may directly measure or receive measurements of the irradiance received by the PV cells, and/or the temperature on or near the PV generator.

According to some aspects, power device **200** may include communication device **202,** configured to transmit and/or receive data and/or commands from other devices such as system power device **110T** of Fig. 1T. Communication device **202** may communicate using power line communication (PLC) technology, acoustic communications, or wireless communication technologies such as ZIGBEE™, BLUETOOTH™, Wi-Fi, cellular communication or other wireless methods. According to some aspects, power device **200** may include a memory device **208,** for logging measurements taken by sensor(s)/sensor interface(s) **203** to store code, operational protocols or other operating information. Memory device **208** may be flash, electrically erasable programmable read-only memory (EEPROM), random access memory (RAM), solid state devices (SSD) or other types of appropriate memory devices.

Power device **200** may have safety devices **206** (e.g., fuses, circuit breakers and/or Residual Current Detectors). Safety devices **206** may be passive or active. For example, safety devices **206** may include one or more passive fuses disposed within power device **200** and designed to melt when certain current flows through it, disconnecting part of power device **200** to avoid damage. According to some aspects, safety devices **206** may have active disconnect switches, configured to receive commands from a controller (e.g., controller **204**) to disconnect portions of power device **200,** or configured to disconnect portions of power device **200** in response to a measurement measured by a sensor (e.g., sensor(s)/sensor interface(s) **203**). According to some aspects, power device **200** may have an auxiliary power circuit **207,** configured to output power suitable for operating other circuitry components (e.g., controller **204,** communication device **202**). Communication, electrical coupling and/or data-sharing between various components of power device **200** may be carried out over common bus **290**.

Power device **200** may have a bypass circuit **209** (also referred to herein as "safety module") coupled between the inputs and/or outputs of power converter **201**. According to some aspects, bypass circuit **209** may be coupled to the inputs **a** and **b** of power device **200**. According to some aspects, bypass circuit **209** may be coupled to the outputs **c** and **d** of power device **200**. In the illustrative power device **200** shown in Fig. 2, a first bypass circuit **209** may be connected between the inputs **a** and **b** to power device **200** (e.g. bypass circuit **209a** as shown in Fig. 2A), and a second bypass circuit **209** (e.g., bypass circuit **209b** as shown in Fig. 2B) may be connected between the outputs **c** and **d** of power device **200**. Bypass circuit **209** may be controlled by controller **204**. If an unsafe condition, malfunction and/or underperformance condition is detected, according to some aspects, controller **204** may enable bypass circuit **209,** bypassing the inputs **a** and **b** to power device **200**. Bypass circuit **209** may bypass the inputs **a** and **b** to power device **200** by short circuiting the outputs **c** and **d** and/or short circuiting the inputs **a** and **b.** According to some aspects, bypass circuit **209** may disconnect an input, a or b of power device **200** from the outputs **c** and **d** of power device **200** and short circuit the outputs **c** and **d** of power device **200**.

According to some aspects, bypass circuit **209** may be integrated in power converter **201**. For example, power converter **201** may have multiple switches (e.g., metal-oxide-semiconductor field-effect transistors (MOSFETs) such as shown in Fig. 2B) that may be used for power conversion under safe conditions, and may short circuit either the inputs or outputs of power converter **201** under unsafe conditions such as a malfunction condition or an underproduction condition. According to some aspects, bypass circuit **209** may provide bidirectional bypass functionality, while also allowing a regulated voltage for controlling switches of power converter **201.**

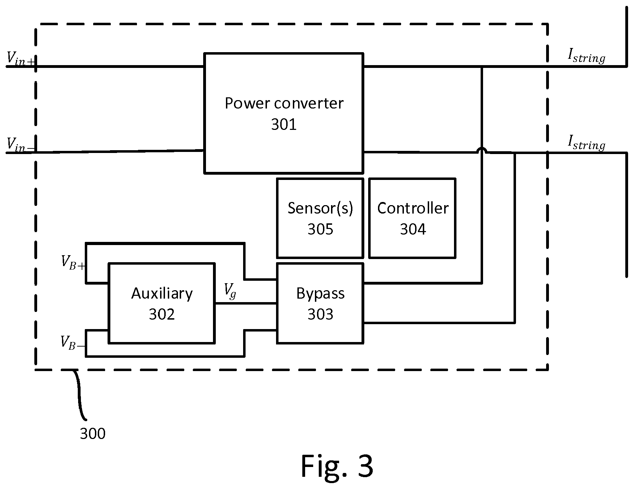

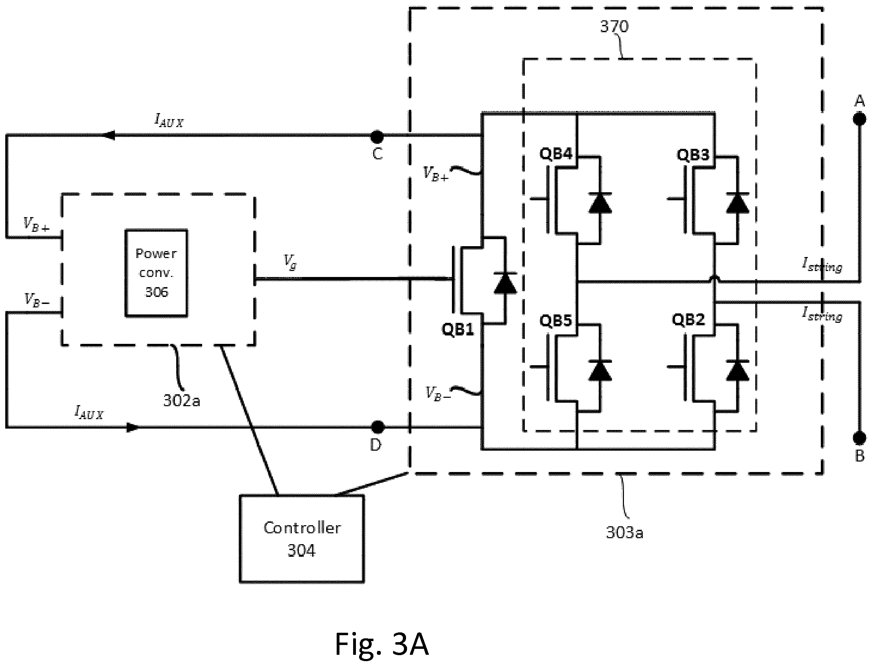

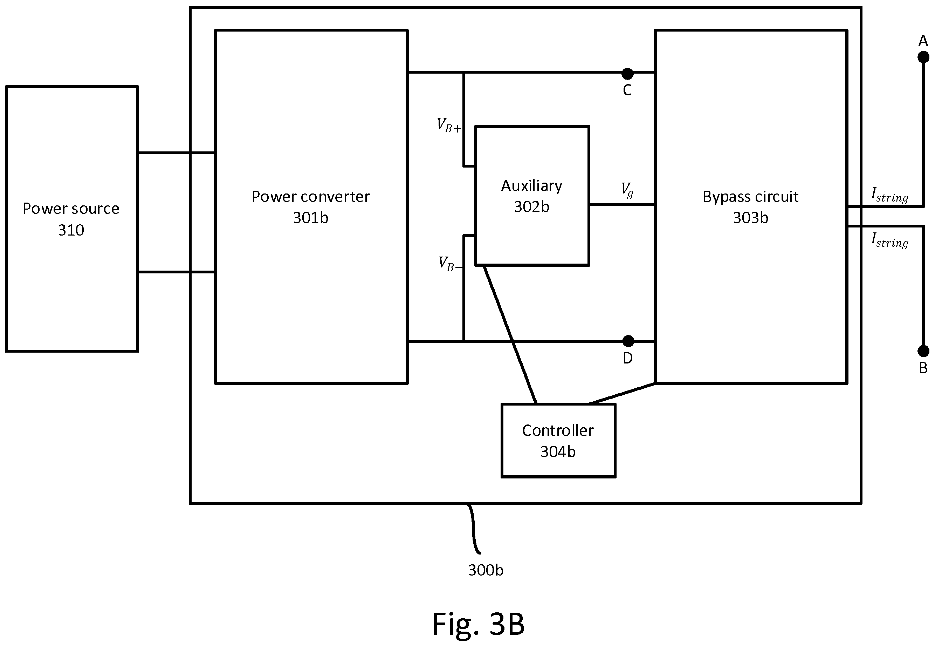

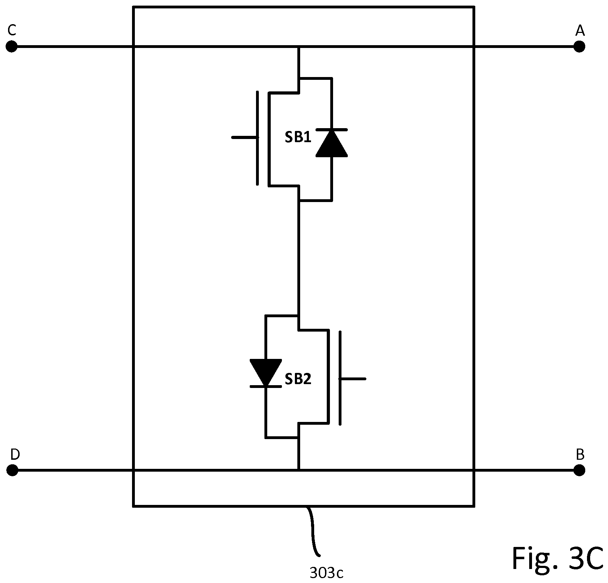

Reference is made to Fig. 2A, which illustrates circuitry that may be included in bypass circuit **209a**. Fig. 2 illustrates two bypasses **209** as part of power device **200,** and in series with power converter **201**. According to some aspects, a bypass circuit **209a** may be in parallel to the power device. Bypass circuit **209a** may have a first input **A** and a second input **B,** where inputs **A** and **B** may be connected to a power string, for example, as part of PV string **103** of Fig. IT. Bypass circuit **209a** may include a diode bridge **250** including diodes **DB1-DB4**. A switch (e.g., MOSFET) **QB1** may be connected between the output nodes **C** and **D** of the diode bridge **250** in bypass circuit **209a**. According to some aspects, power systems supported by embodiments herein, a string current $I_{string}$ may be in DC form. For example, bypass circuit **209a** may be coupled to a power converter connected to a battery, where the battery may be charged (resulting in current flow from node **A** to node **B**) and discharged (resulting in current flow from node **B** to node **A**). When $I_{string}$ is flowing from point **A** to point **B,** $I_{string}$ may enter bypass circuit **209a,** flow through **DB2** and reach switch **QB1**. When bypass circuit **209a** is disabled, switch **QB1** is OFF, bypass circuit **209a** may effectively operate as an open circuit, and the string current $I_{string}$ may flow through and be processed by a power converter (e.g., a micro-inverter) coupled in parallel with bypass circuit **209a** (not explicitly shown in Fig. 2A, but shown in Fig. 3). When bypass circuit **209a** is enabled, switch **QB1** is ON and $I_{string}$ flows through switch **QB1** and diode **DB4,** out of bypass circuit **209a** to point **B.** In some scenarios (e.g. discharging a battery), $I_{string}$ may flow from point **B** to point **A.** $I_{string}$ may enter bypass circuit **209a** and flow through diode **DB1** and reach switch **QB1**. When bypass circuit **209a** is disabled, switch **QB1** is OFF and bypass circuit **209a** is an open circuit. When bypass circuit **209a** is enabled, switch **QB1** is ON and $I_{string}$ may flow through switch **QB1** and diode **DB3,** out of bypass circuit **209a** to point **A.**

According to some aspects, $I_{string}$ may be in an AC form (e.g., when power converter **201** is a DC/AC converter), and the $I_{string}$ current may flow from **A** to **B** during a first part of a cycle and from **B** to **A** during a second part of the cycle. In each flow direction of $I_{string}$, because of the diode bridge **250** in bypass circuit **209a,** the voltage $V_{B+}$ may be larger than $V_{B-}$ which may prevent any current from flowing through the passive diode in switch **QB1**. Because of the diode bridge **250** in bypass circuit **209a,** the voltage on switch **QB1** may be positive ($V_{B+} - V_{B-} > 0$). Because the positive voltage across switch **QB1** may always be positive, the voltage drop across switch **QB1** may be provided to a controller (e.g. an analog or digital controller) configured to drive switch **QB1** to provide a bypass path, according to illustrative features disclosed below.

Reference is now made to Fig. 2B, which illustrates bypass circuit **209b**, where the inputs of bypass circuit **209b** are connected to a string, for example PV string **103** of Fig. 1T. Bypass circuit **209b** may have a MOSFET bridge **260** including MOSFETs **QB2-QB5**. The outputs of the MOSFET bridge **260** in bypass circuit **209b** may be connected with a switch **QB1** between them. According to some aspects, $I_{string}$ may be in DC form. In a scenario where $I_{string}$ is flowing from point **A** to point **B**, $I_{string}$ may enter bypass circuit **209b**, flow through **QB4** (which may be ON or OFF) and reach switch **QB1**. When bypass circuit **209b** is disabled, MOSFET **QB1** may be OFF and bypass circuit **209b** may be an open circuit. When bypass circuit **209b** is enabled, switch **QB1** is ON and $I_{string}$ may flow through switch **QB1** and MOSFET **QB2** (which may be ON or OFF), and may flow through bypass circuit **209b** to point **B**. In some scenarios, $I_{string}$ may flow from point **B** to point **A**. $I_{string}$ may enter bypass circuit **209b** and flow through switch **QB3** (that may be ON or OFF) and reach switch **QB1**. When bypass circuit **209b** is disabled, switch **QB1** may be OFF and bypass circuit **209b** may be an open circuit. When bypass circuit **209b** is enabled, switch **QB1** may be ON and $I_{string}$ may flow through switch **QB1** and MOSFET **QB5** (that may be ON or OFF) through bypass circuit **209b** to point **A**. According to some aspects, $I_{string}$ may be in an AC form and the $I_{string}$ current may flow from **A** to **B** during a first part of a cycle and from **B** to **A** during a second part of the cycle. In each direction of $I_{string}$, because of the MOSFET bridge **260** in bypass circuit **209b**, the voltage level $V_{B+}$ may be larger than voltage level $V_{B-}$ which may prevent substantial current from flowing through the passive diode in MOSFET **QB1**. Because of the MOSFET bridge **260** in bypass circuit **209b**, the voltage on MOSFET **QB1** may be positive ($V_{B+}$ - $V_{B-}$ > 0). Each one of MOSFETs **QB2-QB5** may be ON or OFF when bypass circuit **209b** is enabled and/or disabled, where when MOSFETs **QB2-QB5** are OFF current may flow through the passive diodes in MOSFETs **QB2-QB5,** and when MOSFETs **QB2-QB5** are ON the current may flow through the MOSFETs themselves. MOSFETs **QB1-QB5** may be powered by an external auxiliary power circuit such as auxiliary power circuit **207** of Fig. 2.

According to some aspects, MOSFETs **QB2-QB5** of bypass circuit **209b** may be part of an inverter (e.g., a microinverter). For example, power converter **201** of Fig. 2 may be an inverter. When bypass circuit **209b** is disabled, switches **QB2-QB5** may be switched at an inverter frequency (e.g., 10kHz, 20kHz, 100kHz, 200kHz or even higher) and switch **QB1** may be OFF. When bypass circuit **209b** is enabled, switches **QB2-QB5** may switch at a frequency of a grid-frequency of current flowing through $I_{string}$ (e.g., 50Hz or 60Hz) and switch **QB1** may be ON, short-circuiting outputs **C** and **D**. According to some aspects, bypass circuit **209b** may be connected in parallel to a power device, where when bypass circuit **209b** is disabled switch **QB1** is OFF and $I_{string}$ may flow through the power device parallel to bypass circuit **209b**. When switch **QB1** is ON and bypass circuit **209b** is enabled, the outputs of power device parallel to bypass circuit **209b** (which may be the same as points **A** and **B**) may be short-circuited, allowing the current $I_{string}$ to flow through bypass circuit **209b** and bypass the power device.

Reference is now made to Fig. 2C, which shows part of a power device **210** according to one or more illustrative aspects of the present disclosure. Power device **210** may include power converter **211,** which may be the same as power converter **201** of Fig. 2. According to some aspects, power device **212** may have a bypass circuit **212a** configured to bypass the inputs of power device **210**. Bypass circuit **212a** may be configured to provide a bypass path across the outputs of power device **210** and/or disconnect an input of power device **210** from the outputs of power device **210**. According to some aspects, power device **210** may have a bypass circuit **212b** configured to bypass power device **210** and/or power converter **211**. Bypass circuit **212b** may be configured to provide a bypass path by short circuiting the outputs of power device **210**.

According to some aspects, bypass circuit **212b** may be coupled to a bypass circuit having a bimetallic strip **BMS1**. Bimetallic strip **BMS1** may include two materials with different expansion coefficients bonded together. Bimetallic switch **BMS1** may operate as a switch, such that when **BMS1** is heated at a first temperature, the first material including **BMS1** may curve in a first direction and at a second temperature the second material including **BMS1** may curve in a second direction. For example, the first material may curve at a first temperature of 40°C and the second material may curve at a second temperature of 200°C. **BMS1** may be configured to short circuit the outputs of power device **212 out1** and **out2** in response to a state of overheating (for example, when the temperature surrounding **BMS1** is over 200°C) and to disconnect outputs **out1** and **out2** when the temperature is beneath 200°C. The coupling of bypass circuit **212b** with **BMS1** may be such that **BMS1** is positioned in proximity to a certain element in bypass circuit **212b** (e.g., MOSFET or diode). The proximity of **BMS1** to bypass circuit **212b** may be such that **BMS1** may sense a temperature level similar to the certain element in bypass circuit **212b**. When bypass circuit **212b** is enabled and current is flowing through bypass circuit **212b** the temperature of certain elements may rise, and in a state of overheating, **BMS1** may be configured to switch ON, creating another path for the current to flow through other than bypass circuit **212b,** which may lower the temperature at the element of bypass circuit **212b**. According to some aspects, power device **210** may have a bypass circuit **212a**. According to some embodiments, bypass circuit **212a** may be configured to short circuit the outputs of power device **210**. Parallel to bypass circuit **212a** may be a bimetallic switch **BMS2**. **BMS2** may be similar to or the same as **BMS1,** where **BMS1** may be placed between the outputs of power device **210 out1** and **out2** and **BMS2** may be placed between the inputs of power device **210 in1** and **in2**. **BMS2** may be positioned in proximity to a certain element in bypass circuit **212a** (e.g., MOSFET). The proximity of **BMS2** to bypass circuit **212a** may be such that **BMS2** may sense a temperature level similar to the certain element in bypass circuit **212a**. When bypass circuit **212a** is enabled and current is flowing through bypass circuit **212a,** the temperature of certain elements (e.g. a switch **QB1**) may rise, and in a state of possible or potential overheating, **BMS2** may be configured to switch ON, creating another path for the current to flow through, which may lower the temperature in bypass circuit **212b.** According to some aspects **BMS3** may be coupled to the certain element in bypass circuit **212a.**

According to some aspects, power device **210** may include bypass circuit **212a.** A bimetallic strip **BMS3** may be coupled to bypass circuit **212a. BMS3** may be similar to **BMS1,** where **BMS1** may be placed between the outputs of power device **210 out1** and **out2** and **BMS3** may be placed between the low side of the inputs of power device **210,** node **in3,** and power converter **211** low side, node **in2.** According to some aspects, **BMS3** may be positioned in proximity to a certain element of bypass circuit **212a.** In a scenario where bypass circuit **212a** is enabled, and the inputs to power device **210** are short circuited, the temperature of the certain element in bypass circuit **212a** may rise. **BMS3** may be "normally ON" during normal operating conditions, and configured to create an open circuit and mechanically disconnect an input of power device **210** from the outputs of power device **210** which may lower the current flowing through bypass circuit **212a** and specifically the certain element in bypass circuit **212a,** and by lowering the current the temperature on the certain element may drop. According to some aspects, power device **210** may have only a bypass circuit including **BMS1.** According to some aspects, power device **210** may have a bypass circuit including **BMS2.** According to some aspects, power device **210** may have a bypass circuit **BMS3.** According to some aspects, power device **210** may have a bypass circuit including more than one bimetallic switch, such as **BMS2** and **BMS3.**

Bimetallic switches **BMS1** and/or **BMS2** and/or **BMS3** may be used as a primary bypass mechanism of power device **210,** or as a backup bypass mechanism while the primary backup mechanism may be similar to or the same as bypass circuit **209a** of Fig. 2A and/or **209b** of Fig. 2B, where backup bypass mechanism may be needed in a scenario where the primary bypass circuit fails, overheats, etc.

According to some aspects, one or more of bimetallic switches **BMS1-BMS3,** may be replaced with an active electronic switch, for example, a metal-oxide-semiconductor field-effect transistor (MOSFET), insulated-gate bipolar transistor (IGBT), Bipolar Junction Transistor (BJT), relay switch etc. According to some aspects, **BMS1** and/or **BMS2** may be replaced with a passive switch, for example, a diode.

Reference is made again to Fig. 2. According to some aspects, power device **200** may have bypass circuit **209** coupled to the outputs of power device **200.** Bypass circuit **209** may have a bypass circuit similar to or the same as bypass circuit **209a** of Fig. 2A and/or bypass circuit **209b** of Fig. 2B. In some embodiment, bypass circuit **209** may have a bimetallic strip similar to or the same as bimetallic strip **BMS1** of Fig. 2C.

Reference is made again to Fig. 2. According to some aspects, power device **200** may have bypass circuit **209** coupled to the inputs of power device **200.** Bypass circuit **209** may have a bypass circuit similar to or the same as bypass circuit **209a** of Fig. 2A and/or bypass circuit **209b** of Fig. 2B. In some embodiment, bypass circuit **209** may have a bimetallic strip similar to or the same as bimetallic strip **BMS2** of Fig. 2C.

Reference is now made to Fig. 3, which shows a block diagram of part of a power device **300,** according to aspects of illustrative embodiments. Power device **300** may be the same as or similar to power device **200** of Fig. 2, and may include power converter **301,** auxiliary power circuit **302,** bypass circuit **303,** controller **304,** and sensor(s)/sensor interface(s) **305,** which may be similar to or the same as power converter **201,** auxiliary power circuit **207,** bypass circuit **209,** controller **204,** and sensor(s)/sensor interface(s) **203,** respectively. Controller **304** may be operatively connected to sensor(s)/sensor interface(s) **305,** whereby sensor(s)/sensor interface(s) **305** may be operatively connected, to sense parameters of power device **300.** Power converter **301** converts input power on terminals $V_{in+}$, $V_{in-}$ to an output power on the output of converter **301** as string current $I_{string}$. Bypass **303** may be connected across the output of converter **301.** Power to operate bypass **303** as well as power converter **301,** controller **304** and/or sensor(s)/sensor interface(s) **305** may be provided by auxiliary power circuit **302.**

According to some aspects, controller **304** may receive a value of a parameter measured by sensor(s)/sensor interface(s) **305,** for example temperature, voltage and/or current. Controller **304** may compare the value of the measured parameter with a maximum threshold and determine the value of the measured parameter as an unsafe value (e.g., a temperature indicative of overheating of the system, such as 200°C). Controller **304** may enable bypass circuit **303** in response to determining that there is a malfunction and/or underproduction condition in power device **300.** Bypass circuit **303** may short circuit the outputs of power converter **301** and/or outputs of power device **300.** According to some aspects, bypass circuit **303** may be powered by auxiliary power circuit **302** with an output voltage of $V_g$. The output voltage of auxiliary power circuit **302** may be determined by controller **304,** while controller **304** may further determine which switches in bypass circuit **303** to turn ON and OFF and when to turn ON and OFF. Auxiliary power circuit **302** may have an input voltage of $V_{AUX} = V_{B+} - V_{B-}$, where $V_{B+}$ and $V_{B-}$ may be according to the voltage value at the output of bypass circuit **303.**

According to some aspects (not explicitly shown), power converter **301** may include an inverter, which may include a MOSFET bridge (e.g. bridge **260** of Fig. 2B). Power converter **301** may serve as a power converter and/or inverter when power device **300** is enabled and providing power to a solar string having current $I_{string}$. When power device is being bypassed, power converter **301** may serve as the bypass circuit. In an embodiment where power converter **301** serves as a bypass circuit, power converter **301** may include a switch positioned between the two outputs of the MOSFET bridge (e.g. **QB1** of Fig. 2B) in power converter **301**. The switch positioned between the two outputs of the MOSFET bridge may be ON when bypass is enabled and maybe OFF when bypass is disabled.

Reference is now made to Fig. 3A, which shows an illustration of an auxiliary power circuit **302a**, bypass circuit **303a** and controller **304** as part of a power device. Auxiliary power circuit **302a** and bypass circuit **303a** may be the same as or similar to auxiliary power circuit **302** and bypass circuit **303** of Fig. 3. Controller **304** may receive a signal indicating the bypass circuit **303a** should be enabled, or controller **304** may independently determine that bypass circuit **303a** should be enabled. Bypass circuit **303a** may be implemented in a similar way to bypass circuit **209b,** including a bridge **370** of switches (e.g. MOSFETs) **QB2-QB5** where the outputs of the bridge **370** (nodes C and **D**), are coupled to each other via switch (e.g. MOSFET) **QB1.** A first input to auxiliary power circuit **302a** may electrically couple to a first output of bypass circuit **303a** (node C) which may be coupled to the source terminal of switch **QB1.** A second input to auxiliary power circuit **302a** may electrically couple to a second output of bypass circuit **303a** (node **D**) which may be coupled to the drain terminal of switch **QB1.** Auxiliary power circuit **302a** may include a power converter **306.** Power converter **306** may be an AC/DC converter and/or a DC/DC converter. Power converter **306** may be configured to convert power from a lower voltage level e.g. 0.01[V] to a higher voltage level (e.g., 5 V, 12 V, 100 V, 220 V, and higher). The power at the outputs of bypass circuit **303a** may have a voltage value of $V_{B+}$-$V_{B-}$ that may be the same voltage on the inputs to auxiliary power circuit **302a.** The input power to auxiliary power circuit **302a** may be converted by power converter **306** and may be output by auxiliary power circuit **302a.** Auxiliary power circuit **302a** may be configured to provide power to one or more circuits and/or mechanisms in the power device, such as controller **304** and switches **QB1-QB5** of bypass circuit **303a.** Controller **304** may be configured to determine how much power to feed each switch of switches **QB1-QB5.** For example, $I_{string}$ may be an AC current with a value of: $I_{string}$ = 10 [A] at a frequency of: $f = 40[Hz]$ and may flow into a first input of bypass circuit **303a.** Bypass circuit **303a** may be disabled, switch **QB1** may be OFF, and auxiliary power circuit **302a** may draw power from the outputs of bypass circuit **302b** having a voltage value of, for example, $V = V_{B+}$-$V_{B-}$ = 0.5[V]. Auxiliary power circuit **302a** may draw current according to the voltage required by switches **QB1-QB5** (as determined by controller **304**). Auxiliary power circuit **302a** may output a voltage value of $V_g$ with regard to a neutral point, ground or other point. According to some aspects, controller **304** may switch switches **QB2-QB5** at a frequency of $f = 50[Hz]$, such that switches **QB4** and **QB2** are ON when **QB3** and **QB5** are OFF, and switches **QB2** and **QB4** are OFF when **QB3** and **QB5** are ON. Auxiliary power circuit **302a** may draw current from bypass circuit **303a** with a value of, for example, $I_{AUX}$ = 0.01[A]. The current $I_{AUX}$ may be used to power controller **304** as well as auxiliary **302a** and bypass circuit **303a**. According to some aspects, auxiliary power circuit **302a** may include a controller configured to control the switching of switches **QB1-QB5**. In a scenario where controller **304** decides to enable bypass circuit **303a**, switches **QB2-QB5** may be powered and switched at the same rate as when bypass circuit **303a** is disabled. The voltage value of $V = V_{B+}$-$V_{B-}$ may change because **QB1** may be turned ON, creating a voltage drop depending on characteristics (e.g., the drain-to-source resistance) of switch **QB1**, for example, $V = V_{B+}$-$V_{B-}$ = 0.1V. Power converter **306** in auxiliary power circuit **302a** may be configured to convert input ultra-low voltages such as 0.1 V or even lower. When controller **304** enables bypass circuit **303a** and commands auxiliary power circuit **302a** to turn switch **QB1** ON, $I_{AUX}$ may grow accordingly to $I_{AUX}$ = 0.05A, to supply enough power to turn switch **QB1** ON.

Reference is now made to Fig. 3B, which shows part of power device **300b** according to illustrative embodiments. Power device **300b** may include power converter **301b,** auxiliary power circuit **302b** and controller **304b** which may be the same as or similar to power converter **201,** auxiliary power circuit **207** and controller **204** of Fig. 2. According to some aspects, power device **300b** may be coupled to power source **310**. Power source **310** may be a source which at times provides power and at times receives power, for example a battery. According to some aspects, $I_{string}$ may be in DC form during each period of time. When power source **310** is providing power, the current $I_{string}$ may flow from **A** to **B** and when power source **310** is receiving power, $I_{string}$ may flow from **B** to **A.** In an embodiment where $I_{string}$ is in DC form, power converter **301b** may be a DC/DC converter. Power device **300b** may have a bypass circuit **303b** configured to bypass power converter **301b** and/or power source **310**. Bypass circuit **303b** may be a component of power device **300b** or power converter **301b** or an independent device configured to couple to the outputs of power device **300b** or power converter **301b.**

Reference is now made to Fig. 3C, which shows a bypass circuit according to illustrative embodiments. Bypass circuit **303b** of Fig. 3B may be implemented similarly to bypass circuit **303c** of Fig. 3C, having a first switch **SB1** and a second switch **SB2** connected in series. Switches **SB1** and **SB2** may be coupled to outputs **A** and **B,** and nodes **C** and **D** may be coupled to the outputs of power converter **301b.** Bypass circuit **303b** may be configured to turn switches **SB1** and **SB2** ON when bypass circuit **303b** is enabled, and turn switches **SB1** and **SB2** OFF when bypass **303b** is disabled. Bypass circuit **303b** may receive power from auxiliary power circuit **302b**. Controller **304b** may be configured to decide to enable bypass circuit **303b** and/or disable bypass circuit **303b**. When bypass circuit **303b** is disabled and power device **300b** is transferring power from power source **310** to the outputs **A** and **B** of power device **300b** or transferring power from outputs **A** and **B** of power device **300b** to power source **310**, the voltage drop across bypass circuit **303b** may be the same as or similar to the voltage between points **A** and **B**, for example, 40[V]. Auxiliary power circuit **302b** may have the same or a similar voltage as bypass circuit **302b**, and may transfer power to components in power device **300b**, such as controller **304b**. When bypass circuit **303b** is enabled, outputs **A** and **B** are short circuited using switches **SB1** and **SB2**. The voltage between points **A** and **B** may drop to 1[V]. The voltage across auxiliary power circuit **302b** may drop accordingly. Auxiliary power circuit **302b** may be configured to transfer power under low voltages to bypass circuit **303b**.

According to some aspects, $I_{string}$ may be in AC form. Bypass circuit **303b** may be implemented in a manner the same as or similar to bypass circuit **303a**. Power converter **301b** may be a DC/AC inverter. When bypass circuit **303b** is disabled, switch **QB1** (of Fig. 3A) may be OFF and power converter **301b** may receive $I_{string}$ from outputs of power device **300b, A** and **B**. Switches **QB4** and **QB2** may be ON, powered by auxiliary power circuit **302b**. When bypass circuit **303b** is enabled, switch **QB1** may turned ON by controller **304b** and auxiliary power circuit **302b**.

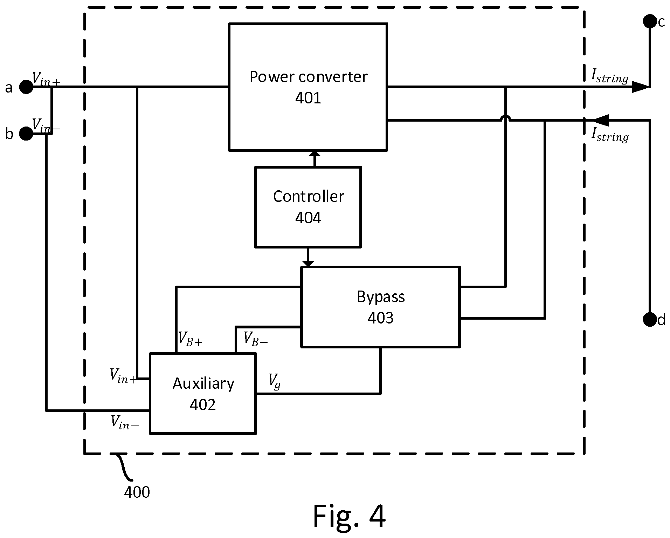

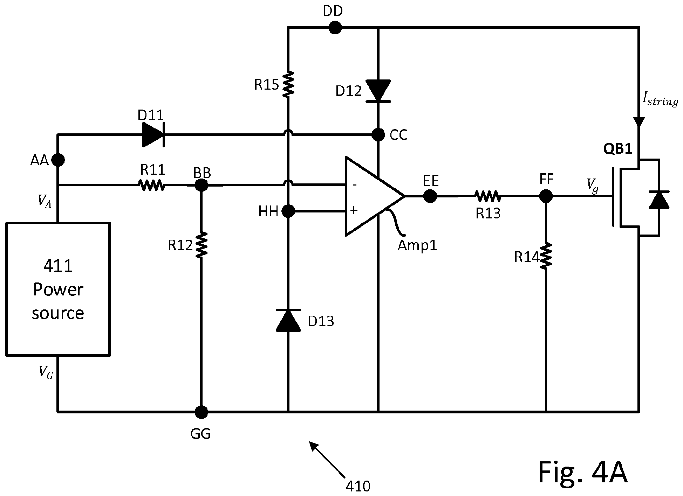

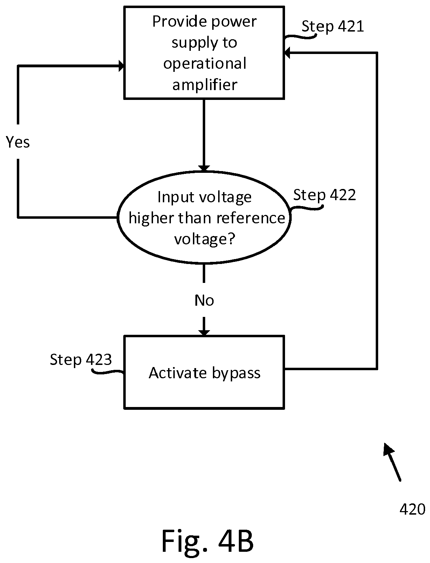

Reference is now made to Fig. 4, which illustrates part of a power device **400** according to illustrative embodiments. Power device **400** may include power converter **401,** auxiliary power circuit **402,** bypass circuit **403,** and controller **404** that may be the same as or similar to power converter **201,** auxiliary power circuit **207,** bypass circuit **209,** nodes **a, b, c, d** and controller **204** of Fig. 2, respectively. Bypass circuit **403** may be coupled to the outputs of power device **400** and/or the outputs of power converter **401** and may be configured to bypass power converter **401**.

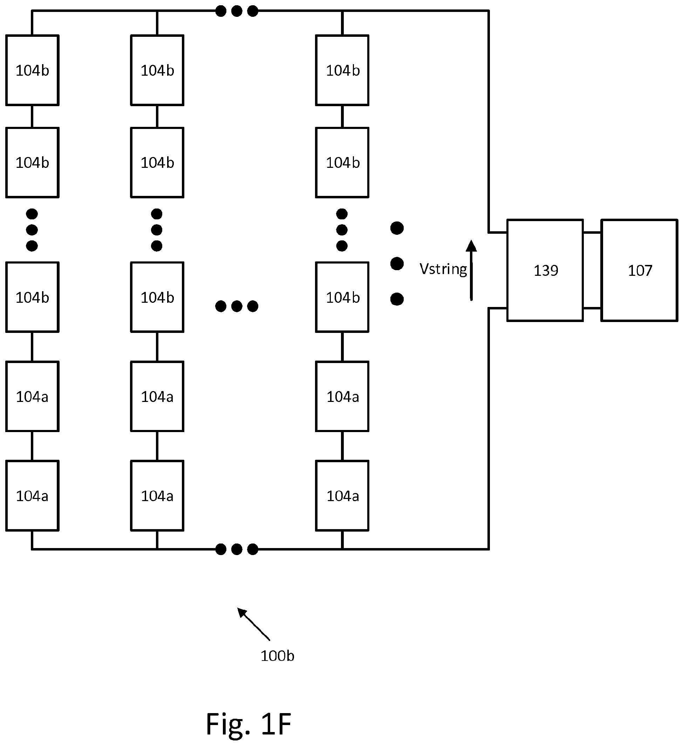

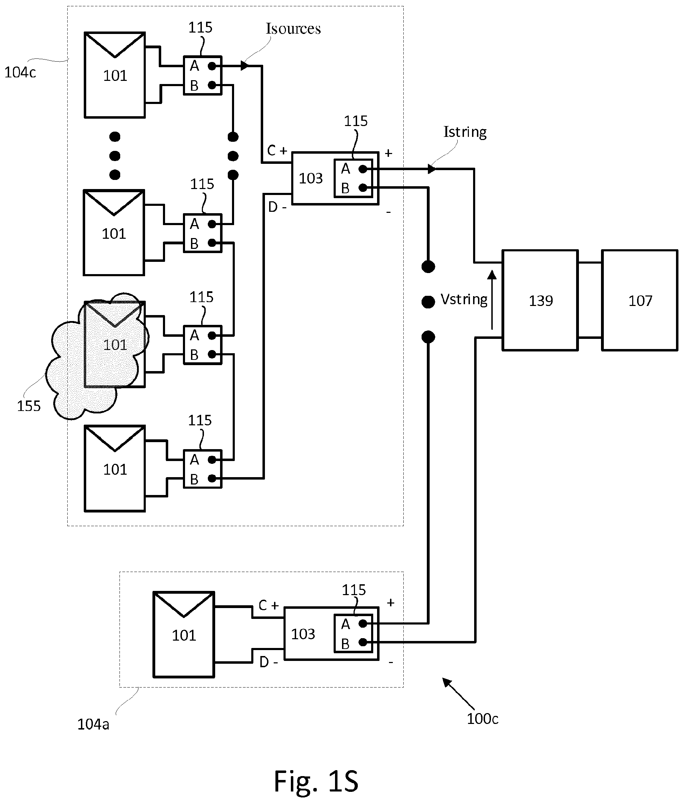

According to some aspects, auxiliary power circuit **402** may receive power from the inputs to power device **400**, a and **b,** with a voltage value of: $V_{in} = V_{in+} - V_{in-}$. Power may be transferred from a power generator (e.g., power generator **101** of Fig. 1) to the inputs **a** and **b** of power device **400**, at a voltage value of $V_{in}$, and the power may flow from a power generator such as power generator **101** of Fig. 1A. Auxiliary power circuit **402** may be electrically coupled to the outputs of bypass circuit **403,** and may receive power from bypass circuit **403** with at voltage value of $V_B = V_{B+} - V_{B-}$. According to some aspects, auxiliary power circuit **402** may extract power from the inputs to power device **400, A** and **B,** rather than from the outputs of bypass circuit **403** that receives power from the outputs of power device **400**, c and **d,** for example, if the current $I_{string}$ is in AC form while auxiliary power circuit requires current and voltage in DC form. According to some aspects, auxiliary power circuit **402** may receive power from the inputs to power device **400,** controller **404** may disable bypass circuit **403,** for example, bypass circuit **403** may comprise multiple MOSFETs (i.e., as shown in bypass circuit **209b** of Fig. 2A), and controller **404** may keep the MOSFETs OFF and not switch them ON and OFF.

In some scenarios, auxiliary power circuit **402** might not be able to receive power from the inputs to power device **400,** for example, if the power generator configured to output power to power device **400** through the inputs of power device **400** is disconnected from power device **400**. In such a scenario (e.g., where power from the inputs to power device **400** is not available), auxiliary power circuit **402** may be powered by power from the outputs of bypass circuit **403**. According to some aspects, auxiliary power circuit **402** may have a logic block (e.g., circuit **410** shown in Fig. 4A) configured to extract power from the inputs of power device **400** or from bypass circuit **403**.

Reference is now made to Fig. 4A, which illustrates a circuit **410** configured to disable and enable a bypass circuit. Circuit **410** may be part of a power device, such as power device **400**. The bypass circuit may be enabled when a switch **QB1** is ON and disabled when switch **QB1** is OFF. Switch **QB1** may be the same as or similar to switch **QB1** of Fig. 3A. Switch **QB1** may be a MOSFET disposed between points **DD** and **GG**. Switch **QB1** may be configured to bypass a power source **411** and/or a power device including circuit **410**. Power source **411** may have a first output **AA** and a second output point **GG**. Point **GG** may be used as a reference point in circuit **410** and may be referenced to as a relative ground. Circuit **410** may have a resistor **R11** disposed between output **AA** and a point **BB**. Point **BB** may be an input to an amplifier **Amp1**. Amplifier **Amp1** may have a negative input and a positive input. Point **BB** may be at the negative input to amplifier **Amp1**. The positive input to amplifier **Amp1** may be point H. Between points **HH** and **GG** may be a diode **D13** configured to allow current to flow from **GG** to H and to apply a set voltage (e.g., 0.3V, 0.5V, 0.7V, IV) difference between **GG** and H, setting a reference voltage on the positive input to amplifier **Amp1**. Resistor **R12** may be disposed between points **BB** and **GG**. Resistors **R11** and **R12** may be configured to function as voltage divider in relation to the voltage of power source **411**, $V_A - V_G$. Amplifier **Amp1** may have a first output at point **EE**. Switch **QB1** may have a drain terminal connected to point **DD,** a source terminal connected to point **GG** and a gate terminal connected to point **FF**. Resistor **R13** may be disposed between points **EE** and **FF** and resistor **R14** may be disposed between points **FF** and **GG**. $V_g$ may be the voltage at point **FF,** where it may be defined by the output voltage from amplifier **Amp1**. $V_g$ may be the voltage at the gate to switch **QB1**. Point **CC** may be the positive power supply on amplifier **Ampl** and point **GG** may be the negative power supply on amplifier **Amp1**. Resistor **R15** may be disposed between points **HH** and **DD**. Between point **CC** and **DD** may be a diode **D12** configured to set a voltage difference between point **CC** and point **DD**. A second diode **D11** may be disposed between points **AA** and **CC**.

Amplifier **Ampl** may be connected between terminals **CC** and **GG** for receiving operational power from power source **411** via diode **D11** or from the voltage across switch **QB1,** via diode **D12**. According to the illustration of Fig. 4A, if the voltage across power source **411** is higher than the voltage across switch **QB1,** the operational power for amplifier **Ampl** will be drawn from power source **411,** and if the voltage across power source **411** is lower than the voltage across switch **QB1,** the operational power for amplifier **Ampl** will be drawn from across switch **QB1.** This may provide the advantage of enabling power supply from power source **411** if power source **411** is available (which may increase efficiency), and enabling power supply from across switch **QB1** if power source **411** is unavailable (e.g., if power source **411** is a disconnected or malfunctioning power source, or a shaded photovoltaic generator).

Optionally, diodes **D12** and **D11** may be removed, and terminal **CC** may be directly connected to terminal **DD** (enabling drawing operational power to amplifier **Ampl** from across switch **QB1**) or to terminal **AA** (enabling drawing operational power to amplifier **Ampl** from power source **411**).

Reference is now made to Fig. 4B, which shows a method **420** for enabling bypass according to illustrative embodiments. Method **420** may be implemented by one or more circuits, analog and/or digital, for example circuit **410** of Fig. 4A. Step **420** may include providing power to an amplifier and/or an operational amplifier (e.g., **Ampl** of Fig. 4A). The operational amplifier may have a positive power supply, and a negative power supply. According to some aspects, the positive power supply may be equal to the absolute value of the negative power supply. According to some aspects, the positive power supply may be different than the absolute value of the negative power supply, for example, the positive power supply may be 1[V] compared to a relative ground and the negative power supply may be 0[V] compared to the relative ground. The negative power supply may be connected to the negative end of a power source. The negative end of the power source may be related to as a relative ground. The positive power supply may draw power from a node common to a first diode and a second diode. The first diode (e.g. **D11** of Fig. 4A) may be connected to the output of the power source, and the second diode (e.g. **D11** of Fig. 4A) may be connected to the positive side of a switch configured to enable bypass when ON and disable bypass when OFF (e.g. **QB1** of Fig. 4A). The switch may be a MOSFET where the drain may be a positive side of the switch, and the source of the switch may be the negative side of the switch. The positive power supply of the amplifier may get the voltage value of the higher voltage between the power source and the positive side of the switch.

Step **422** of method **420** may include inputting a first voltage into the negative input of the operational amplifier and a second voltage to the positive input of the operational amplifier. The positive voltage may be related to as a reference voltage. The reference voltage may be connected to the relative ground with a diode (e.g. **D13** of Fig. 4A). The diode may be configured to maintain a set voltage relative to the ground. The positive input to the amplifier may be connected to the positive end of the power source through a voltage divider (e.g. **R11** and **R12** of Fig. 4A), to maintain a voltage level appropriate to the voltage levels that the operational amplifier may receive. The operational amplifier may be configured to compare the voltage level received from the positive end of the power source with the reference voltage. The voltage level need for the negative input to be greater than the reference positive input may be determined by the voltage divider connecting the positive end of the power source with the negative input to the amplifier, and the diode connecting the relative ground and the positive input. In a scenario where the negative input is greater than the positive input, the operational amplifier may output a voltage value similar to the relative ground. The output of the amplifier may be connected to the relative ground with two resistors in series (e.g. **R13** and **R14** of Fig. 4A). The switch configured to enable bypass may have a gate connected to a point between the two resistors in series, where the two resistors may be configured to be a voltage divider. In such a scenario, where the output voltage of the amplifier is the similar to the relative ground, the voltage difference between the output of the amplifier, the voltage in between the two resistors and the relative ground may be substantially zero with regard to voltage needed to activate the switch. As long as power is supplied to the operational amplifier, the comparison between the negative input and the positive input to the amplifier is done.

In a scenario where the negative input to the amplifier is less than the positive input, the output from the amplifier may be similar to the positive power supply. The positive power supply may be substantially greater than the relative ground, creating a differential voltage between the output of the amplifier and the relative ground. The voltage divider connected to the output of the amplifier may set a voltage level (depending on the ratio between the resistors of the voltage divider) at the gate of the bypass switch high enough to activate the switch and enable the bypass circuit, step **423**. Bypass may continue as long as the voltage level at the negative input of the amplifier is lower than the reference voltage level at the positive input to the amplifier.

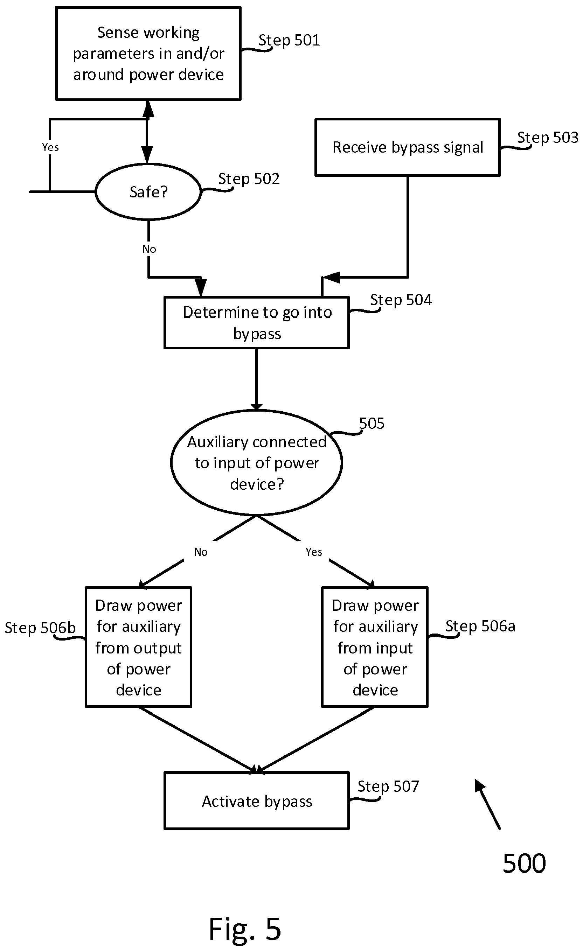

Reference is now made to Fig. 5, which shows a method **500** for enabling bypass according to an embodiment. A power system may have one or more strings of one or more power devices connected in parallel and/or series. Each one of the power devices may be coupled to a power generator. Each one of the power devices may extract power from the power generators to the common string. The common string may carry AC and/or DC current and/or voltage. Method **500** may begin at step **501,** which may include sensor(s)/sensor interface(s) coupled to or housed in one of the one or more power devices sensing operational parameters of the power device and the power generator coupled to the power device. Operational parameters may include input voltage current and/or power to the power device, temperature in and/or surrounding the power device, output voltage current and/or power of the power device, voltage current and/or power in the power device, etc. The sensed values by the sensor(s)/sensor interface(s) may be provided to a controller.

The controller, in step **502,** may evaluate the signal(s) received from the sensor(s)/sensor interface(s) and determine if the measurements are representative of a safe or unsafe, functional or dysfunctional operating condition. If the controller determines the measurements represent a safe operating condition, the controller may control the power device to extract power from the coupled power generator and sense the operational parameters at step **501.** If the controller determines the values of the measured values represent an unsafe, malfunctioning or underproduction operating condition, the controller may activate the bypass of the power device.

The bypass of the power device may be configured to short-circuit the outputs of the power device, and/or disconnect the inputs of the power device from the power generator and/or short circuit the inputs of the power device. According to some aspects, the power device may have a communication device configured to receive and/or send signals to other devices in the power system. The communication device, in step **503**, may receive a bypass signal, or stop receiving a keep-alive signal. The power device may be configured to extract power and couple to the common string as long as long as the keep-alive signal is being received. When the keep-alive signal stops or when the bypass signal is received, the controller may be configured to enable the bypass and/or shutdown the power device, and go into bypass, step **504**.

Enabling the bypass of the power device may include drawing power for an auxiliary power circuit configured to provide power to the bypass circuit. The bypass circuit may include one or more switches (e.g., MOSFETs, BJTs, IGBTs, etc.) configured to open and short circuit the bypass circuit, such as switches **QB1-QB5** of Fig. 3A. According to some aspects, the auxiliary power circuit may be configured to draw power from the inputs of the power device. The inputs of the power device may be connected to a power source. According to some aspects, the power source may output power at a level high enough to power the auxiliary power circuit, even in a scenario where the power source is under producing and is to be bypassed. According to some aspects, the auxiliary power circuit may be configured to draw power from the outputs of the power device. A controller may be configured to determine if to draw power from the inputs of the power device or from the outputs, step **505**. The controller may be configured to draw power from the inputs of the power device as long as the power source is outputting enough power to provide and power the auxiliary power circuit.

In some embodiments, where the inputs to the auxiliary power circuit are coupled to the inputs of the power device, step **505** may be followed by step **506a.** The auxiliary power circuit may draw power needed to activate the bypass from the inputs to the power device. The auxiliary power circuit may include a power converter configured to output power suitable to power the bypass circuit that may include providing power to the switches in the bypass circuit. The power drawn from the inputs to the power device to the auxiliary power circuit may be converted to suitable voltage levels needed to activate the bypass circuit. The controller may activate the switches of the bypass circuit according to form of current flowing into the bypass from the common string, using the power drawn from the auxiliary.

According to some aspects, the controller may decide to draw power from the outputs of the power device and not to draw power from the inputs of the power device, step **506b.** The bypass circuit may include a first and a second input coupled to the outputs of the power device. The bypass circuit may further include a first output and a second output coupled to the inputs of the auxiliary power circuit. The auxiliary power circuit may have a power converter configured to output power suitable to power the bypass circuit that may include providing power to the switches in the bypass circuit. The bypass circuit may draw power from the common string and output the amount of power needed to feed the auxiliary power circuit. After receiving the amount of power needed to power the auxiliary power circuit, the controller may activate the switches accordingly. For example, the current and voltage from the common string may be DC current and voltage. The controller may turn multiple switches ON and keep multiple switches OFF depending on the direction of the power flow. According to some aspects, the current and/or voltage may be in an AC form and the direction of the current may be bidirectional. The bypass circuit may be designed as a rectifier configured to ensure a constant direction of current on the outputs of the bypass circuit. The controller may switch the switches in the bypass circuit ON and OFF at a rate that may be proportional to the rate of the current (e.g., the rate of the current may be 50 Hz and the switching rate of the switches may be 50 Hz).

According to some aspects, the auxiliary may be coupled to the outputs of the bypass and to the inputs of the power device. The auxiliary power circuit may have a logic block configured to output either the voltage of the input to the power device or the output of the bypass. For example, the logic block may be configured to perform an "OR" operation on both the voltage of the input to the power device and the output of the bypass, and output the greater one of the two. According to some aspects, the logic block may be configured to output the voltage of the input to the power device as long as the voltage is over a minimum threshold (e.g., 0.1 [V]), otherwise output the voltage of the output to the bypass.

After drawing power to the auxiliary power circuit, step **507** includes activating the bypass. Activating the bypass may be carried out by the controller by turning a switch from OFF to ON and keeping it ON as long as the bypass is enabled. The bypass may be enabled as long as an enablement signal is received, a disable signal has not been received and/or a keep-alive signal has not been received.

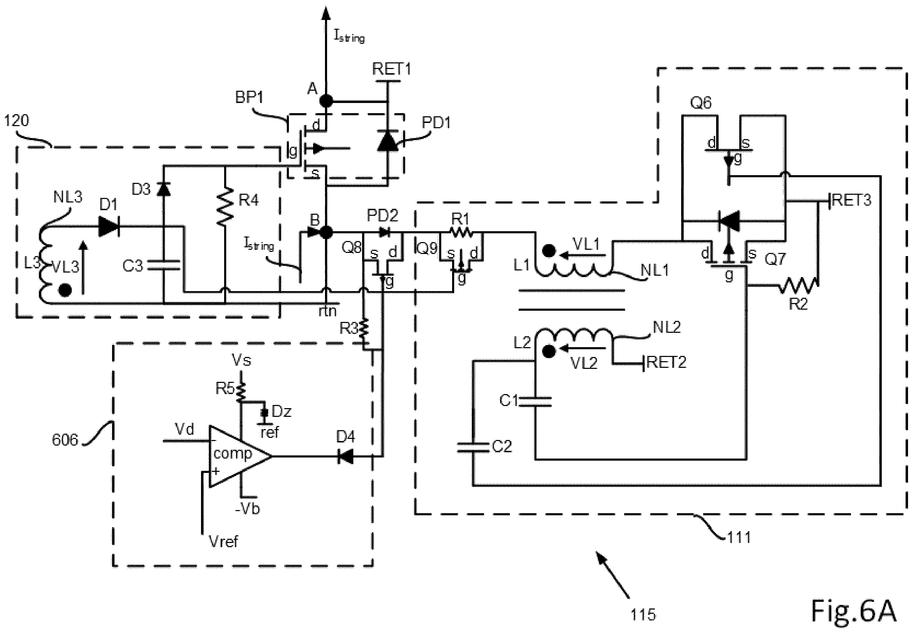

Reference is now made to Fig. 6A, which shows an implementation of a bypass circuit **115,** according to aspects included in the disclosure herein. Coupling circuit **120** may include coupling the gate (g) of switch **BP1** (of Fig. 1G) to cathode of diode **D3** and a first end of resistor **R4**. The anode of diode **D3** may couple to the cathode of diode **D1**, a first end of capacitor **C3** and the gate (g) of switch **Q8**. A second end of resistor **R4** may couple to a second end of capacitor **C3** and terminal **B**. The second end of capacitor **C3** may couple to a first end of inductor **L3** and a second end of inductor **L3** may couple to the anode of diode **D1**. The drain (d) of switch **BP1** may couple to the cathode of diode **PD1** at terminal **A** to give a return connection **RET1**. The anode of diode **PD1** may couple to the source (s) of switch **BP1,** the anode of diode **BD2** that belongs to switch **Q8** and the source (s) of switch **Q8**. The drain (d) of switch **Q8** may couple the source (s) of switch **Q9** and to a first side of resistor **R3**. The gate (g) of switch **Q9** may be coupled to circuit **606**. The cathode of diode **PD2** may be coupled to a first side of resistor **R1**. A second side of resistor **R1** may be coupled to the drain (d) of switch **Q9** and a first end of inductor **L1** of circuit **111**. Switch **BP1** may be a metal oxide semiconductor field effect transistor (MOSFET), which may include diode **PD1** or which might not include a diode. Similarly switches **Q6, Q7** and **Q9** may be MOSFETs, which include a diode like diode **PD2** or which might not include a diode. Switch **Q9** may be a junction gate field-effect transistor (J-FET). According to some aspects, bypass circuit **115** might not have circuit **606**, switch **Q8** and resistor **R1**.

In circuit **111,** a second end of inductor **L1** may couple to the drains (d) of switches **Q6** and **Q7**. The sources (s) of **Q6** and **Q7** may be coupled together to give a return connection **RET2**. A first end of resistor **R2** may couple between the gate of switch **Q7** and the source (s) of switch **Q7**. The gate (g) of switch **Q6** may couple to a first end of capacitor **C2**. A second end of capacitor **C2** may couple to a first end of inductor **L2** and a first end of capacitor **C1**. A second end of inductor **L2** may provide return connection **RET3**. A second end of capacitor **C1** may couple to the gate of switch **Q2**. Return connections **RET1, RET2** and **RET3** may couple together to form a return path that may be separate to terminal **B** at the source(s) of switch **BP1**. Separation between the return path and terminal **B** in bypass circuit **115,** along with the integration of bypass circuit **115** across the input of a power device **200**, may be achieved by disposing switch **Q8** and diode **PD2** between terminal **B** and inductor **L1**. Switches **BP1, Q6** and **Q7** may be metal oxide semiconductor field effect transistors (MOSFETs) and switch **Q9** may be a junction field effect transistor (JFET).

According to some aspects, inductors **L1**, **L2** and **L3** may be mutually coupled on the same magnetic core. In effect, the coupling between inductor **L1** to **L2** and then inductor **L2** to **L3** may provide a possible function of coupling between the output of circuit **111** and coupling circuit **120**. Therefore, the output of circuit **111** across inductor **L1** may be coupled back to the input of coupling circuit **120** via the mutual inductance between inductor **L1** and inductor **L3** and also coupled to inductor **L2** via the mutual coupling between inductor **L1** and inductor **L2**. The mutual inductance between inductor **L1** and inductor **L2** and voltages induced into inductor **L2** drive the gates (g) of switches **Q6** and **Q7** via the coupling of respective capacitors **C2** and **C1**. The mutual coupling between inductor **L1** and inductors **L2** and **L3** may be such that inductors **L2** and **L3** have a greater number of turns across the common magnetic core than inductor **L1** does, so the voltages induced into inductors **L2** and **L3** are greater by virtue of the transformer equations:

$$\frac{VL1}{VL2} = \frac{NL1}{NL2}$$

and

$$\frac{VL1}{VL3} = \frac{NL1}{NL3}$$

where **VL1, VL2** and VL3 are the respective voltages of inductors **L1**, **L2** and **L3,** where NL1, NL2 and NL3 are the respective number of turns of inductors **L1, L2** and **L3**.

The greater voltages induced into inductors **L2** and **L3** by virtue of the greater number of turns NL2 and NL3 may allow for operation of switches **BP1, Q6,** and **Q7,** whereas without the greater voltages induced, switches **BP1, Q6** and **Q7** might not be able to operate otherwise. Inductor **L2** and capacitors **C1** and **C2** in circuit **111** function as a Colpitts oscillator. The frequency of oscillation given by:

$$f_o = \frac{1}{2\pi \sqrt{L_2 \left( \dfrac{C_1 C_2}{C_1 + C_2} \right)}}$$

Inductors **L1**, **L2, L3,** and capacitors **C1** and **C2** may be chosen so that a frequency of oscillation for circuit **111** may be between 1 and 4 Kilohertz (KHz). The low frequency of oscillation of circuit **111** may therefore, provide low losses in the switching of **Q6, Q7** and **Q8.** Alternatively, capacitor **C1** may be replaced with another inductor so that circuit **111** may be implemented as a Hartley oscillator. Inductor **L3** of circuit **120** may be built on the same core as inductors **L1** and **L2** in circuit **111,** diode **D1** may be used to rectify voltages induced on inductor **L3** that may be by virtue of the mutual coupling between inductor **L3** to inductors **L1** and **L2** of circuit **111.** The rectified pulses may drive the voltage (Vgs) between gate (g) and source (s) of the MOSFET of switch **BP1** to turn switch **BP1** ON for continuous conduction of switch **BP1** at step **1007** (see Fig. 1H).

Connected to the gate of switch **Q9** may be a second side of resistor **R3** and circuit **606.** Circuit **606** may be coupled to the gate (g) of switch **Q8** by the anode of diode D4. The output of a comparator **comp** may be coupled to the cathode of diode D4. Comparator **comp** may have a reference voltage Vref at the positive input to comparator **comp,** and Vd at the negative input to comparator **comp.** Vd may be the voltage from a power source and/or the voltage from the power device housing bypass circuit **115.** The positive power supply may be coupled to a first side of resistor **R5** and to the cathode of a zener diode Dz. A second side of resistor **R5** may be coupled to **Vs. Vs** may represent the output voltage of the power source coupled to the power device. The anode of diode **Dz** may be connected to a reference point, where resistor **R5** and diode **Dz** are configured to regulate the positive power supply. The voltage output of comparator **comp** may be configured to either turn switch **Q9** ON or OFF. When comparator **comp** outputs a voltage of -Vb switch **Q9** is ON and when comp outputs a positive voltage relative to Vs, depending on the value of **R5,** switch **Q9** is OFF.

Reference is now made again to Fig. IT with method **1000** of Fig. 1H applied to the further details of coupling circuit **120,** switch **BP1** and circuit **111** in bypass circuit **115** shown in Fig. 1G, according to illustrative embodiments. At step **1003,** switch **BP1** may be coupled across the outputs of a power device **200** where there may be a series string of power device **200** outputs. Switch **BP1** is not active in step **1003.**

At decision step **1005,** specifically a first bypass current conduction of diode **PD1** may be an indication of power device **200** and/or power source **101** not functioning correctly. Consequently, the flow of current ($I_{string}$) through an inactive power device **200** output may become restricted. As a result of restricted current flow, the voltage outputs of the other power devices **200** in the string may attempt to push the current through their outputs and through the inactive power device **200** output. The attempt at pushing current flow of current may be caused by an increase in voltage output of the other power device **200,** which may cause diode **PD1** to become forward biased so that a first bypass current conduction of current occurs through diode **PD1.** Diode **PD1** becoming forward bias also results in diode **PD2** also being forward biased. The forward biasing of diode **PD2** allows the utilization of circuit **111** to initiate a continuous operation of switch **BP1.** Detailed description of the operation of circuit **111** is described later on in the descriptions which follow.

At step **1007,** circuit **111** may initiate the continuous operation of switch **BP1.** As soon as body diode **PD1** conducts, **Q6** and/or **Q7** may be ON, and circuit **605** may maintain the continuous operation of switch **BP1** so that the MOSFET of switch **BP1** is ON such that the voltage (Vds) between drain (**d**) and source (**s**) of switch **BP1** remains low, e.g., from about 10 millivolts (mV) substantially up to 200 mV. A comparison between Vds of 10mV of switch **Q1** and a forward voltage drop 0.7V of a bypass diode to bypass a string current ($I_{string}$) of 25 Amperes gives bypass power losses of 0.25 Watts and 17.5 Watts, respectively. As such, operation of switch **BP1** in bypass circuit **115** and other bypass circuit embodiments described below provide efficient bypass circuits that may allow the bypassing power sources and/or other circuit elements without incurring significant losses by the bypass itself. Bypassing power sources and/or other circuit elements without incurring significant losses may be significant when compared to other ways of providing a bypass that may include the use of bypass diodes, for example.

At step **1007,** return connections **RET1, RET2** and **RET3** may couple together to form a return path **rtn** that may be a separate return path to that provided at terminal **B** at the source (s) of switch **BP1.** Separation between the return path and terminal **B** between coupling circuit **120** and circuit **111** may be by switch **Q9** and diode **BD2.** Consequently, oscillations of circuit **111** may build on the drains of switches **Q6** and/or **Q7,** while the return path for the oscillations may be provided on the sources(s) of switches **Q7** and/or **Q6.**

At decision step **1009,** if inactive power device **200** remains inactive, then the MOSFET of switch **BP1** remains ON so that switch **BP1** remains activated at step **1007.** At decision step 647, if switch **BP1** remains activated at step **1007,** power from auxiliary power circuit **207** may be isolated from being supplied to the inactive power device **200.** However, when power device **200** starts to become active, for example when a panel becomes unshaded that may be sensed by sensors/sensor interfaces **203** and may turn switch **Q8** OFF, power from auxiliary power circuit **207** may be allowed to be resupplied to the switches of power device **200** to allow the functioning of power device **200.** Both the MOSFET and body diode **PD1** of switch **BP1** and diode **PD2** at this point may become reverse biased. The reverse bias voltages of both the MOSFET and diode **PD1** of switch **BP1** applied to the input of circuit **111** at the anode of diode **PD2** may cause the ceasing of the oscillations of circuit **111.** The output oscillations of circuit **111** ceasing when feedback to the input of switch **BP1** via coupling circuit **120** may be sufficient to cause the MOSFET of switch **BP1** to switch OFF, so that switch **BP1** is de-activated at step **1011.** Alternatively, sensors/sensor interfaces **203** under control of controller **204** or some other controller may sense the reverse bias voltages of both the MOSFET and diode **BD1** of switch **BP1**. As a result of the reverse biases being sensed, switch **BP1** may be switched OFF and power from auxiliary power circuit **207** may be allowed to be resupplied to the switches of power device **200** to allow power device **200** to function as normal. The reduction of voltage applied to the gate of the MOSFET of switch **BP1** causes the MOSFET to turn OFF. With the power devices **200** functioning normally switch **BP1** is now inactive (OFF) but still coupled at terminals **A** and **B** (step **1003**).

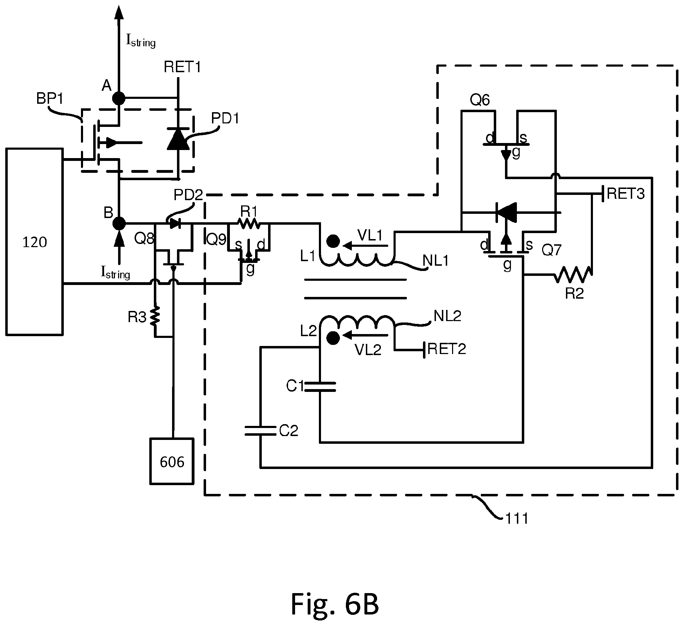

Reference is now made to Fig. 6B, which shows circuit **111,** and a flow chart of Fig. 1K, according to illustrative embodiments. Shown is the connection of circuit **111** to coupling circuit **120** and circuit **606**. Step **1007** (see also Fig. 1H, which shows the steps prior to and after step **1007)** occurs if a power device **200** does not work, so that switch **BP1** draws the current in the series string ($I_{string}$) in a path around the output of an inactive power device **200**. Circuit **111** may be the same as described with regard to Fig. 1G, and may be coupled to bypass switch **BP1**. Switches **Q6** and **Q7** may be biased with resistor **R2.** In operation of circuit **111** when switch **BP1** is OFF and a power device **200** is working correctly at step **1011**, switch **Q9** and diode **PD2** may block leakage current through bypass switch **BP1** and block reverse voltage across bypass switch **BP1** when the voltage at terminal A may be much greater than the voltage at terminal **B**. Conversely when a power device **200** is not working at step **1007,** switch **Q9** is operated by the rectified output provided by diode **D1** so that diode **PD2** is bypassed by switch **Q9** when switch **Q9** may be ON. Switch **Q9** OFF during step **1007** provides a block of leakage current through bypass switch **BP1**. Switch **Q9** being ON may additionally compensate for any drop in voltage across terminals **A** and **B** as a result of switch **BP1** being turned ON and being maintained as ON during step **1007** so as to give headroom for circuit **111** to oscillate. Switch **Q9** and its operation is ignored and is to be considered to be ON, in order to simplify the following description.

In decision step **1203,** if a low amount of power is being produced by a power source **101** and respective power device **200** compared to other power sources **101** and respective power devices **200** in a series string of power device **200** outputs, a first bypass current conduction may therefore be through diode **PD1**. Similarly, if the power source **101** and respective power device **200** has a failure the first bypass current conduction may also be through diode **BD1**.

At step **1205,** the first bypass current conduction may induce a voltage **VL1** across inductor **L1** since diode **PD2** is similarly forward biased as diode **BD1**. At step **637b,** bypass switch **BP1** may be positively biased with respect to output voltage ($V_{AB}$) of power device **200**. Bypass switch **BP1** being positively biased with respect to output voltage ($V_{AB}$) of power device **200** may be a result of power device **200** not functioning. The first bypass current conduction to provide the bypass of current through bypass switch **BP1** may therefore be through diode **PD1,** followed by the conduction of inductor **L1** via diode **PD2** and then by the conduction of inductor **L1** by use of switch **Q6** in a first stage of operation of bypass switch **BP1**.

An example of the low amount of power may be when power sources **101** may be photovoltaic panels that have just begun to be illuminated (e.g., at dawn) or when a photovoltaic panel may be substantially and/or partially shaded. Shading may reduce power generated by a power source **101** (e.g., reducing the power generated by, for example, 20%, 50% or even close to 100% of the power generated by an unshaded power source). If enough power may be produced by power sources **101** in decision step **637a**, circuit **605** may continue to oscillate with an initial use of switch **Q6** for a number of times according to the steps of **637c-637g** described below as part of the first stage of operation of switch **BP1** until the second stage of operation where switch **Q7** and/or **Q6** are used. **Q6** may be implemented using a junction field effect transistor (JFET) rather than a MOSFET since a JFET compared to a MOSFET may have a lower bias input current compared to a MOSFET and a JFET may conduct between source (s) and drain (d) when the voltage between gate (g) and source (Vgs) is substantially zero. **Q6** may also be implemented using a depletion mode FET.

Following on from the first stage with the use of **Q6,** steps **1209, 1211, 1213, 1215,** and **1217** are implemented with the use of switch **Q7** and/or switch **Q6** as part of a second stage of operation of switch **BP1**. The principal of operation for both the first stage and the second stage is that inductor **L1** is mutually coupled to inductors **L3** and **L2** when current flows through inductor **L1**. The mutual coupling is such that when current flows through inductor **L1**, current flows in inductor **L2** and induces a voltage **VL2** into inductor **L2**. Voltage **VL2** may charge the gate (g) of switches **Q7** and/or switch **Q6** (at step **637c**) via capacitors **C1** and/or **C2**. The charging of the gate (g) of **Q7** and/or switch **Q6** may cause switch **Q7** and/or switch **Q6** to start to conduct current between source (s) and drain (d) of switch **Q7** and/or switch **Q6** so that **Q7** and/or switch **Q6** is ON (step **637g**) for a time period *ton*.

The energy induced into inductor **L1** during *ton* may be discharged by a time constant τ[**L1**]

$$\tau[L1] = L1 \times Req$$

where *Req* may be the equivalent resistance that includes resistor **R1** and the respective resistances (Rds) between drain (d) and source (s) when switch **Q6** and/or **Q7** may be ON. The value of respective resistances (Rds) between drain (d) and source (s) when switch **Q7** and/or **Q6** may be ON may be derived from manufacturer data sheets for the particular devices chosen for switches **Q7** and **Q6** as part of the design of circuit **605**. Discharge of inductor **L1** (step **1213)** may continue in decision step **1215** until voltage **VL2** of inductor **L2** in decision step **637f** drops below the threshold voltage of **Q7** and/or switch **Q6** which makes **Q7** and/or switch **Q6** switch OFF (step **1217)** for a time period *toff.* **Q7** and/or switch **Q6** drain (d) voltage then may begin to increase by the ratio:

$$\frac{ton}{toff \times VAB}$$

so that voltage may again increase on **L2** for a time defined by a time constant $\tau$ [**L2**], after which switch **Q7** and/or switch **Q6** conducts again (step **1209**), which may create the oscillation of circuit **111.** The time constant $\tau$ [**L2**] may be given by:

$$\tau[L2] = \sqrt{L2 \times Ceq}$$

where *Ceq* may be the equivalent capacitance that includes capacitors **C1** and **C2** and the parasitic capacitances of switches **Q7** and/or **Q6.** Parasitic capacitances of switches **Q7** and/or **Q6** may be derived from manufacturer data sheets for the particular devices chosen for switches **Q7** and **Q6** as part of the design of circuit **111.** Parasitic capacitances of switches **Q7** and/or **Q6** may or might not be a significant factor in the desired value of time constant $\tau$ [**L2**]. Inductor **L1** coupled to inductor **L3** may cause a voltage to be induced in inductor **L3** when current flows through inductor **L1.** The voltage induced into inductor **L3** may be rectified by diode **D1.** The rectified voltage of diode **D1** may be applied to the gate (g) of bypass switch **BP1** via diode **D3** and resistor **R4,** which may turn bypass switch **BP1** to be ON (step **1007).**

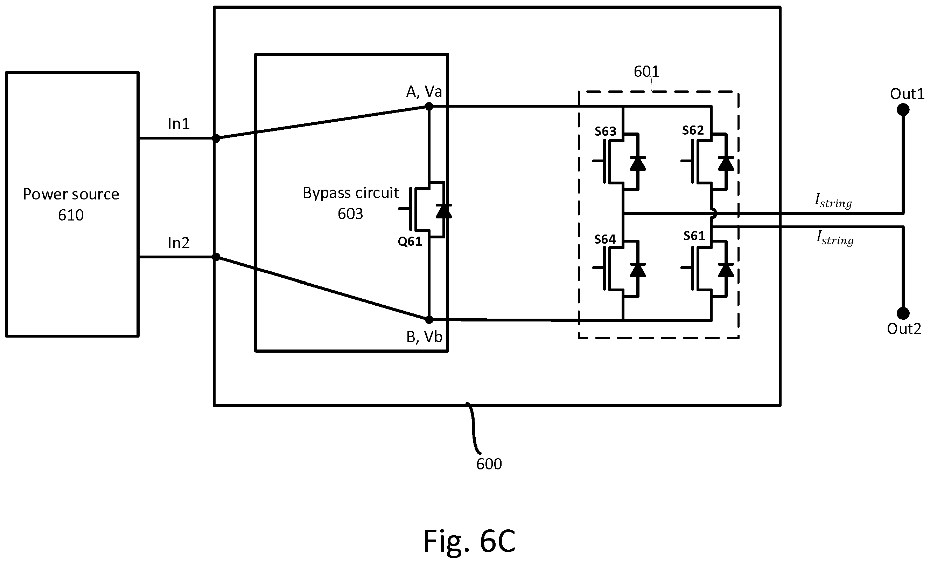

Reference is now made to Fig. 6C, which illustrates a power device **600** according to aspects of the disclosure herein. Power device **600** may be the same as or similar to power device **200** of Fig. 2. According to some aspects, power device **600** may have a first input **In1** and a second input **In2** configured to input power from a power source **610** to power device **600.** Power device **600** may have a first output **Out1** and a second output **Out2.** Power device **600** may be coupled to a power system (e.g. power system 100) with a current ($I_{string}$) via outputs **Out1** and **Out2.** According to some aspects, power device may include a full bridge **601.** Full bridge **601** may include a bridge of four switches (e.g. MOSFETs) **S62-S65.** Full bridge **601** may be configured to transfer power from power source **610** to outputs **Out1** and **Out2** (e.g., full bridge **601** may function as an inverter). In some scenarios, bypass circuit **603** may be disabled, for example, voltage Vd of circuit **606** may be greater than Vref causing the output voltage of comparator comp to be -Vb turning switch **Q8** OFF (where Vd, Vref, circuit **606**, comp, Vb and **Q8** appear in Fig. 6B). In a scenario where power source **610** is producing power at a sufficient level and power device **600** is operating correctly, the voltage of terminal **A** (Va) may be configured to be higher than the voltage of terminal **B** (Vb).

Current may flow from outputs **Out1** and/or **Out2** of power device **600** to power source **610** and power may flow back to outputs **Out1** and/or **Out2.** In some scenarios, bypass circuit **603** may be enabled by turning switch **Q8** of Fig. 6B ON. Switches **S61-S64** of full bridge **601** may have bypass diodes (similar to or the same as diode **PD1** of switch **BP1** of Fig. 6B). Current may enter power device **600** through output **Out1** and/or **Out2** and may reach point **A** flowing through the bypass diodes of switches **S62** or **S63.** Entering bypass circuit **603,** the current may flow from terminal **A** to terminal **B** through circuit **605,** resistor **R1** and switch **Q8** (which appear in Fig. 6B). Flowing from terminal **A** to terminal **B** may provide power to switch **BP1** through coupling circuit **120** turning switch **BP1** ON and providing a path with lower impedance than through circuit **111** of Fig. 1G, while providing enough power through circuit **111** and coupling circuit **120** of Fig. 6A for holding switches **Q9** of Fig. 6B and **BP1** ON. Current may flow from point **B** back to output **Out1** and/or **Out2** through bypass diodes of switches **S64** and/or **S61.** According to some aspects, power on outputs **Out1** and **Out2,** of power device **600** may be in AC form, and power source **610** may be a DC power source. Full bridge **601** may be configured to convert output current from AC to DC when entering power device **600,** and may be configured to output power from power source **610** through power device **600** and out of outputs **Out1** and **Out2** of power device **600.**

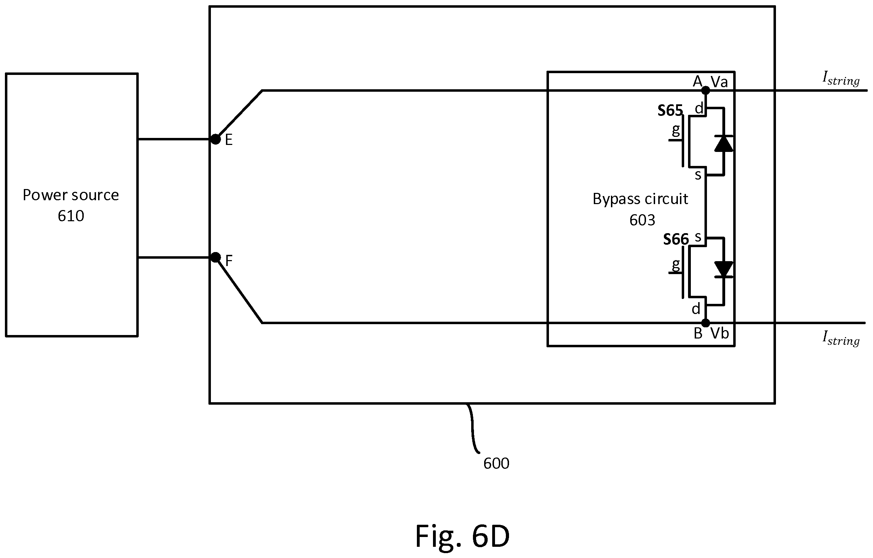

Reference is now made to Fig. 6D, which illustrates aspects of power device **600.** Switch **BP1** of Fig. 6B may be replaced by a first switch **S65** and a second switch **S66.** Switches **S65** and **S66** may be the same as switch **BP1.** Terminal A may be coupled to the drain (d) of switch **S65** and terminal **B** may be coupled to the drain (d) of switch **S66.** The source (s) of switch **S65** may be coupled to the source (s) of switch **S66.** The gate (g) of switch **S65** may be coupled to the gate (g) of switch **S66** as well as to the cathode of diode **D3** and a first side of resistor **R4.** A second side of resistor **R4** may be coupled to the sources of switch **S65** and switch **S66** as well as the second side of capacitor **C3** and the first end of inductor **L3.** The bypass circuit of Fig. 6D may be different than the circuit depicted in Fig. 6B in that switch **BP1** of Fig. 6B is replaced by switches **S65** and **S66** of Fig. 6D, and point **B** of Fig. 6B is attached to the drain terminal of switch **S66** of Fig. 6D instead of the source terminal of switch **BP1** of Fig. 6B.

According to some aspects, power source **610** may function as a load as well as a source (e.g., a battery that functions as a load when charging and functions as a source when discharging). When power source **610** is functioning as a source, $I_{string}$ may flow from terminal **A** to terminal **B,** and when power source **610** is functioning as a consumer, $I_{string}$ may flow from terminal **B** to terminal **A.** When $I_{string}$ is flowing from terminal **A** to terminal **B** and bypass circuit **603** is disabled, switches **S65** and **S66** may be OFF and the bypass diode of switch **S65** may block the current from flowing through switches **S65** and **S66.** Switch **Q8** of Fig. 6B may be OFF preventing current from flowing through circuit **111** of Fig. 6B from terminal **A** to terminal **B.** When current $I_{string}$ is flowing from terminal **B** to terminal **A,** and bypass circuit **115** is disabled, switches **S65** and **S66** may be OFF and the bypass diode of switch **S66** may block current from flowing from terminal **B** to terminal **A** through switches **S65** and **S66.** When bypass circuit **115** is enabled, meaning switch **Q8** is turned ON current may flow from terminal **A** to terminal **B** and/or vice versa through circuit **111** and may provide power to switches **S65** and **S66** through coupling circuit **120** of Fig. 6A. When enough power is provided to the gates (g) of switches **S65** and **S66,** switches **S65** and **S66** may turn ON and $I_{string}$ may flow through switches **S65** and **S66.**

Having switches **S65** and **S66** in series may make it easier to design coupling circuit **120** and circuit **111** and to select the values of the components for one or more reasons. One reason may be creating a symmetric circuit. When switches **S65** and **S66** are coupled in series, the direction of current $I_{string}$ might not affect the voltage values and polarity of Va and Vb. For example, $I_{string}$ may be flowing from terminal **B** to terminal **A** and power source **610** may be functioning as a source. The voltage difference between Va and Vb may be determined according to the operation of power device **600,** e.g. 50V. In a scenario where power source **610** is acting as a load, the voltage difference between Va and Vb may be 50V with $I_{string}$ flowing from **A** to **B.** If switch **BP1** of bypass circuit **115** (Fig. 1G) was not replaced with switches **S65** and **S66** the voltage difference may be Va-Vb = 50V when the power source is functioning as a source and $I_{string}$ is flowing from terminal **A** to terminal **B.** However, when power source **610** is functioning as a load the voltage difference between Va and Vb may be substantially the voltage of body diode **PD1** of switch **BP1,** which may be far lower, for example, 0.7V. Designing bypass circuit **115** to have a constant voltage drop between terminals **A** and **B** regardless of the direction of current flow may make it simpler and cheaper to design a circuit designed to convert to voltage between terminals **A** and **B** to a voltage used for operating the bypass circuit.

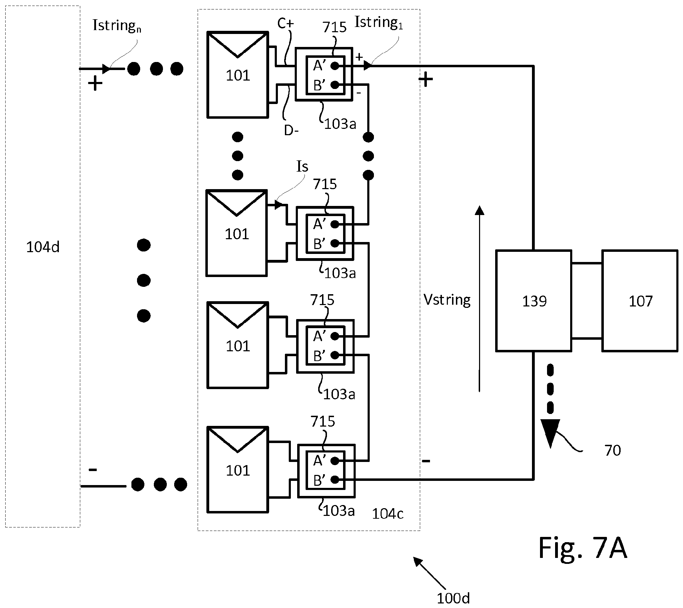

Reference is now made to Fig. 7A, which shows a power system **100d,** according to one or more illustrative embodiments. A connection configuration **104c** is shown connected to system power device **139** at terminals + and -. Multiple connection configurations **104d** may be connected in parallel across terminals + and -. Connection configurations **104d** may be the same as connection configuration **104c** or different from connection configurations **104c.** Connection configuration **104c** may include a series connection (as shown in Fig. 7A) or a parallel connection of the outputs of multiple power modules **103a.** The input to each power module **103a** at terminals **C+** and **D-** may be connected to a respective output of a power source **101.** Power source **101** is shown as a photovoltaic panel. Connection configuration **104d** may include a series connection of the outputs of multiple power modules **103a,** where the input to power module **103a** may be from another source of DC power such as a battery or fuel cell, or rectified AC power from an AC power source such as a wind turbine, grid, or other AC generator.

A safe voltage unit **715** may be included in one or more power modules **103a.** Safe voltage units **715** may be the same as or similar to, and/or may include features of bypass circuits **115, 115a, 115b** and/or **115c** described above, which may be utilized to provide a substantial short circuit across terminals **A'** and **B'.**

When power modules **103a** might not include a power circuit 135 (see Fig. 1B, for example) disposed between terminals **C+, D-** and terminals **A', B',** safe voltage units **715** effectively connect across power sources **101** and terminals **C+, D-** may respectively be terminals **A', B'.**

The communication interfaces **129** (see Fig. 1B) of the power modules **103a** may be configured to communicate with each other, and/or to communicate with the controllers of system power device **139** and/or load **107** (e.g., using power line communications or wireless communication methods). Load **107** may be, for example, a battery, an alternating current (AC) grid, a DC grid, or a DC to AC inverter. The power modules **103a** may also receive, according to features described below, a signal **70** transmitted from system power device **139** and/or load **107.** Signal **70** may be, for example, a "keep alive" signal or a stop signal which may activate or deactivate safe voltage units **715.** Signal **70** may be, for example, a wireless signal, a wired signal (e.g., via power-line communications or via a separate communication wire), or an acoustic signal. Power modules **103a** and utilization of bypass circuits **115, 115a, 115b** and/or **115c** as described above may include a bypass mode for shaded panels, for example, as well as a safety feature provided by use of safe voltage unit **715** described in greater detail in the descriptions which follow, which consider the use of signal **70.**

In the descriptions that follow, by way of a non-limiting example, power modules **103a,** do not include power circuit **135** for DC to DC conversion from input terminals **C+, D-** to output terminals **A', B'.** The non-limiting example may include use of the other features of power module **103/103a** described above. For example, power modules **103a** connected to system power device **139** may provide communication capabilities (e.g., a communication device) and/or control of a bypass and/or safe voltage unit.

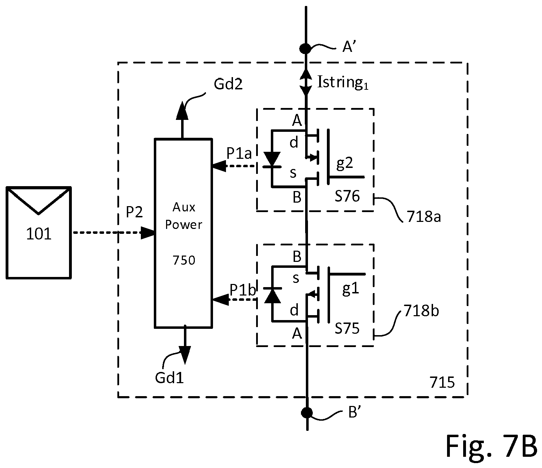

Reference is now made to Fig. 7B, which shows further details of safe voltage unit **715** which may be located and connected to a power module **103a,** according to one or more illustrative embodiments. Two bypass circuits **718a** and **718b** are shown implemented as switches **S76** and **S75,** which may be two MOSFETs with respective body diodes. The body diodes may be an integral part of the MOSFETs or be additionally attached. Switches **S76** and **S75** each may be other types of semiconductor switches or relays that may include diodes that allow a bi-directional flow of current (AC or DC current) between terminals **A'** and **B'** of safe voltage unit **715**.

Switches **S76** and **S75** are implemented by two MOSFETs, the sources (**s**) of the MOSFETs connected at terminals **B** of switches **S76** and **S75** and the drains (**d**) connected to terminals **A'** and **B'** of safe voltage unit **715**. Safe voltage unit **715** further includes an auxiliary power unit **750** that may provide operating power to gate drivers **Gd1** and **Gd2**. The gate drivers may connect respectively to gates **g1** and **g2** in order to make switches **S76** and **S75** turn ON or OFF. Power input to auxiliary power circuit **162** may be power **P2** from power source **101** and/or operating powers **P1a** and **P1b**. Operating powers **P1a** and **P1b** may be provided from current flowing through the body diodes of respective switches **S76** and **S75** according to the conduction of diode **PD1** that may be included in a first stage as described at step **1205** above. Turning ON of switches **S76** and **S75** may be according to the first and second stages of operation of bypass **115** as described above in methods **420, 500** and **1007**. Therefore, in normal operating mode, safe voltage units **715** may be powered by the voltage across the body diodes of switches **S76** and **S75.** The body diodes of switches **S76** and **S75** may be substantially the same as and may provide the same function as diode **PD1** of switch **BP1** described above. Therefore, switches **S76** and **S75** may be considered to be two switches **BP1** connected in series to provide a bi-directional flow of current (AC or DC current) between terminals **A'** and **B'** of safe voltage unit **715**. Bypass circuits **718a** and **718b** may each additionally include circuitries of bypass circuits **115, 115a, 115b** and/or **115c** connected to switches **S76** and **S75** to provide the operating bias to switches **S76** and **S75.**

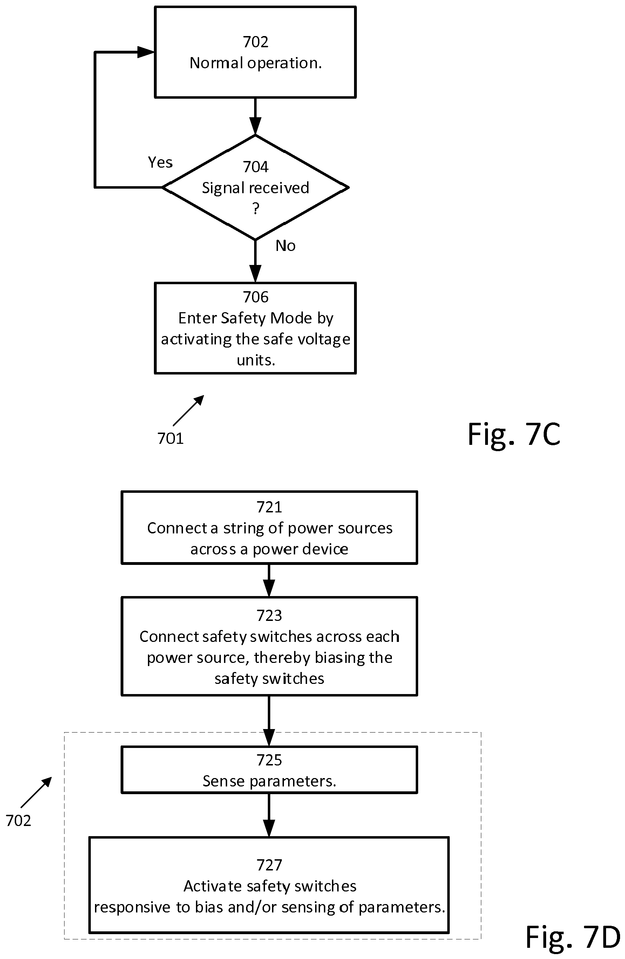

Reference is now made to Figs. 7C and 7D, which show respective flow charts of methods **701** and **702** applied in a power system **100d,** according to one or more illustrative embodiments. Method **702** shows further details of step **702** of method **701** in greater detail. Power sources **101** are assumed, for illustrative purposes, to be photovoltaic panels, but may be any suitable type of power source.

In power system **100d,** power modules **103a** might not include a power circuit **135** disposed between terminals **C+, D-** and terminals **A', B'.** Safe voltage units **715** effectively connect across power sources **101** and terminals **C+, D-** may respectively be connected to terminals **A', B'.** The string of serially connected power sources **101** may connect across system power device **139** (step **721**), and each safe voltage unit **715** connects across each respective power source **101** at terminals **A'** and **B'** (step **723**). Steps **721** and **723** may be carried out during installation and/or commissioning of a PV power system, prior to first operating the power system in the normal mode.

In the normal operation of power system **100d,** in step **702**, a control function may be provided by a controller of system power device **139** or a controller included in safety voltage unit **715** for example. The controller may establish and control the string voltages or string currents $Istring_{1-n}$ from each of the connection configurations **104c/104d** connected to system power device **139** at terminals +/-. The control function may therefore establish and/or maintain an overall string voltage **Vstring** an algebraic sum of string currents $Istring_{1-n}$ to terminals +/- of system power device **139**. As such, the other features of power modules **103a** connected to system power device **139** (e.g., communication interfaces, controllers and/or other features described with respect to Fig. 1B) may provide enablement of the control function. The other features of power modules **103a** may allow the sensing of voltages and currents within each of the connection configurations **104c/104d.** The other features may allow communication of data of the sensing to be sent to system power device **139**. The control function may therefore enable method **701** to be applied to safe voltage units **715** utilized in power system **100d.**

During the normal operation of power system **100d,** at step **725**, parameters of power system **100d** may be sensed by sensors of system power device **139,** sensors **125,** and/or sensor(s)/sensor interface(s) **203/305.** The parameters sensed may include the voltage output by the power sources **101,** the polarities of the voltages output by power sources **101** relative to each other, the current level and the direction of string currents $Istring_{1-n}$ in connection configurations **104c/104d,** the voltage level of connection configurations **104c/104d** and/or the presence or the absence of a grid or load **107** connected to the output of system power device **139.** The control function, in response to the parameters sensed in step **725,** may establish and verify the normal operation of power system **100d** in step **702**. The normal operation of power system **100d** in step **702** may be verified by sending signal **70** out from system power device **139.** Safe voltage units **715** connected across each one of power sources **101** in step **723** may be OFF (step **727**) in the normal mode of operation (step **702**) of operation of power system **100d.**

In the case where a power source **101** comprises a PV panel that is shaded, a safe voltage unit **715** associated with that shaded PV panel may be switched from OFF to ON in a normal mode of operation of the power system, due to detection of a reverse polarity of the shaded power source **101.** The detection in the normal mode of the reverse polarity may provide an indication of a shaded PV panel or a discharged battery (in a case where the power source **101** is a battery). Reverse polarity of an underperforming power source **101** compared to other performing power sources **101** in a series string may be a cause of impeding current flow in the series string. The cause of impeding current flow in the series string may be removed by switching a respective safe voltage unit **715** of the underperforming power source **101** from OFF to ON. Therefore, due to dynamic changes of shade and state of charge of batteries over a period of time of operating the power system, responsive to the detection in the normal mode of operation, a number of safe voltage units **715** may be OFF or ON in a series string.

The configuration of the control function may include calculation and selection of component values, types of components and the interconnections of components as part of an analog circuit design of safe voltage unit **715**. The analog circuit design may further include features to enable interfacing to the controller. In the absence of the controller or lack of operating power for the controller, operation of safe voltage units **715** may be independent of the control function and the parameters sensed in step **725**. The configuration may be based on normal operating parameters (e.g., system parameters that are present when power sources **101** and/or power modules **103a** are functioning correctly) or to accommodate non-normal operating parameters of power system **100d** described above and in power systems described below. The configuration may thereby be responsive to an event such as the breakdown or failure of a power module **103a** and/or power source **101** so as to provide a bypass of the power module **103a** and/or power source **101**.

In this regard, the configuration with respect to safe voltage unit **715** with lack of control by the controller may be considered to be substantially activated and/or operated for most of the time. Therefore, the steps of method **701** are performed responsive to the continuously changing operating parameters of power system **100d**. Power for the operation of safe voltage unit **715** may be provided from the string of serial connected power sources **101**. Power for the operation may also come from a partial power from module **103a** and/or power source **101,** which may use power **P2** for example. Power for operation may also be supplied from an auxiliary power source. Safe voltage unit **715** and the other analog bypass circuit embodiments described above when considered as being substantially activated might not require sensors **125**, controller **105,** and an associated algorithm to activate safe voltage unit **715** (ON) or to de-activate safe voltage unit **715** (OFF) in method **701**.

Therefore, a way to enable a de-activation of safe voltage circuit **115** and the other analog bypass circuit embodiments described below from being substantially activated most of the time is for a controller to use driver circuitry **170** to apply voltages to gates **g1** and **g2** of switches **S76, S75** so that safe voltage unit **715** is OFF and/or de-activated thereby. The configuration may also give the decision aspect of decision step **704** described below so as to be responsive to an event such as a power module **103a** and/or power source **101** reverting back to a normal operation, where the normal operation de-activates a bypass of a power module **103a** and/or power source **101**.

During normal operation of power system **100d** in step **702**, signal **70** is sent from system power device **139** and/or load **107** to power modules **103a** in each of the connection configurations **104c/104d.** Communication interfaces **129** of power modules **103a** may receive signal **70** sent from system power device **139** and /or load **107**. If in step **704**, signal **70** is received by power modules **103a,** normal operation of power system **100d** continues in step **702** where safe voltage units **715** are OFF or open circuit between terminals **A'** and **B'**.

When safe voltage units **715** are OFF, or deactivated, the string current **Istring₁** may be equal to the current (**Is**) from the poorest performing power source **101** and the voltage across each of terminals **A'** and **B'** is the voltage of a respective power source **101**. When safe voltage unit **715** is ON, or activated in a bypass mode (e.g., in response to an underperforming power source **101**), the voltage from a power source **101** in the bypass mode may be substantially zero because the safe voltage unit **715** may substantially short-circuit the power source. As such, string current **Istring₁** (from other functioning serially connected power source **101** outputs for example) flows from terminals **B'** to **A'** and the voltage drop across terminals **A'** and **B'** is the voltage between drain (**d**) and source (**s**) of safe voltage unit **715** (ON), where the combined drain source voltages **Vds** may be 10mV each for example. A feature of the bypass mode as explained above is that if a power source **101** was to become unshaded, or power source **101** begins to function again, safe voltage unit **715** may be de-activated from ON to OFF. Activation or de-activation of safe voltage unit **715** in the bypass mode may be independent of any sensing of parameters in power system **100d** in step **725**.

If in step **704**, signal **70** is not received by power modules **103a,** a safety mode of operation of power system **100d** may be started in step **706** by activation of some and/or all of the safe voltage units **715**. Signal **70** not received by power modules **103a** may be indicative of a disconnection of at least one of the power lines that connect system power device **139** and /or load **107** to connection configurations **104c/104d.** Alternatively the disconnection may be in the power lines within a connection configuration **104c/104d** which may prevent a particular connection configuration **104c/104d** from receiving signal **70**, whilst another connection configuration **104c/104d** might not be disconnected from system power device **139** and /or load **107** and receives signal **70**. The disconnection may also be due to a shutdown of system power device **139** and /or load **107**. The disconnection may be due to an over current in configuration **104c/104d** blowing an inline fuse, circuit breaker or residual current device (RCD) in the power lines within a connection configuration **104c/104d** and/or between power device **139** and /or load **107** to connection configurations **104c/104d.** The overcurrent may cause an open circuit in connectors between power lines which may also be further cause of the disconnection.

Unsafe conditions that may prevent reception of signal **70** (due to signal **70** not being transmitted in response to an unsafe condition, or inhibition of the transmission of a signal **70** due to, for example, disconnected power lines) may further include, for example, a disconnection in power system **100d,** a grid outage, a leakage current, an inverter malfunction, etc. As such, safe voltage units **715** being ON, according to method **751,** may ensure safe voltage level (e.g., 0.1V, IV, 2V etc.) across power sources **101** and overall a safe voltage level of the string voltage **Vstring.** Maintaining a safe **Vstring** level may protect operatives such as installers and firemen for example. In other possible implementations, an unsafe condition may be detected in the power system due to the occurrence of a signal instead of the absence of a signal, whereby the signal detected may be a result of an over-voltage or over-current condition within the power system, for example.

The safety mode of operation in step **706** may be triggered in safe voltage unit **715** in various ways. According to one feature, a stop signal may be received by a communication device included in safe voltage unit **715,** the stop signal being transmitted by a system power device (e.g., system power device **139**). According to a feature, safe voltage unit **715** may constantly (e.g., continuously, or at regular intervals) receive a "Keep alive" signal (e.g., from system power device **139**) while the system is operating properly. The signal may be wired or wireless. Upon cessation of the "Keep alive signal" (e.g., having not received a "Keep alive" for a period of time, such as 10 seconds), the safe voltage unit **715** may trigger the safety mode of operation (step **706**) by turning switches **S76** and **S75** ON.

A criterion for activating at least one or more safe voltage units **715** may be based on a maximum acceptable safe voltage for **Vstring** that may be considered to be safe in case of a disconnection between system power device **139** and /or load **107** and connection configuration **104c/104d.** The disconnection may include a disconnection in the power lines within a connection configuration **104c/104d** and/or when a shutdown of system power device **139** and /or load **107** occurs. By way of non-limiting example, ten power modules **103a** with outputs wired in series may be included in a configuration **104c/104d.** Each power source **101** output may be 20 volts (V) and a safe voltage for **Vstring** is considered to be 60V when a disconnection from and/or shutdown of system power device **139** and/or load **107** occurs. At step **706**, seven of the safe voltage units **715** may be turned ON in order to ensure the safe voltage, since three of the ten safe voltage units **715** are OFF. Three of the ten safe voltage units **715** being OFF by virtue of Kirchoff Voltage Law gives **Vstring** = 20V + 20V +20V = 60V. Step **706** may be permanently applied to ensure the safe voltage until a reconnection of connection configuration **104c/104d** and/or startup of system power device **139** and /or load **107** occurs. The reconnection of connection configuration **104c/104d** and/or startup of system power device **139** and /or load **107** may reestablish the normal mode of operation in step **702**.

The control algorithm of a controller located in system power device **139** and/or at least one of the power modules **103a** is aware of what a maximum voltage for **Vstring.** The maximum voltage for **Vstring** may be based system requirements for a safe voltage. Where the output voltage or the combined output voltages in parts of string are considered not safe, the control algorithm may act to ensure a safe voltage level at each point in the series string. The safe voltage level may be achieved by activating all of the safe voltage units **715** ON. The control algorithm may deem it fit to activate some of the safe voltage units **715** ON to ensure the safe voltage for **Vstring** as shown in the numerical example above.

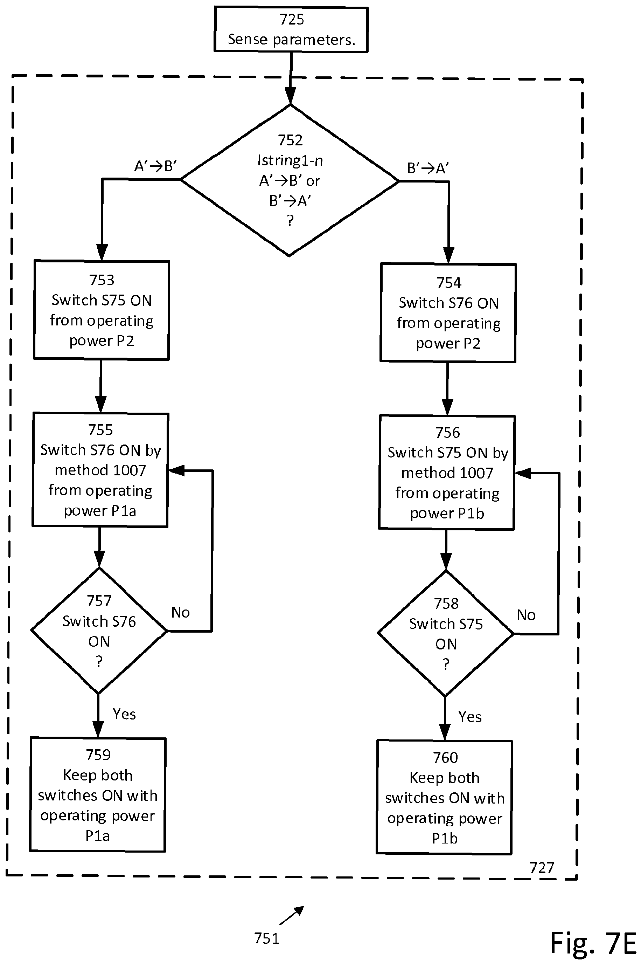

Reference is now made to Fig. 7E, which shows a method **751,** according to one or more illustrative embodiments. Method **751** may be applied by a controller of power system **100d** to safe voltage units **715** utilized in power system **100d.** As previously described, the controller may be part of system power device **139** or may be included in power modules **103a.** Activation of safe voltage units **715** may be by control of the controller responsive to sensing step **725** or the analog circuitry of safe voltage units **715** working independently of the controller. Safe voltage units **715** working independently may be according to descriptions above with respect to Fig. 1I and 1Q, which may be appropriate for very low levels of string current that exist at dusk or dawn, for example. Activation of safe voltage units **715** may also be a combination of control of the controller responsive to sensing step **725** and the analog circuitry of safe voltage units **715.**

Safe voltage units **715** may provide a bidirectional flow of string currents $\text{Istring}_{1\text{-}n}$ which may flow from terminal **B'** to terminal **A'** or from terminal **A'** to terminal **B'.** By way of non-limiting example, a control function of a control algorithm may be provided and applied by a controller of power device **139** where power modules **103a** do not include the use of a power circuit **135.** The control function may therefore establish and/or maintain string voltage **Vstring** or one or more of the string currents $\text{Istring}_{1\text{-}n}$, or the algebraic sum of string currents to terminals +/- of system power device **139.** Other features of power modules **103a** may provide enablement of the control function. Other features of power modules **103a** may allow the sensing of voltages and currents within each of the connection configurations **104c/104d** that may be included in step **725** and to communicate data of the sensing to system power device **139.** The control function may therefore allow method **751** to be applied to safe voltage units **715** utilized in power system **100d.**

In step **725,** with reference to Fig. 7A, parameters of power system **100d** may be sensed. The parameters sensed may include the voltage levels output by power sources **101,** the polarities of the voltages output by power sources **101** relative to each other, the current level and the direction of string currents $\text{Istring}_{1\text{-}n}$ in con-

nection configurations **104c/104d,** the voltage level of connection configurations **104c/104d** and/or the presence or the absence of a grid or load **107** connected to the output of system power device **139.** In general, operation of safe voltage unit **715** may provide substantially a short circuit or an open circuit of terminals **A'** and **B'.** The short circuit or the open circuit may be provided by method **751** applied to bypass circuits **718a** and **718b.** The short circuit may provide string currents $Istring_{1-n}$ flow in either direction in connection configurations **104c/104d.**

Safe voltage unit **715** may be utilized to provide a bypass mode for current flow of string current $Istring_1$ from terminals **B'** to **A'** when one or more of the safe voltage units **715** may be activated because of underperformance of panels because of shade **155** for example. The bypass mode may be provided in either the normal (step **702**) or safety (step **706**) modes of operation. Underperformance of panels may cause a reverse voltage bias of the panels (e.g., due to excessive current being forced through an underperforming panel). In some cases, the reverse voltage bias may be sensed at step **725** and may be used in criteria for the control algorithm of power system **100d** to decide to be in either the normal mode of operation (step **702**) or the safety mode of operation. As such, if a safe voltage unit **715,** is in the bypass mode, flow of string current $Istring_1$ from terminals **B'** to **A'** continues. Alternatively, (e.g., where power sources **101** are batteries with associated charging converter connected to safe voltage units **715** for example, and the batteries are being charged during a normal mode of operation (step **702**) of operation), flow of string current $Istring_1$ may be from terminals **A'** to **B'.** As such, some of the safe voltage units **715** may be activated and turned ON (e.g., because of a battery becoming substantially charged before other batteries), so a bypass mode included in the normal mode of operation (step **702**) of operation may be initiated for the charged battery with its associated charging converter OFF to isolate the battery such that string current $Istring_1$ from terminals + to - continues to charge the other batteries.

Some, most or all of the safe voltage units **715** may be activated ON in a safety mode to ensure a safe voltage level between and at each of the terminals **A'** and **B'** in connection configurations **104c** to reduce the level of the voltage between or at terminals + and - of connection configurations **104c** to a safe voltage level. A controller of system power device **139** may implement a control function to power system **100d** based on a control algorithm run by the controller. Criteria for the control algorithm of power system **100d** to enter into the safety mode from the normal mode of operation (step **702**) may include a substantially zero string current $Istring_1$ existing and/or signal **70** not being received by power modules **103a.** Safe voltage units **715** activated ON by the controller in the safety mode may cause a direction of string current $Istring_1$ to be from terminals **A'** to **B'.** When safe voltage unit **715** is OFF or de-activated, string current

$Istring_1$ may be substantially equal to the currents (**Is**) output by the power sources **101.**

At decision step **752,** responsive to sensing step **725,** the controller carrying out it may be decided that string currents $Istring_{1-n}$ have to flow from terminal **A'** to terminal **B'** or from terminal **B'** to terminal **A'.** A criterion for entering the safe mode form the normal mode of operation (step **702**) may include panels not being reversed biased, a substantially zero string current $Istring_1$ and/or signal **70** not being received by power modules **103a.** Activation of safety unit **715** to ON may be such that current from string current $Istring_1$ is flowing from terminal **A'** to terminal **B'** because switch **S75** is turned ON by operating power **P2** supplied by power source **101** at step **753.** Switch **S75** turned ON causes current to flow in the body diode of switch **S76** whilst switch **S76** may be OFF in step **755.** Switch **S76** may be turned ON in step **755** by implementation of method **1007** applied to switch **S76,** where some of the current to flow in the body diode of switch **S76** as power **P1a** may be utilized by circuitries of bypass circuits **115, 115a, 115b** and/or **115c** which may be included in bypass circuit **718a** to turn switches **S75** and **S76** ON. If, in decision step **757,** switch **S76** is not turned ON, step **755** may continue until switch **S76** is ON. If in decision step **757,** switch **S76** is turned ON. The power to drive switches **S76** and **S75** via gate drivers **Gd1** and **Gd2** applied to respective gates **g1** and **g2** may be provided by power **P1a** and/or power **P2.**

Similarly, in a normal mode of operation (step **702**) where power sources **101** are batteries being charged via converter circuit for example, decision step **752** may consider that batteries are not reverse-biased, a substantial string current $Istring_1$ does exist and/or signal **70** is being received by power modules **103a.** Activation of safety unit **715** to ON may be due to a battery connected to safety unit **715** becoming charged before other batteries. A bypass mode included in the normal mode of operation may therefore be initiated for the charged battery with an associated charging converter OFF. The associated charging converter OFF isolates the battery from the effect of safety unit **715** being ON. The charged battery is thereby bypassed, and according to steps **753-759,** string current $Istring_1$ from terminals **A'** to **B'** continues to charge the other batteries.

At decision step **752,** responsive to sensing step **725,** it may be decided by the controller carrying out method 751 (e.g., the controller of system power device **139**) that string currents $Istring_{1-n}$ should flow from terminal **B'** to terminal **A'.** String currents $Istring_{1-n}$ may flow from terminal **B'** to terminal **A'** because in a normal operation mode, some of the safe voltage units **715** may be activated ON because of shade **155** affecting PV panels. Shade of panels may cause a reverse bias of the panels. The reverse bias may be sensed (e.g., by detection of a negative voltage across a PV panel) in step **725** and may be used in criteria for a control algorithm of power system **100d.** Activation of safety unit **715** to ON is such that current from string current $Istring_1$ is from terminal **B'** to terminal **A'** because switch **S76** is turned ON by operating power **P2** supplied by power source **101** at step **754**. Switch **S76** turned ON causes current to flow in the body diode of switch **S75** whilst switch **S75** may be OFF in step **756**. Switch **S75** may be turned ON in step **756** by implementation of method **1007** applied to switch **S75**. With switch **S75** ON, power **P1b** may be provided as a result of some of the current to flow in the body diode of switch **S75** may be utilized by circuitries of bypass circuits **115, 115a, 115b** and/or **115c**. The circuitries may be included in bypass circuit **718b** to turn switches **S75** and **S76** ON. If in step **758**, switch **S75** is not turned ON, step **756** may continue until switch **S75** is ON. If in step **758**, switch **S75** is turned ON, the power to drive switches **S76** and **S75** via gate drivers **Gd1** and **Gd2** applied to respective gates **g1** and **g2** may be provided by power **P1b** and/or power **P2**.

In general, for the descriptions above and for those which follow below, power source **101** may function as a source of string currents $Istring_{1-n}$ that may flow from terminal **A'** to terminal **B',** and/or when power source **101** is functioning as a sink (for example when power source **101** is a battery, and the battery is being charged), string currents $Istring_{1-n}$ may flow from terminal **B'** to terminal **A'** of one or more safe voltage units. Bypass of terminals **A'** and **B'** may be achieved by a bi-directional switch which may include switches **S65** and **S66** according the descriptions above with respect to Figs. 6A-6D and with respect to use of switches **S76** and **S75**. The descriptions above with respect to Figs. 6A-6D may be similarly utilized in safe voltage unit **715** to provide a bi-directional switching function to provide both the safety mode and the bypass mode for both DC currents $Istring_{1-n}$ described above and AC string currents $Istring_{1-n}$ provided in the descriptions that follow below.

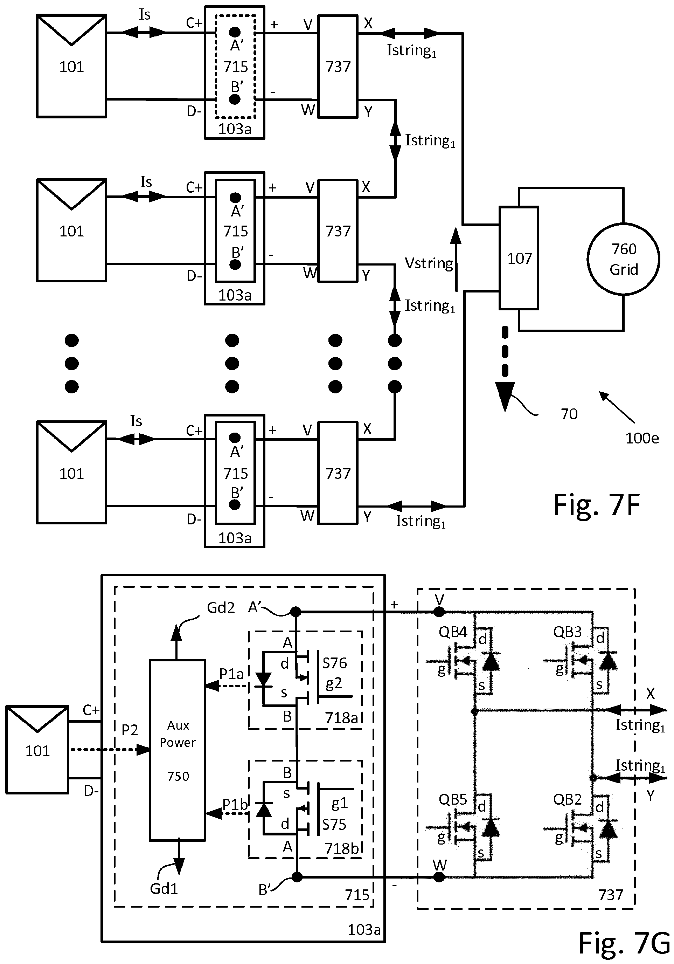

Reference is now made to Fig. 7F, which shows a block diagram of power system **100e,** according to one or more illustrative embodiments. Power system **100e** includes multiple power sources **101,** which by way of non-limiting example may be photovoltaic panels and/or storage devices such as batteries. If power module **103a** includes a power circuit **135** disposed between terminals **C+, D-** and terminals +, -, terminals **A'** and **B'** of safe voltage units **715** may connect across power sources **101** at terminals **C+, D-** or may connect across terminals **+, -** of power module **103a**. When power modules **103a** might not include a power circuits **135**, terminals **A', B'** of safe voltage units **715** may connect across power sources **101**. Terminals +, - connect respectively to one side of bridge circuits **737**. Bridge circuit **737** may be the same as bridge **306** shown in Fig. 3A. The other side of bridges **736** on terminals **X** and **Y** connect in a series string in which flows string current $Istring_1$. The series string may connect across load **107**. Load **107** may be the same as system power device **139** which may be connectable to a grid **760**.

Bridge circuits **737** may convert the DC from power sources **101** at terminals +, - to AC at terminals X and Y directly if there is no power circuit **135** included in power module **103a**. If there is a power circuit **135** included in power module **103a,** AC may be provided to load **107** and/or grid **760** from bridge circuits **737** via DC power from power circuits **135** at terminals +, -. Where power sources **101** are batteries in need of charge, bridge circuits **737** may convert the AC from grid **760** to DC to be provided to the batteries directly or via power circuits **135**. Therefore, if power sources **101** are batteries, currents **Is** may be discharged to load **107** grid **760** in one direction and may be charged from load **107**/ grid **760** to the batteries in the opposite direction. In sum, bridge circuits **737** may convert the DC from power sources **101** at terminals +, - to AC to load **107** and vice versa by converting AC from load **107**/ grid **760** to DC to power sources **101**. Therefore, string current $Istring_1$ in the above description is an alternating current (AC).

Reference is now made to Fig. 7G, which shows further circuit details of safety unit **715** and bridge circuit **737** that may be included in power system **100e** of Fig.7F, according to one or more illustrative embodiments. Safety unit **715,** power source **101** and the connection between power source **101** and power module **103a** are described as above with respect to Figs. 7A and Fig. 7B. With respect to bridge circuit **737**, terminals +, - connect respectively to the drains (**d**) of switches **QB4** and **QB3** at terminal **V** and the sources (**s**) of switches **QB5** and **QB2** at terminal **W**. Terminals **X** and **Y** of bridge circuit **737** connect respectively to where the source (**s**) of switch **QB4** connects to the drain (**d**) of switch **QB5** and where the source (**s**) of switch **QB3** connects to the drain (**d**) of switch **QB2**. In operation, bridge circuit **737** may have alternating drives applied to the gates (**g**) of switch pairs **QB4** and **QB2** and to the gates (**g**) of switch pairs **QB3** and **QB5**. The alternating drives applied may be pulse width modulation (PWM) so that bridge circuit **737** may convert DC from terminals **V** and **W** to AC on terminals **X** and **Y** and vice versa so that that bridge circuit **737** may convert DC from terminals **X** and **Y** to AC on terminals **V** and **W**.

Reference is now made again, by way of a non-limiting example, to Figs. 7F-7G and methods **701** and **751**. The non-limiting example assumes power sources **101** are photovoltaic panels supplying power to load **107** via power modules **103a,** which may include power circuits **135** disposed between terminals **C+, D-** and terminals +, -. Safe voltage units **715** may connect across +, - at terminals **A', B'**. The string of serially connected terminals **X** and **Y** of bridge circuits **737** connect across load **107**.

In normal operation of power system **100e** in step **702**, a control function may be provided by one or more controllers connected to power modules **103a**. A primary power module **103a** may establish communication and control to the other secondary power modules **103a,** safety units **715** and/or bridge circuits **737**. The primary power module **103a** may therefore control the string voltage **Vstring** and/or string current $Istring_1$ ap-

plied to load **107/** grid **760.** The features power modules **103a** connected to system power device **139** may provide an enablement of the control function. The other features of power modules **103a** to enable the control function may allow a sensing of voltages and currents of power sources **101** and the string current **Istring$_1$.** The sensing may be included in step **725** and the enablement may further include communication of data of the sensing to load **107/** system power device **139.** The control function may therefore allow methods **701/ 751** to be applied to safe voltage units **715** utilized in power system **100e.**

In the normal operation of power system **100e,** in step **725** parameters of power system **100e** may be sensed. The parameters sensed may include the voltage levels of the power sources **101,** the polarities of power sources **101** relative to each other, the current level and the directions of string current **Istring$_1$,** the voltage level of the string voltage **Vstring** or the presence or the absence of a grid **760** and/or load **107.**

The control function responsive to the parameters sensed in step **725** may therefore establish and verify the normal operation of power system **100e** in step **702** by receiving signal **70** from load **107** if similar to system power device **139.** Safety units **715** connected across terminals +, - in step **723** may provide an operating bias to safety units **715** to be ON or OFF in the normal mode of operation (step **702**) of power system **100e.** The operating bias may be responsive to the parameters sensed (step **725**) and controlled by the control function or be independent of the control function and the parameters sensed. As previously stated, the controller may be part of system power device **139** or may be included in power modules **103a.** Activation of safe voltage units **715** may be by control of the controller responsive to sensing step **725** or the analog circuitry of safe voltage units **715** working independently of the controller. Safe voltage units **715** working independently may be according to descriptions above with respect to Fig. 1I and 1Q, which may be appropriate for very low levels of string current that may exist at dusk or dawn, for example. Activation of safe voltage units **715** may also be a combination of control of the controller responsive to sensing step **725** and the analog circuitry of safe voltage units **715.**

During normal operation of power system **100e** in step **702,** signal **70** is sent from system power device **139** and /or load **107** to power modules **103a.** Signal **70,** by way of non-limiting example may be transmitted to power modules **103a** by power line communications. Communication interfaces **129** of power modules **103a** receive signal **70** sent from system power device **139** and /or load **107.** If in step **704,** signal **70** is received by power modules **103a,** a normal operation of power system **100e** continues in step **702.** In the normal operation, safe voltage units **715** may be OFF or open circuit between terminals **A'** and **B'** and bridge circuit **737** may convert DC from terminals **V** and **W** to AC on terminals **X** and **Y.**

When safe voltage units **715** are OFF or de-activated, the rms value of AC string current **Istring$_1$** may be similar to the current (**Is**) from the poorest performing power source **101** and the rms AC voltage across each of terminals **X** and **Y** similar to the voltage of a respective power source **101.** Included in the normal mode of operation (step **702**) responsive to sensing step **725** is a situation when the current (**Is**) from a power source **101** may be substantially zero. Current (**Is**) substantially zero may be because of shade **155** (if power sources **101** are photovoltaic panels for example) or the power source **101** is faulty. In either case in the normal mode of operation terminals **X** and **Y** may need to be bypassed. Shade **155** of panels may cause a reverse bias of the panels, which may be sensed in step **725** and reduced string current **Istring$_1$** which may be used in criteria for a control algorithm of power system **100e** to decide to be in the normal mode of operation (step **702**) and apply bypasses to terminals **X** and **Y.** With reference to Fig. 7G, in bypass of terminals **X** and **Y,** in a one-half cycle of AC current **Istring$_1$,** switches **QB4** and **QB5** are OFF, **QB3** and **QB3** are ON. Therefore, in the one-half cycle current through safe voltage unit **715** (ON) is from terminal **B'** to terminal **A'** by application of steps **754-760** of method **751** at decision **752.** On the other half cycle of AC current **Istring$_1$,** switches **QB4** and **QB5** are ON, **QB3** and **QB5** are OFF. Current through safe voltage unit **715** (ON) is from terminal **A'** to terminal **B'** by application of steps **753-759** at decision **752** of method **751.** Auxiliary power to power the bypass of terminals **X** and **Y** as such may be utilized from at least auxiliary power circuits **162/ 750.**

Similarly, in the normal mode of operation (step **702**) where power sources **101** are batteries being charged via charging converter circuits for example, sensing step **725** and decision step **752** may consider that batteries are not reversed biased, a substantial string current **Istring$_1$** does exist and/or signal **70** is being received by power modules **103a.** Activation of safety unit **715** to ON may be because of a battery becoming charged before the other batteries. The battery becoming charged before the other batteries may initiate a bypass mode that may be included in the normal mode of operation (step **702**). The bypass mode may be initiated for the charged battery with its associated charging converter (power module **103a**) OFF to isolate the battery from the effect of safety unit **715** being ON. Therefore, the charged battery is bypassed and according to steps of method **751** for both directions of string current **Istring$_1$** from terminals **A'** to **B'** and from terminals **B'** to **A'** allows continued charging of the other batteries.

If in step **704,** signal **70** is not received by power modules **103a,** a safety mode of operation (step **706**) of power system **100e** may be started in step **706** by activation of some and/or all of the safe voltage units **715.** Signal **70** not received by power modules **103a** may be indicative of a disconnection of at least one of the power lines that connect system power device **139** and /or load **107** to the series string connection of terminals **X** and **Y** of bridge circuits **737.** Alternatively, the disconnection may be in the power lines within the series string or between the series string and power device **139/** load **107.** The disconnection may be due to an over current blowing an inline fuse, circuit breaker or residual current device (RCD) in the power lines within the series string and/or between power device **139** and /or load **107** to the series string. The overcurrent may cause an open circuit in connectors between power lines which may also be further cause of the disconnection.

Unsafe conditions that may not allow signal **70** to be received may further include, for example, a disconnection in power system **100e,** a grid outage, a leakage current or an inverter malfunction, etc. Safe voltage units 715 being ON, according to method **751,** may ensure safe voltage level (e.g., 0.1V, IV, 2V etc.) across power sources **101,** terminals **A'/B'**, terminals **V** and **W** to give a safe voltage level of the string voltage **Vstring.** Maintaining a safe **Vstring** level as well as safe voltage levels across power sources **101,** terminals **A'/B'** and terminals **V** and **W** may protect operatives such as installers and fireman from electrocution for example.

The safety mode of operation in step **706** may be triggered in safe voltage unit **715** in various ways. According to one feature, a stop signal may be received by a communication device included in safe voltage unit **715,** the stop signal being transmitted by a system power device (e.g., **139)/** load **107.** According to a feature, safe voltage unit **715** may constantly (e.g., continuously, or at regular intervals) receive a "Keep alive" signal (e.g., from system power device **139/** load **107)** while the system is operating properly. The signal may be wired or wireless. Upon cessation of the "Keep alive signal" (e.g., having not received a "Keep alive" for a period of time, such as 10 seconds), the safe voltage unit **715** may triggered. The safety mode of operation (step **706**) may therefore be by activating safe voltage unit **715** ON.

A criterion for activating at least one or more safe voltage units **715** may be based on a maximum acceptable safe voltage for **Vstring** that may be considered to be safe in case of a disconnection, possible causes for the disconnection are described in more detail above. By way of non-limiting example, if ten bridge circuits **737** with connection terminals **X** and **Y** wired in series are connected across system power device **139** and /or load **107.** Each bridge circuit **737** output may be 20 volts (V) rms and a safe voltage for **Vstring** is considered to be 60V rms when a disconnection from and/or shutdown of system power device **139** and/or load **107** occurs. At step **706,** seven of the safe voltage units **715** may be turned ON in order to ensure the safe voltage, since three of the ten safe voltage units **715** are OFF. Three of the ten safe voltage units **715** being OFF by virtue of Kirchoff Voltage Law gives **Vstring** = 20V + 20V +20V = 60V rms. Step **706** may be permanently applied to ensure the safe voltage until a reconnection of power sources **101,** power modules **103a,** the series string connection of terminals **X** and **Y** of bridge circuits **737** and/or startup of system power device **139** and /or load **107** occurs. The reconnection as such may reestablish the normal mode of operation in step **702.**

The control algorithm of a controller located in load **107** and/or at least one of the power modules **103a** is aware of what a maximum voltage for **Vstring.** The maximum voltage for **Vstring** may be based on the number of power modules **103a.** Where the output voltage or the combined output voltages in parts of string are considered not safe, the control algorithm may ensure a safe voltage level at each point in the series string. The safe voltage level may be by activating all of the safe voltage units **715** ON. Whereas the control algorithm may deem it fit to activate some of the safe voltage units **715** ON to ensure the safe voltage for **Vstring** as shown in the numerical example above.

According to some aspects, ensuring power to the auxiliary power circuit may solve one or more problems and/or provide an advantage over auxiliary power provided only when connected to the inputs to the power device. For example, in a scenario where a power generator was disconnected from a power device, the auxiliary power circuit may provide an option of bypassing the disconnected portion of the string rather than disconnecting the entire string, or by creating an open circuit section in a string that has a danger of arcing. Another example of a possible advantage according to certain aspects may be providing auxiliary power at night when the PV power generator might not provide substantial power.

According to certain aspects, the power device may test the power generators to determine whether they are operating in a normal state or not, in which the testing may require auxiliary power. Providing auxiliary power may enable the ability to perform testing on one or more power generators and bypassing one or more power generators in the same string. It is noted that various connections are set forth between elements herein. These connections are described in general and, unless specified otherwise, may be direct or indirect; this specification is not intended to be limiting in this respect. Further, although elements herein are described in terms of either hardware or software, they may be implemented in either hardware and/or software. Additionally, elements of one embodiment may be combined with elements from other embodiments in appropriate combinations or sub combinations.

Although the subject matter has been described in language specific to structural features and/or methodological acts, it is to be understood that the subject matter defined in the appended claims is not necessarily limited to the specific features or acts described above. For example, in each of the embodiments described above, the absence or presence of a signal from a device of a power system may not necessarily be an indication of an unsafe condition, but instead may be an indication to cause the power system to enter into a safety mode of operation from a normal mode of operation. For example, the absence or presence of a signal may cause the power system to enter into a safety mode (as described above), whereupon, entry of the power system into the safety mode of operation causes safety switches to be ON to ensure a voltage level at each point in a series string of power sources of the power system to be at or below a predetermined voltage level, thereby reducing the level of the voltage of the series string to be at or below the predetermined voltage level. The entering into the safety mode of operation may be a result of, for example, a disconnection in the series string of power sources, a disconnection between the series string and a power device which the series string is connected across, an outage of a grid connected to the power device, a leakage current, a malfunction of the power device, a trip of a circuit breaker, a shutdown of the power device, or for any other reason a user would want or need to put the system in the safety mode. Rather, the specific features and acts described above are described as example implementations of the following claims.

Various characteristics of various embodiments of the invention as hereinafter highlighted in a set of numbered claims. These characteristics are not to be interpreted as being limiting on the invention or inventive concept, but are provided merely as a highlighting of some characteristics of the invention as described in the description without suggesting a particular order of importance or relevancy of such characteristics.

Clause 1: A power system including a plurality of power sources connected in a series string, wherein the series string is connected across a power device to provide a voltage of the series string to the power device, the power system comprising:

a plurality of safe voltage units each including a respective plurality of safety switches connectable across each one of the power sources and a plurality of sensors connectable to each one of the power sources,
wherein the sensors are configured to sense a plurality of parameters of the power sources,
wherein each of the safe voltage units are configured to monitor for a signal output from the power device,
wherein the power system is controllable such that at least one of: a) detection of the signal by the safe voltage units within a predetermined time period, and b) an operating criteria determined based on the parameters sensed, causes each of the safety switches to be OFF in a normal mode of operation of the power system;
wherein the power system is controllable such that, when at least one of the safe voltage units does not detect the signal within the predetermined time period, the power system is caused to enter into a safety mode of operation from the normal mode of operation,
wherein, the power system is controllable such that, upon entry of the power system into the safety mode of operation, the safety switches are caused to be ON to ensure a voltage level at each point in the series string to be at or below a predetermined voltage level, thereby reducing the level of the voltage of the series string to beat or below the predetermined voltage level.

Clause 2: The power system of clause 1, wherein in the normal mode of operation, power from the series string is applied to the power device, and wherein when the parameters sensed by the sensors are indicative of the normal mode of operation, the safe voltage units are controlled to be OFF.

Clause 3: The power system of clauses 1 or 2, wherein the power sources are selectable from the group of power sources comprising: batteries and photovoltaic panels.

Clause 4: The power system of clause 1, wherein the power sources comprise batteries, wherein power from the power device is applied to the series string to charge the batteries in the normal mode of operation, wherein at least one of the receiving of the signal and operating criteria applied to the parameters sensed enables each of the safety switches to be OFF or ON responsive to the normal mode of operation.

Clause 5: The power system of clause 1, wherein the power sources comprise batteries, power from the batteries is provided from the series string to the power device to thereby discharge the batteries in the normal mode of operation, wherein at least one of the receiving of the signal and operating criteria applied to the parameters sensed, enables each of the safety switches to be OFF or ON, in the normal mode of operation of the power system.

Clause 6: The power system of clause 1, wherein the power sources comprise photovoltaic panels, wherein power from the photovoltaic panels is provided from the series string to the power device in the normal mode of operation, wherein at least one of the receiving of the signal and operating criteria applied to the parameters sensed, enables each of the respective safety switches to be OFF when the photovoltaic panels are unshaded or ON when photovoltaic panels are shaded, in the normal mode of operation.

Clause 7: The power system of any preceding clause, wherein the voltage of the series string is less than an open circuit voltage of the power sources.

Clause 8: The power system of any preceding clause, wherein an operating power is provided to the safety switches to cause the safety switches to be ON or OFF in the normal mode of operation of the power system.

Clause 9: The power system of any preceding clause, wherein the operating criteria in the normal mode is selected from the group of criteria comprising: the voltage levels of the power sources, polarities of the power sources relative to each other, current level in the series string, the direction of the current in the series string or the voltage level of the series string.

Clause 10: The power system of any preceding clause, wherein the power system enters into the safety mode of operation from the normal mode of operation due to at least one of: a disconnection in the series string, a disconnection between the series string and the power device, an outage of a grid connected to the power device, a leakage current, a malfunction of the power device, a trip of a circuit breaker or a shutdown of power device.

Clause 11: The power system of any preceding clause, wherein the voltage of the series string is the sum of each of the voltages of the power sources.

Clause 12: The power system of any preceding clause, wherein operating power of the safe voltage units are supplied from at least one of the power sources and an auxiliary source of power independent of the power sources.

Clause 13: The power system of any preceding clause, further comprising a load connected to the power device, wherein the load is selected from the group of loads comprising: an AC grid, a DC grid, a transformer, a DC to AC inverter, a DC to DC converter, or an AC to DC rectifier. Clause 14. A method for a power system having a series string of a plurality of power sources connected across a power device, the method comprising:

connecting a plurality of safe voltage units including a plurality of safety switches connected respectively across each of the power sources, monitoring an operating power (biasing current or voltage) applied to the safety switches;
sensing a plurality of parameters of the power sources;
monitoring, by the safe voltage units, for a signal transmitted from the power device;
activating each of the safety switches to be OFF responsive to detecting the signal within a predetermined time period and at least one of the operating power and a sensing being associated with a normal mode of operation; and
upon not detecting the signal from the power device within the predetermined time period, or based on the operating power applied to the safety switches being associated with an abnormal mode of operation, entering a safe mode of operation of the power system by reducing the voltages of each of the power sources to a voltage level less than a predetermined voltage level by activating the safety switches to be ON.

Clause 15: The method of clause 14, wherein the activating comprises: turning at least one of the safety switches from OFF to ON responsive to the monitoring, wherein the monitoring monitors for a reverse polarity of a respective power source relative to the other polarities of the other power sources.

Clause 16: The method of clauses 14 or 15, wherein the reducing ensures a safe voltage level at each point in the series string of power sources.

Clause 17: The method of any of clauses 14-16, wherein a lowering of a voltage of the series string is achieved by activating at least one of the safety switches to be ON, thereby reducing the voltage of the string to a safe level of voltage in the safe mode of operation.

Clause 18: The method of any of clauses 14-17, wherein in the safe mode of operation, a voltage of the series string is less than an open circuit voltage of each of the power sources.

Clause 19: The method of any of clauses 14-18, wherein the operating power is selected from the group comprising: the voltage levels of the power sources and the polarities of the power sources relative to each other, the current level, and the direction of the current in the series string or the voltage level of the series string.

Clause 20: The method of any of clauses 14-19, wherein the sensing includes sensing at least one of a disconnection in the series string, and a disconnection between the series string and the power device.

Clause 21: The method of any of clauses 14-20, wherein operating power of the safe voltage units are supplied from at least one of the power sources and an auxiliary source of power independent of the power sources.

Clause 22: The method of any of clauses 14-21, wherein a voltage of the series string comprises the sum of each of the voltages of the power sources connected to each other in the series string.

Clause 23: A power system including a plurality of power sources, a plurality of power modules including a plurality of first ports connected respectively to the power sources and a plurality of second ports connected in a series string, wherein the series string is connected across a load] to provide a voltage of the series string to the load, the power system comprising:

a plurality of safe voltage units each including a plurality of safety switches connectable across at least one of each of the first ports and the second ports;
a plurality of sensors connectable across at least one of each of the first ports and the second ports,
wherein the sensors are configured to sense a plurality of parameters of the power sources,
wherein each of the safe voltage units is configured to receive a signal output from a power device,

wherein the power system is controllable such that at least one of: a) receiving the signal within a predetermined time period, and b) an operating criteria determined based on the parameters sensed, causes each of the safety switches to be OFF across at least one of each of the first ports and the second ports, in a normal mode of operation of the power system,

wherein the power system is controllable such that, when the signal is not received within the predetermined time period, or when the parameters sensed are indicative of an abnormal mode of operation, the power system enters into a safety mode of operation in which a power output by the power sources is restricted to less than a predetermined power level,

wherein the power system is controllable such that, when the signal is received within the predetermined time period, or when the parameters sensed are indicative of a normal mode of operation, a power output by the power sources is not restricted, and

wherein the power system is controllable such that, upon entering into the safety mode of operation, the safety switches are activated to be ON to ensure a safe voltage level of at least one of each point in the series string and the power of each of the power sources is restricted to less than the predetermined power level.

Clause 24: The power system of clause 23, wherein the power sources are selectable from the group of power sources comprising: batteries, and photovoltaic panels, and wherein the safety switches of each of the safe voltage units comprise two transistors connected in series between the at least one of each of the first ports and the second ports.

Clause 25: The power system of clauses 23 or 24, wherein the power modules are DC-DC converters that convert respective DC powers from the first ports to respective DC powers on the second ports.

Clause 26: The power system of clauses 23 or 24, wherein the power modules comprise DC-AC converters that convert respective DC powers from the first ports to respective AC powers on the second ports.

Clause 27: The power system of clauses 23 or 24, wherein the power modules comprise AC-DC converters that convert respective AC powers from the second ports to respective DC powers on the first ports, wherein the power sources are storage devices, and wherein the AC powers are supplied from an AC grid connected across the series string.

Clause 28: The power system of clauses 23 or 24, wherein the power modules comprise DC-DC converters that convert respective DC powers from the second ports to respective DC powers on the first ports, wherein the power sources are storage devices, and wherein the DC powers are supplied are selected from a group of DC powers comprising at least one of: rectified AC connected across the string, or DC from a DC grid connected across the series string.

Clause 29: The power system of any of clauses 23-28, wherein the load is selected from the group of loads comprising: an AC grid, a DC grid, a transformer, a DC to AC inverter, a DC to DC converter, or an AC to DC rectifier.

Clause 30: The power system of any of clauses 23-29, wherein the voltage of the series string is less than an open circuit voltage of the power sources.

Clause 31: The power system of any of clauses 23-30, wherein an operating power to the safety switches is provided by the connections across the first ports to be ON or OFF in the normal mode of operation of the power system, and wherein the safety switches of each of the safe voltage units comprise two transistors connected in series between the first ports.

Clause 32: The power system of any of clauses 23-30, wherein an operating power to the safety switches is provided by the connections across the second ports to be ON or OFF in the normal mode of operation of the power system, and wherein the safety switches of each of the safe voltage units comprise two transistors connected in series between the second ports.

Clause 33: The power system of any of clauses 23-32, wherein the operating criteria in the normal mode is selected from the group of criteria comprising: the voltage levels of the power sources and the polarities of the power sources relative to each other, the current level and the direction of the current in the string or the voltage level of the series string.

Clause 34: The power system of any of clauses 23-33, wherein the power system enters into the safety mode of operation due to at least one of: a disconnection in the series string, a disconnection between the series string and the power device, and a disconnection between the power modules and respective power sources.

Clause 35: The power system of any of clauses 23-34, wherein the voltage of the series string is the sum of each of the voltages on the second ports.

Clause 36: The power system of any of clauses 23-35, wherein operating power for the safe voltage units is supplied from at least one of the power sources, at least one of the second ports of the power modules and an auxiliary source of power independent of the power sources.

Clause 37: A method for a power system that includes a plurality of power modules having a plurality of first ports respectively connected to a plurality of power sources], a plurality of second ports respectively connected in a series string, wherein the series string is connected across a load to provide a voltage of the series string to the load, the method comprising:

connecting a plurality of safe voltage units across at least one of each of the first ports and the second ports, wherein each of the safe voltage units include a plurality of safety switches;

connecting a plurality of sensors across at least one of each of the first ports and the second ports;

sensing, by the sensors, a plurality of parameters of the power sources;

monitoring for a signal transmitted by the load;

causing the power system to be in a normal mode of operation in which each of the safety switches is controlled to be OFF across at least one of each of the first ports and the second ports, based on the signal being detected within a predetermined period of time, or when an operating criteria of the power system is determined to be a normal operating criteria based on the parameters sensed,

causing the power system to enter into a safety mode of operation when the signal is not detected within the predetermined period of time, or when the operating criteria of the power system is determined to be an abnormal operating criteria based on the parameters sensed,

wherein, in the safety mode of operation, at least one of the safety switches is activated to be ON to ensure a safe voltage level of each point in the series string in which each of the power sources operates at or below a predetermined voltage level.

Clause 38: The method of clause 37, wherein the monitoring is performed by at least one of each of the safe voltage units and the power modules, and wherein activation of the at least one of the safety switches to be ON causes at least one of the power sources connected in the series string and that is directed connected to the at least one of the safe voltage units that includes the at least one of the safety switches to be bypassed.

Clause 39: The method of clauses 37 or 38, wherein the signal is transmitted from a transmitter included in the load, wherein the load is selected from the group of loads comprising: an AC grid, a DC grid, a transformer, a DC to AC inverter, a DC to DC converter, or an AC to DC rectifier.

Clause 40: The method of any of clauses 37-39, wherein the power sources are selectable from the group of power sources comprising: batteries and photovoltaic panels.

Clause 41: The method of any of clauses 37-40, wherein the power modules comprise DC-DC converters that convert respective DC powers from the first ports to respective DC powers on the second ports.

Clause 42: The method of any of clauses 37-40, wherein the power modules comprise DC-AC converters that convert respective DC powers from the first ports to respective AC powers on the second ports.

Clause 43: The method of any of clauses 37-40, wherein the power modules comprise AC-DC converters that convert respective AC powers from the second ports to respective DC powers on the first ports, wherein the power sources are storage devices, and wherein the AC powers are supplied from an AC connected across the series string.

Clause 44: The method of any of clauses 37-40, wherein the power modules comprise DC-DC converters that convert respective DC powers from the second ports to respective DC powers on the first ports, wherein the power sources are storage devices, and wherein the DC powers are supplied are selected from a group of DC powers comprising at least one of rectified AC connected across the string or DC from a DC grid connected across the string.

Clause 45: The method of any of clauses 37-44, wherein the load is selected from the group of loads comprising: an AC grid, a DC grid, a transformer, a DC to AC inverter, a DC to DC converter, or an AC to DC rectifier.

Clause 46: The method of any of clauses 37-45, wherein the voltage of the series string is less than an open circuit voltage of the power sources

Clause 47: The method of any of clauses 37-46, further comprising providing an operating power to the safety switches by controlling the connections across the first ports to be ON or OFF in the normal mode of operation of the power system.

Clause 48: The method of any of clauses 37-46, further comprising providing an operating power to the safety switches by controlling the connections across the second ports to be ON or OFF in the normal mode of operation of the power system.

Clause 49: The method of any of clauses 37-48, wherein the criteria in the normal mode is selected from the group of criteria comprising: the voltage levels of the power sources and the polarities of the power sources relative to each other, the current level and the directions of the current in the string, or the voltage of the series string.

Clause 50: The method of any of clauses 37-49, wherein the safety mode of operation is due to at least one of a disconnection in the series string, a disconnection between the series string and the power device, and disconnection between the power modules and respective power sources.

Clause 51: The method of any of clauses 37-50, wherein the voltage of the series string is the sum of each of the voltages on the second ports.

Clause 52: The method of any of clauses 37-51, further comprising:

supplying the operating power to the safe voltage units from at least one of the power sources, at least one of the second ports of the power modules, and an auxiliary source of power independent of the power sources.

**Claims**

1. A power system including a plurality of power sources connected in a series string, wherein the series string is connected across a power device to provide a voltage of the series string to the power device, the power system comprising:

a plurality of safe voltage units each including a respective plurality of safety switches connectable across each one of the power sources and a plurality of sensors connectable to each one of the power sources,
wherein the sensors are configured to sense a plurality of parameters of the power sources,
wherein each of the safe voltage units are configured to monitor for a signal output from the power device,
wherein the power system is controllable such that at least one of: a) detection of the signal by the safe voltage units within a predetermined time period, and b) an operating criteria determined based on the parameters sensed, causes each of the safety switches to be OFF in a normal mode of operation of the power system;
wherein the power system is controllable such that, when at least one of the safe voltage units does not detect the signal within the predetermined time period, the power system enters into a safety mode of operation from the normal mode of operation,
wherein, the power system is controllable such that, upon entry of the power system into the safety mode of operation, the safety switches are caused to be ON to ensure a voltage level at each point in the series string to be at or below a predetermined voltage level, thereby reducing the level of the voltage of the series string to beat or below the predetermined voltage level.

2. The power system of claim 1, wherein the power sources comprise batteries, wherein power from the power device is applied to the series string to charge the batteries in the normal mode of operation, wherein at least one of the receiving of the signal and operating criteria applied to the parameters sensed enables each of the safety switches to be OFF or ON responsive to the normal mode of operation.

3. The power system of claim 1, wherein the power sources comprise batteries, power from the batteries is provided from the series string to the power device to thereby discharge the batteries in the normal mode of operation, wherein at least one of the receiving of the signal and operating criteria applied to the parameters sensed, enables each of the safety switches to be OFF or ON, in the normal mode of operation of the power system.

4. The power system of claim 1, wherein the power sources comprise photovoltaic panels, wherein power from the photovoltaic panels is provided from the series string to the power device in the normal mode of operation, wherein at least one of the receiving of the signal and operating criteria applied to the parameters sensed, enables each of the respective safety switches to be OFF when the photovoltaic panels are unshaded or ON when photovoltaic panels are shaded, in the normal mode of operation.

5. The power system of any preceding claim, wherein the voltage of the series string is less than an open circuit voltage of the power sources.

6. The power system of any preceding claim, wherein an operating power is provided to the safety switches to cause the safety switches to be ON or OFF in the normal mode of operation of the power system, and wherein operating power of the safe voltage units are supplied from at least one of the power sources and an auxiliary source of power independent of the power sources.

7. The power system of any preceding claim, wherein the operating criteria in the normal mode is selected from the group of criteria comprising: the voltage levels of the power sources, polarities of the power sources relative to each other, current level in the series string, the direction of the current in the series string or the voltage level of the series string.

8. The power system of any preceding claim, wherein the power system enters into the safety mode of operation from the normal mode of operation due to at least one of: a disconnection in the series string, a disconnection between the series string and the power device, an outage of a grid connected to the power device, a leakage current, a malfunction of the power device, a trip of a circuit breaker or a shutdown of power device.

9. The power system of any preceding claim, wherein the voltage of the series string is the sum of each of the voltages of the power sources.

10. The power system of any preceding claim, further comprising a load connected to the power device, wherein the load is selected from the group of loads comprising: an AC grid, a DC grid, a transformer, a DC to AC inverter, a DC to DC converter, or an AC to DC rectifier.

11. A method for a power system having a series string of a plurality of power sources connected across a power device, the method comprising:

connecting a plurality of safe voltage units including a plurality of safety switches connected respectively across each of the power sources, monitoring an operating power applied to the safety switches;

sensing a plurality of parameters of the power sources;

monitoring, by the safe voltage units, for a signal transmitted from the power device;

activating each of the safety switches to be OFF responsive to detecting the signal within a predetermined time period and at least one of the operating power and a sensing being associated with a normal mode of operation; and

upon not detecting the signal from the power device within the predetermined time period, or based on the operating power applied to the safety switches being associated with an abnormal mode of operation, entering a safe mode of operation of the power system by reducing the voltages of each of the power sources to a voltage level less than a predetermined voltage level by activating the safety switches to be ON.

12. The method of claim 11, wherein the activating comprises: turning at least one of the safety switches from OFF to ON responsive to the monitoring, wherein the monitoring monitors for a reverse polarity of a respective power source relative to the other polarities of the other power sources.

13. The method of claims 11 or 12, wherein the reducing ensures a safe voltage level at each point in the series string of power sources.

14. The method of any of claims 11-13, wherein a lowering of a voltage of the series string is achieved by activating at least one of the safety switches to be ON, thereby reducing the voltage of the string to a safe level of voltage in the safe mode of operation,

wherein in the safe mode of operation, a voltage of the series string is less than an open circuit voltage of each of the power sources, and wherein the operating power is selected from the group comprising: the voltage levels of the power sources and the polarities of the power sources relative to each other, the current level, and the direction of the current in the series string or the voltage level of the series string.

15. The method of any of claims 11-14, wherein the sensing includes sensing at least one of: a disconnection in the series string, and a disconnection between the series string and the power device.

Fig. 1A

Fig. 1B

Fig. 1C

135

Fig. 1D

135

Fig. 1E

Fig. 1F

Fig. 1G

Istring ↗ A

BP1

120
Coupling

PD1

B

Istring ↗

C11

115

111
Circuit

120a

---

1003
Bypass circuit connected across
power module output and inactive

1005
Power
module
inactive
?

No

Yes

1007
Activate bypass circuit

1009
Power
module
active
?

No

Yes

1011
De-activate bypass circuit

1000

Fig. 1H

Fig. 1I

Fig. 1J

Fig. 1K

Fig. 1L

4 volts/div

186  toff

ton

184

188

Curs1 Y Pos
-1.3V
Curs2 Y Pos
4.8V

Time 50 μseconds/div

182  Fig. 1M

I L1 70 milliAmps/div

ton  toff

180a

Curs1 Y Pos
-350μA
Curs2 Y Pos
77.0mA

Time 200 μseconds/div

180  Fig. 1N

Fig. 1O

115a

Fig. 1P

115b

Fig. 1Q

Fig. 1R

Fig. 1S

103T

$I_{string}$

101   200

120T

103T

110T

101   200

130T

101   200

$I_{string}$

Fig. 1T

100T

Fig. 2

Fig. 2A

Fig. 2B

Fig. 2C

Fig. 3

Fig. 3A

Fig. 3B

Fig. 3C

303c

Fig. 4

Fig. 4A

Provide power
supply to
operational
amplifier

Step 421

Yes

Input voltage
higher than reference
voltage?

Step 422

No

Step 423

Activate bypass

420

# Fig. 4B

Fig. 5

Fig.6A

Fig. 6B

Fig. 6C

Fig. 6D

Fig. 7A

Fig. 7B

702
Normal operation.

704
Signal received
?

Yes

No

706
Enter Safety Mode by
activating the safe voltage
units.

701

Fig. 7C

721
Connect a string of power sources
across a power device

723
Connect safety switches across each
power source, thereby biasing the
safety switches

725
Sense parameters.

702

727
Activate safety switches
responsive to bias and/or sensing of parameters.

Fig. 7D

Fig. 7E

Fig. 7F

Fig. 7G

**Europäisches Patentamt**
**European Patent Office**
**Office européen des brevets**

# EUROPEAN SEARCH REPORT

Application Number

EP 18 18 9734

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/222542 A1 (ADEST MEIR [IL] ET AL) 3 August 2017 (2017-08-03) * paragraph [0030] - paragraph [0057]; figures 2-6 * ----- | 1-15 | INV. H02J1/00 H01L27/142 H02H7/20 H02J3/38 |
| A | US 2011/084553 A1 (ADEST MEIR [IL] ET AL) 14 April 2011 (2011-04-14) * the whole document * ----- | 1-15 | H02S40/34 H02J7/00 |

TECHNICAL FIELDS
SEARCHED (IPC)

H02J
H01L
H02H
H02S

The present search report has been drawn up for all claims

| Place of search | Date of completion of the search | Examiner |
|---|---|---|
| Munich | 26 September 2018 | Telega, Pawel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 18 9734

This annex lists the patent family members relating to the patent documents cited in the above-mentioned European search report.
The members are as contained in the European Patent Office EDP file on
The European Patent Office is in no way liable for these particulars which are merely given for the purpose of information.

26-09-2018

| Patent document cited in search report | | | Publication date | Patent family member(s) | | | Publication date |
|---|---|---|---|---|---|---|---|
| US 2017222542 | A1 | | 03-08-2017 | NONE | | | |
| US 2011084553 | A1 | | 14-04-2011 | US | 2011084553 | A1 | 14-04-2011 |
| | | | | US | 2014152240 | A1 | 05-06-2014 |
| | | | | US | 2016241079 | A1 | 18-08-2016 |
| | | | | US | 2017317523 | A1 | 02-11-2017 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• EP 18164697 A